# EUROPEAN PATENT SPECIFICATION

(11) **EP 2 779 268 B1**
(45) Date of publication and mention of the grant of the patent: **22.08.2018**
(21) Application number: 12847887.2
(22) Date of filing: 07.11.2012
(51) Int. Cl.: H01M 2/02, B32B 15/088, B32B 15/20, B32B 7/12, B32B 15/085, B32B 27/08, B32B 27/16, B32B 27/20, B32B 27/34, B32B 27/36, B32B 1/00

(54) **OUTER-COVERING MATERIAL FOR ELECTRICITY-STORAGE DEVICE**
AUSSENABDECKUNGSMATERIAL FÜR EINE STROMSPEICHERVORRICHTUNG
MATIÈRE RECOUVRANTE EXTÉRIEURE POUR DISPOSITIF DE STOCKAGE D'ÉLECTRICITÉ

(30) Priority: 07.11.2011 JP 2011243576; 07.11.2011 JP 2011243577; 07.11.2011 JP 2011243578; 07.11.2011 JP 2011243580; 07.11.2011 JP 2011243581
(43) Date of publication of application: 17.09.2014
(73) Proprietor: Toppan Printing Co., Ltd., Tokyo 110-8560 (JP)
(72) Inventor: OONO Naoto, Tokyo 110-8560 (JP); NISHIJIMA Kazuki, Tokyo 110-8560 (JP); MURATA Koji, Tokyo 110-8560 (JP); OGIHARA Yu, Tokyo 110-8560 (JP)
(74) Representative: TBK
(86) International application number: PCT/JP2012/078889
(87) International publication number: WO 2013/069704

(56) References cited:
- EP-A1- 2 112 703
- WO-A1-2011/016506
- WO-A1-2011/016506
- JP-A- 2009 181 802
- JP-A- 2011 054 563
- JP-A- 2011 187 385
- JP-A- 2011 213 929
- JP-A- 2012 212 544

## Description

### TECHNICAL FIELD

The present invention relates to a packaging material for a power storage device.

### BACKGROUND ART

As a power storage device used in portable terminal devices such as cell phones and notebook computers, video cameras, satellites, electric vehicles, or the like, for example, lithium ion batteries which can be produced in ultrathin or minimized forms have been known. In such a power storage device, contents such as positive electrodes, negative electrodes, separators, and electrolytic solutions are stored in a package, in which a packaging material for a power storage device (hereinafter sometimes simply referred to as an "packaging material") is molded into a predetermined shape. As the package, packages in a metal can type, in which metal plates are press-molded, have been used in the related art, but packages of a laminate film type, in which a laminate film having a metal foil such as an aluminum foil (for example, configurations such as base material layer/first adhesive layer/aluminum foil layer/second adhesive layer/sealant layer) is cold-molded, have been widely used in recent years, from the viewpoint that the degree of freedom of the shape is high and the weight can be easily reduced.

A power storage device using a laminate film as a packaging material is prepared by deep-drawing the laminate film by cold molding to form a concave portion, housing the contents of the device in the concave portion, and heat-sealing the peripheral edge portion. The power storage device has an increased amount of storage when the concave portion is deeper, and thus the energy density is increased. For this, a polyamide film having excellent moldability is suitably used in a base material layer for the purpose of forming a deeper concave portion (for example, Patent Documents 1, 2, and 5).

On the other hand, in cold molding, as a packaging material is drawn into the molded portion of a mold, it is stretched to some degree, to form a concave portion. Here, if the packaging material is not sufficiently drawn into the molded portion of the mold, the packaging material is excessively stretched and thus, a thin film of a metal foil layer is generated. As a result, there are problems of cracks or pinholes being generated in the metal foil layer. Particularly, as the molding depth which is obtained in cold molding increases, the probability of occurence of these problems increases.

In addition, when the concave portion is deeper, there is an increased risk of generation of defects such as partial removal of the metal foil layer from the base material layer, and pinholes under conditions of, for example, constant temperature and constant humidity after deep-drawing.

Packaging materials, in which black materials such as carbon black are included in a base material layer or a first adhesive layer, or a black material layer containing a black material is formed between the base material layer and the first adhesive layer, in order to inhibit an increase in the temperature of a battery during use, have also been known (Patent Document 3).

However, since it is not taken into consideration that the packaging material inhibits the generation of defects under conditions of, for example, constant temperature and constant humidity after deep-drawing of the packaging material, sufficient reliability is thus not obtained.

However, the polyamide film does not have sufficient electrolytic solution resistance. Therefore, for example, in a case where a plurality of power storage devices are laminated, if the electrolytic solution is released by the generation of a breakage in one of the power storage devices, there is a concern that the base material layer may dissolve due an electrolytic solution adhering to the packaging material of another power storage device, and the aluminum foil layer on the inner side may be corroded. Further, there are some cases where the scratch resistance is not sufficient, and during handling, the surface of the base material layer may become damaged, and thus, design properties, durability, and the like are lowered. Incidentally, when the concave portion is deeper, there is an increased risk of generation of defects such as partial stripping of the metal foil from the base material layer, and pinholes in the base material layer under conditions of, for example, constant temperature and constant humidity after deep-drawing.

In addition, for the packaging material, it is difficult to identify forged products formed by forging an appended label, print, or the like on the outer surface of a genuine product.

As a packaging material, in which the electrolytic solution resistance and the scratch resistance of a base material layer are improved, for example, a packaging material, in which a base material layer, a metal foil layer, and a thermally adhesive resin layer are laminated in order from the outer side thereof, and the base material layer includes a laminated film formed by the lamination of a biaxially stretched polyethylene terephthalate film and a biaxially stretched polyamide film from the outer side has also been known (Patent Document 4).

However, when the packaging material has a deeper concave portion, there are cases where defects such as stripping of the base material layer or stripping of the metal foil layer from the base material layer, and pinholes under conditions of, for example, constant temperature and constant humidity after deep-drawing are generated, and thus the reliability is insufficient. Further, if a label or print appended to the packaging material surface of the packaging material is forged, it is difficult to identify forged products.

On the other hand, a packaging material, in which a pigment or the like is contained in a base material layer or a first adhesive layer for the prevention of forgery has also been known (Patent Document 5). Since when the packaging material is colored with the pigment, identifiability is imparted to the packaging material itself, it is possible to identify the forged product from the genuine product even when a label, print, or the like is appended to the packaging material surface of even forged products.

However, for the packaging material, it is difficult to obtain excellent electrolytic solution resistance and scratch resistance and there are cases where there are defects such as stripping and pinholes being generated after deep-drawing of the packaging material under conditions of, for example, constant temperature and constant humidity packaging material, and thus, the reliability is insufficient.

Furthermore, in Patent Document 5, it is described that for the purpose of further improving the moldability of a packaging material, a matte varnish layer is formed on the outer surface of a base material layer. The matte varnish layer is formed from olefin-based synthetic resins such as a cellulose-based synthetic resin, a vinyl chloride-vinyl acetate-based synthetic resin, a modified polyolefin-based synthetic resin, a rubber-based synthetic resin, an acryl-based synthetic resin, and a urethane-based synthetic resin, alkyd-based synthetic resins, or matting agents such as a silica-based matting agent and a kaolin-based matting agent.

However, even when the matte varnish layer is formed, it is difficult to sufficiently inhibit the deterioration of the base material layer by the electrolytic solution. In addition, inhibition of defects after deep-drawing of the packaging material under conditions of, for example, constant temperature and constant humidity packaging materialis also insufficient.

In addition, in the case where a new layer is provided on the surface of the packaging material by coating or the like, there is an increased possibility of generation of defects such as color omission and fish eyes by increasing the number of steps by one step, and therefore, it is important that the defects be able to be detected as easily as possible.

In recent years, application of power storage devices to large-scale uses of electric vehicles has become widespread and thus, from the viewpoint of the performance of a battery for obtaining a large current, it is required to further increase the energy density.

Therefore, there is a demand for a packaging material which does not generate cracks or pinholes during the molding and is capable of forming a deeper concave portion.

In addition, since the temperature of the power storage device becomes higher during use as the energy density becomes higher, the packaging material is also required to have excellent heat dissipation properties.

WO 2011/016506 A1 and EP 2 112 703 A1 disclose further packaging materials.

### PRIOR ART DOCUMENTS

### PATENT DOCUMENTS

[Patent Document 1] Japanese Unexamined Patent Application, First Publication No. 2000-334891
[Patent Document 2] Japanese Unexamined Patent Application, First Publication No. 2001-93482
[Patent Document 3] Japanese Unexamined Patent Application, First Publication No. 2011-96552
[Patent Document 4] Japanese Patent No. 4559547
[Patent Document 5] Japanese Unexamined Patent Application, First Publication No. 2011-54563

### SUMMARY OF INVENTION

### PROBLEMS TO BE SOLVED BY THE INVENTION

It is a first object of the present invention to provide a packaging material for a power storage device, providing excellent moldability and having excellent heat dissipation properties.

It is a second object of the present invention to provide a packaging material for a power storage device, having high reliability, in which defects such as delamination between layers under conditions of, for example, under constant temperature and constant humidity after deep-drawing or under a high temperature atmosphere hardly occur.

It is a third object of the present invention to provide a packaging material for a power storage device, having excellent electrolytic solution resistance and scratch resistance; high reliability, in which defects such as stripping and pinholes under conditions of, for example, under constant temperature and constant humidity after deep-drawing or under a high temperature atmosphere hardly occur; and having a high ability to prevent forgery.

It is a fourth object of the present invention to provide a packaging material for a power storage device, having high reliability, with which defects such as partial stripping under conditions of, for example, under constant temperature and constant humidity after deep-drawing or under a high temperature atmosphere hardly occur; and excellent electrolytic solution resistance.

It is a fifth object of the present invention to provide a packaging material for a power storage device, having excellent electrolytic solution resistance; and being capable of detecting defects easily (providing excellent defect detectability).

### MEANS FOR SOLVING THE PROBLEMS

The present invention relates to a packaging material for a power storage device according to claim 1. Further beneficial developments are set forth in the dependent claims. Further aspects helpful for understanding the invention are disclosed in the description.

### BRIEF DESCRIPTION OF THE DRAWINGS

FIG. 1 is a cross-sectional view showing one example of a packaging material for a power storage device.
FIG. 2 is a cross-sectional view showing one example of a packaging material for a power storage device.
FIG. 3 is a cross-sectional view showing one example of a packaging material for a power storage device.
FIG. 4 is a cross-sectional view showing one example of the packaging material for a power storage device of the present invention.
FIG. 5 is a cross-sectional view showing one example of the packaging material for a power storage device of the present invention.

### EMBODIMENTS FOR CARRYING OUT THE INVENTION

In the present specification, (meth)acrylic acid means acrylic acid or methacrylic acid, and this shall apply to other compounds.

Hereinafter, one example of the packaging material for a power storage device in a first embodiment (reference embodiment useful for understanding the invention) will be described in detail.

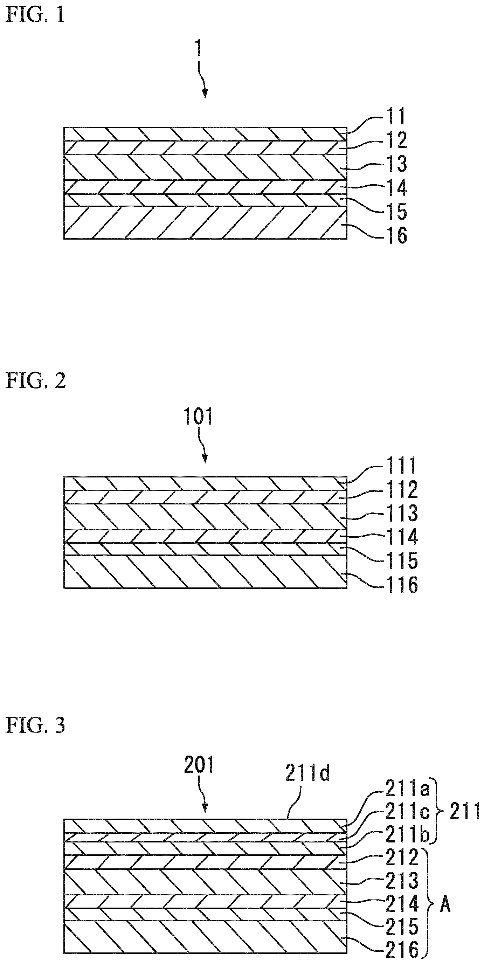

The packaging material 1 for a power storage device in the first embodiment (hereinafter sometimes simply referred to as an "packaging material 1") is a laminate, in which a first adhesive layer 12, a metal foil layer 13, a corrosion prevention treatment layer 14, a second adhesive layer 15, and a sealant layer 16 are sequentially laminated on the first surface of a base material layer 11, as shown in FIG. 1. The packaging material 1 is used such that the base material layer 11 becomes an outermost layer and the sealant layer 16 becomes an innermost layer when the packaging material 1 is used as a packaging material for a power storage device.

### (Base Material Layer 11)

The base material layer 11 serves to impart heat resistance in the sealing step during the preparation of a power storage device to inhibit the generation of pinholes that may occur during molding processing or distribution. Further, it serves to impart insulating properties from other metals in the metal foil layer 13 and a secondary battery, and heat resistance in the heat sealing of the packaging material during the preparation of a battery.

The base material layer 11 is formed by a polyamide film.

The polyamide film that forms the base material layer 11 may be a stretched film or an unstretched film. Further, the polyamide film may be a monolayer film or a laminated film.

Examples of the polyamide resin that forms the polyamide film include nylon 6, nylon 11, nylon 12, nylon 66, nylon 610, and nylon 612.

Furthermore, at least one selected from the group consisting of a pigment and a filler is contained in the base material layer 11 in order to improve the sliding property of the surface of the base material layer and the heat dissipation property of the packaging material. Among these, a filler is preferable since the sliding property of the surface of the base material layer, and the heat dissipation property of the packaging material was improved.

The pigment may be an organic pigment or an inorganic pigment, or a mixture thereof. The filler may be an organic filler or an inorganic filler, or a mixture thereof.

The kind of the pigment is not particularly limited as long as it does not interfere with the function of the base material layer 11.

Examples of the organic pigment include an azo-based pigment, a phthalocyanine-based pigment, a quinacridone-based pigment, an anthraquinone-based pigment, a dioxazine-based pigment, an indigothioindigo-based pigment, a perinone/perylene-based pigment, and an isoindolenine-based pigment, and examples of the inorganic pigment include a carbon black-based pigment, a titanium oxide-based pigment, a cadmium-based pigment, a lead-based pigment, and a chromium oxide-based pigment, as well as fine powder of mica and fish scale foil.

Specific examples of the organic pigment include the following pigments.

Yellow: isoindolinone, isoindoline, quinophthalone, anthraquinone (furabatoron), azomethine, xanthene, and the like.

Orange: diketopyrrolopyrrole, perylene, anthraquinone, perinone, quinacridone, and the like.

Red: anthraquinone, quinacridone, diketopyrrolopyrrole, perylene, indigoid, and the like.

Purple: oxazine (dioxazine), quinacridone, perylene, indigoid, anthraquinone, xanthene, benzimidazolone, violanthrone, and the like.

Blue: phthalocyanine, anthraquinone, indigoid, and the like.

Green: phthalocyanine, perylene, azomethine, and the like.

Specific examples of the inorganic pigment include the following pigments.

White: zinc white, white lead, lithopone, titanium dioxide, precipitated barium sulfate, barite powder, and the like.

Red: red lead, iron oxide red, and the like.

Yellow: chrome yellow, zinc yellow (zinc yellow I and zinc yellow II), and the like.

Blue: ultramarine blue, Prussian blue (potassium ferric ferrocyanide), and the like.

Black: carbon black and the like.

Examples of the filler include polyethylene, polypropylene, filler resins such as a phenolic resin and an acrylic resin, silica, and graphite. Examples of the shape of the filler include a flake shape, a spherical shape, a hollow shape, a fiber shape, and an amorphous shape.

As the filler, the inorganic fillers are preferable since the sliding property of the surface of the base material layer, and the heat dissipation property of the packaging material are improved.

The pigments and fillers included in the base material layer 11 may be one kind or two or more kinds thereof.

The total amount of the pigment and the filler in the base material layer 11 (100% by mass) is 1% by mass or more, and preferably 5% by mass or more, since the sliding property of the surface of the base material layer 11 and the heat dissipation property of the packaging material 1 is excellent. Further, the total amount of the pigment and the filler is 80% by mass or less, preferably 50% by mass or less, and more preferably 20% by mass or less, since excellent adhesiveness is obtained.

The amount of the pigment in the base material layer 11 (100% by mass) is 50% by mass or less, and preferably 20% by mass or less, since the base material layer 11 and the first adhesive layer 12 are adhered with excellent adhesiveness. The amount of the pigment is preferably 1% by mass or more, and more preferably 5% by mass or more, since the sliding property of the surface of the base material layer 11 and the heat dissipation property of the packaging material 1 are improved.

The amount of the filler in the base material layer 11 (100% by mass) is preferably 50% by mass or less, and more preferably 20% by mass or less since the adhesiveness between the base material layer 11 and the first adhesive layer 12 is improved. The amount of the filler is preferably 1% by mass or more, and more preferably 5% by mass or more since the sliding property of the surface of the base material layer 11 and the heat dissipation property of the packaging material 1 are improved.

The thickness of the base material layer 11 is preferably 6 to 40 µm, and more preferably 10 to 30 µm. In the case where the thickness of the base material layer 11 is a lower limit (6 µm) or more, the pinhole resistance and the insulating properties are improved. In the case where the thickness of the base material layer 11 is an upper limit (40 µm) or less, the moldability is improved.

### (First Adhesive Layer 12)

The first adhesive layer 12 is formed between the base material layer 11 and the metal foil layer 13. The first adhesive layer 12 has adhesive force required to adhere the base material layer 11 firmly to the metal foil layer 13, and further, the conformability to protect the metal foil layer 13 from being broken by the base material layer 11 during the cold molding (performance to reliably form a first adhesive layer 12 on a member without being stripped even when the member is modification-stretched) and the like are also required.

Examples of the adhesive component that forms the first adhesive layer 12 include two-liquid curable polyurethane-based adhesives, in which a polyol such as a polyester polyol, a polyether polyol, and an acrylic polyol is used as a primary agent and an aromatic or aliphatic isocyanate is used as a curing agent.

Examples of the polyester polyol include polyester polyols obtained by reacting at least one kind of dibasic acid with at least one kind of diol.

Examples of the dibasic acid include aliphatic dibasic acids such as succinic acid, glutaric acid, adipic acid, pimelic acid, suberic acid, azelaic acid, sebacic acid, and brassylic acid; and aromatic dibasic acids such as isophthalic acid, terephthalic acid, and naphthalene dicarboxylic acid.

Examples of the diol include aliphatic diols such as ethylene glycol, propylene glycol, butane diol, neopentyl glycol, methylpentane diol, hexane diol, heptane diol, octane diol, nonane diol, decane diol, and dodecane diol; alicyclic diols such as cyclohexane diol and hydrogenated xylylene glycol; and aromatic diols such as xylylene glycol.

Furthermore, as a polyester polyol, polyester urethane polyols, in which hydroxyl groups at both ends of the polyester polyol have undergone a reaction with at least one kind of bifunctional or higher isocyanate compound for chain elongation, may also be used.

Examples of the bifunctional or higher isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, polyester urethane polyols, in which adduct forms, biuret forms, or isocyanurate forms of these isocyanate compounds are used for chain elongation, may also be used.

Examples of the polyether polyol include polyethylene glycol, polypropylene glycol, and the like, and polyether urethane polyol formed by allowing the isocyanate compound to undergo a reaction therewith for chain elongation.

Examples of the acrylic polyol include copolymers having a repeating unit derived from a (meth)acrylic acid as a main component.

Examples of the component which is copolymerized with a (meth)acrylic acid include hydroxyl group-containing acryl monomers such as 2-hydroxyethyl (meth)acrylate and 2-hydroxypropyl (meth)acrylate; alkyl (meth)acrylate-based monomers (examples of the alkyl group include a methyl group, an ethyl group, an n-propyl group, an i-propyl group, an n-butyl group, an i-butyl group, a t-butyl group, a 2-ethylhexyl group, and a cyclohexyl group); amide group-containing monomers such as (meth)acrylamide, N-alkyl (meth)acrylamide, N,N-dialkyl (meth)acrylamide (examples of the alkyl group include a methyl group, an ethyl group, an n-propyl group, an i-propyl group, an n-butyl group, an i-butyl group, a t-butyl group, a 2-ethylhexyl group, and a cyclohexyl group), N-alkoxy (meth)acrylamide, N,N-dialkoxy (meth)acrylamide (examples of the alkoxy group include a methoxy group, an ethoxy group, a butoxy group, and an isobutoxy group), N-methylol (meth)acrylamide, and N-phenyl (meth)acrylamide; glycidyl group-containing monomers such as glycidyl (meth)acrylate and allyl glycidyl ether; silane-containing monomers such as (meth)acryloxypropyl trimethoxysilane, (meth)acryloxypropyl triethoxysilane; and isocyanate group-containing monomers such as (meth)acryloxypropyl isocyanate.

The polyol used used to form the first adhesive layer 12 can be used according to the required functions or performance, and may be used alone or in combination of two or more kinds thereof.

By using the isocyanate-based compound in the primary agent as a curing agent, a polyurethane resin is formed. Examples of the isocyanate-based compound used as the curing agent include the same as the compounds exemplified as the chain elongation agent.

The molar ratio (NCO/OH) of the isocyanate groups in the curing agent to the hydroxyl groups in the primary agent in the first adhesive layer 12 is preferably 1 to 10, and more preferably 2 to 5.

The thickness of the first adhesive layer 12 is preferably 1 to 10 µm, and more preferably 2 to 6 µm, from the viewpoint of desired adhesion strength, the processibility, or the like, or in order to ensure forming the first adhesive layer 12 on the member without being stripped even when the member provided with the first adhesive layer 12 is modification-stretched (in order to obtain conformability).

### (Metal Foil Layer 13)

As the metal foil layer 13, various metal foils such as an aluminum foil and a stainless steel foil can be used, and in view of a moisture-proof property, processibility such as ductility, and cost, an aluminum foil is preferable.

As the aluminum foil, for example, known soft aluminum foils may be used, and in order to obtain desired pinhole resistance and ductility during the molding, an iron-containing aluminum foil is preferable. The amount of iron in the aluminum foil (100% by mass) is preferably 0.1% by mass to 9.0% by mass, and more preferably 0.5% by mass to 2.0% by mass. In the case where the amount of iron is a lower limit (0.1% by mass) or more, the pinhole resistance and the ductility are improved. If the amount of iron is an upper limit (9.0% by mass) or less, the flexibility is improved.

In addition, as the aluminum foil, a soft aluminum foil which has been subjected to an annealing treatment is more preferable in order to impart desired ductility in molding to the packaging material.

The thickness of the metal foil layer 13 is preferably 9 to 200 µm, and more preferably 15 to 150 µm, in order to obtain desired barrier properties, pinhole resistance, and processibility.

In particular, a preferred metal foil layer 13 is a soft aluminum foil having a thickness of 15 to 150 µm, which has been subjected to an annealing treatment. Specifically, Materials 8021 and 8079 in JIS standard are preferable.

The aluminum foil used in the metal foil layer 13 is preferably one which has been subjected to a degreasing treatment, in order to obtain desired electrolytic solution resistance. Further, an aluminum foil in which the surface has not been etched is preferable in order to simplify the preparation step.

The degreasing treatments are largely classified into a wet type degreasing treatment and a dry type degreasing treatment, and the dry type degreasing treatment is preferable in order to simplify the preparation step.

Examples of the dry type degreasing treatment include a method in which a degreasing treatment is carried out by extending the treatment time in a step of subjecting an aluminum foil to an annealing treatment. A sufficient electrolytic solution resistance can be obtained even by the degreasing treatment which is carried out at the same time as the annealing treatment which is carried out to soften the aluminum foil. Further, in addition to the degreasing treatment, a frame treatment, a corona treatment, and the like may be included. In addition, it is possible to adopt a degreasing treatment in which contaminants are oxidatively decomposed and removed by active oxygen which is generated by the irradiation with ultraviolet rays at a specific wavelength.

Examples of the wet type degreasing treatment include acid degreasing and alkali degreasing.

Examples of the acid used for the acid degreasing include inorganic acids such as sulfuric acid, nitric acid, hydrochloric acid, and hydrofluoric acid. These acids may be used alone or in combination of two or more kinds thereof. Examples of the alkali used for the alkali degreasing include sodium hydroxide having a high etching effect. Further, materials into which a weakly alkaline system or a surfactant is blended may be included.

The wet type degreasing treatment is carried out by a dipping method or a spraying method.

### (Corrosion Prevention Treatment Layer 14)

The corrosion prevention treatment layer 14 serves to adhere the metal foil layer 13 firmly to the second adhesive layer 15, and to protect the metal foil layer 13 from an electrolytic solution or hydrofluoric acid generated from the electrolytic solution.

The corrosion prevention treatment layer 14 is a layer which is formed on the metal foil layer 13, for example, by subjecting the metal foil layer 13 to a hydrothermal modification treatment, an anodic oxidation treatment, a chemical conversion treatment, or a combination of these treatments.

Examples of the layer formed by the hydrothermal modification treatment include a layer formed by a boehmite treatment in which an aluminum foil is dip-treated in boiling water to which triethanolamine has been added. Examples of the layer formed by the anodic oxidation treatment include a layer formed by an alumite treatment. Examples of the layer formed by the chemical conversion treatment include a layer formed by a chromate treatment, a zirconium treatment, a titanium treatment, a vanadium treatment, a molybdenum treatment, a calcium phosphate treatment, a strontium hydroxide treatment, a cerium treatment, a ruthenium treatment, or a treatment with a combination thereof. Further, the layer formed by the chemical conversion treatment is not limited to the layers formed by the wet type treatments, and may also be a layer formed by a treatment applying a method which includes mixing the treatment agent with a resin component and coating the mixture.

The layer formed by a coating type chromate treatment among the corrosion prevention treatments is preferable from the viewpoint of the maximization of the effect and the disposal of a waste liquid.

Moreover, the corrosion prevention treatment layer 14 may also be a layer formed only by a pure coating technique, in addition to the layer formed by the above-described chemical conversion treatment. Specific examples of the layer include a layer formed by coating a treatment liquid including a sol of oxides of rare earth elements such as cerium oxide, having an average particle diameter of 100 nm or less, as a material which has a corrosion prevention effect (inhibitor effect) on aluminum and is suitable in an environmental aspect, and drying. Thus, it is possible to impart a corrosion prevention effect to a metal foil by a general coating method.

### (Second Adhesive Layer 15)

The second adhesive layer 15 is a layer that adheres the corrosion prevention treatment layer 14 to the sealant layer 16. The packaging material 1 is largely classified into one having a heat laminate configuration and one having a dry laminate configuration according to the kind of the second adhesive layer 15.

In the case of the dry laminate configuration, it is possible to use the same adhesive as the adhesives exemplified in the first adhesive layer 12 as a component that forms the second adhesive layer 15. In this case, in order to inhibit the swelling due to the electrolytic solution or hydrolysis by hydrofluoric acid, the adhesive used needs to be subjected to composition design, for example, of using a primary agent having a skeleton which is difficult to hydrolyze, or of enhancing the crosslinking density.

Examples of the technique for enhancing the crosslinking density include a method using a dimeric fatty acid, an ester or a hydrogenated product of a dimeric fatty acid, a reduced glycol of a dimeric fatty acid, or a reduced glycol of an ester or a hydrogenated product of a dimeric fatty acid. The dimeric fatty acid is an acid formed by dimerizing various unsaturated fatty acids, and examples of the structure thereof include non-cyclic, monocyclic, polycyclic, and aromatic cyclic structures. The polybasic acid, which is a raw material of the polyester polyol used as an adhesive that forms the second adhesive layer 15, is not particularly limited. Further, the fatty acid, which is a starting material of the dimeric fatty acid, is not particularly limited. In addition, a dibasic acid used in common polyester polyols may be incorporated, using such a dimeric fatty acid as an essential component.

It is possible to use an isocyanate compound, which can also be used as a chain elongation agent for the polyester polyol, as a curing agent for the primary agent. In this case, the crosslinking density of the adhesive coating film is enhanced and correspondingly, the dissolution or swelling properties are improved and the concentration of urethane groups is increased. Therefore, it is expected to improve adhesion.

In the case of the configuration of a heat laminate, as a component that forms the second adhesive layer 15, an acid-modified polyolefin-based resin formed by the graft-modification of a polyolefin-based resin with an acid is preferable. Examples of the polyolefin-based resin include low-density polyethylene, medium-density polyethylene, and high-density polyethylene; ethylene-α-olefin copolymers; homo, block, or random polypropylenes; and propylene-α-olefin copolymers. The polyolefin-based resins may be used alone or in combination of two or more kinds thereof. Examples of the graft-modification acid include a carboxylic acid, an epoxy compound, and an acid anhydride, and maleic anhydride is preferable.

As a component that constitutes the second adhesive layer 15, a maleic anhydride-modified polyolefin-based resin, in which a polyolefin-based resin is graft-modified with maleic anhydride, is preferable, and a maleic anhydride-modified polypropylene is particularly preferable, in order to facilitate maintaining the adhesive force between the sealant layer 16 and the metal foil layer 13 even when the electrolytic solution penetrates thereinto.

In the case where the second adhesive layer 15 is formed by extrusion molding, the adhesive resin is easily aligned in the MD direction (machine direction) with the stress generated during the extrusion molding. In this case, in order to reduce the anisotropy, an elastomer may be blended in the second adhesive layer 15.

Examples of the elastomer blended in the second adhesive layer 15 include olefin-based elastomers and styrene-based elastomers. The average particle diameter of the blended elastomer is preferably 200 nm or less in order to improve the compatibility between the elastomer and the adhesive resin and the effect of reducing the anisotropy of the second adhesive layer 15. Further, the average particle diameter is measured by photographing an enlarged cross-section of the elastomer composition by an electron microscope, and measuring the average particle diameter of the cross-linked rubber components dispersed by image analysis.

These elastomers may be used alone or in combination of two or more kinds thereof.

In the case where the elastomer is blended in the second adhesive layer 15, the blending amount of the elastomer in the second adhesive layer 15 (100% by mass) is preferably 1% by mass to 25% by mass, and more preferably 10% by mass to 20% by mass. In the case where the blending amount of the elastomer is a lower limit (1% by mass) or more, the compatibility between the adhesive resins is improved, and the effect of reducing the anisotropy of the second adhesive layer 15 is improved. In the case where the blending amount of the elastomer is an upper limit (25% by mass) or less, it is easy to inhibit the second adhesive layer 15 from being swollen by the electrolytic solution.

The second adhesive layer 15 may be formed by using a dispersion type of an adhesive resin solution, in which the adhesive resin is dispersed in an organic solvent.

The thickness of the second adhesive layer 15 is preferably 1 to 40 µm, and more preferably 5 to 20 µm.

### (Sealant Layer 16)

The sealant layer 16 is the inner layer of the packaging material 1, which is a layer thermally welded during the assembly to a battery. That is, the sealant layer 16 is a layer including a thermally weldable film.

Examples of the component of the film constituting the sealant layer 16 include a polyolefin-based resin, and an acid-modified polyolefin-based resin formed by the graft-modification of a polyolefin-based resin with maleic anhydride or the like. Among these, a polyolefin-based resin is preferable, and polypropylene is particularly preferable, in order to improve the water vapor barrier properties, and thus, easily form a battery form without excessive collapse by heat sealing. Examples of the polypropylene include the polypropylene exemplified in the second adhesive layer 15. The sealant layer 16 may be formed from a film having a mixture of various resins as described above. The sealant layer 16 may be a monolayer film or a multilayer film.

In the case of using a film formed by extrusion molding, since the sealant layer 16 tends to be aligned in the extrusion direction of the film, an elastomer may be blended in the sealant layer 16 in order to reduce the anisotropy by the alignment. By this, it becomes easy to inhibit the sealant layer 16 from being whitened when the packaging material 1 is subjected to cold molding to form a concave portion.

As the elastomer blended in the sealant layer 16, the same materials as the materials exemplified as the elastomer blended in the second adhesive layer 15 can be used, and the preferable materials are also the same.

In the case where the sealant layer 16 is a laminated film, the elastomer may be blended in a certain layer or all the layers out of the layers. For example, in the case where the sealant layer 16 has a trilayer configuration of random polypropylene/block polypropylene/random polypropylene, the elastomer may be blended in only the layer of block polypropylene, only the layers of random polypropylene, or both of the layers of random polypropylene and the layer of block polypropylene.

Moreover, a lubricant may be blended in the sealant layer 16 for the purpose of imparting a sliding property. By this, when the packaging material 1 is subjected to cold molding to form a concave portion, it becomes easy to prevent the portion which is a side or angle of the concave portion having a high stretching rate in the packaging material 1 from being stretched more than necessary. As a result, it becomes easy to inhibit the metal foil layer 13 from being delaminated from the second adhesive layer 15, or breakage or whitening due to cracks in the sealant layer 16 and the second adhesive layer 15.

In the case where the lubricant is blended in the sealant layer 16, the blending amount of the lubricant in the sealant layer 16 (100% by mass) is preferably from 0.001% by mass to 0.5% by mass. In the case where the blending amount of the lubricant is 0.001 % by mass or more, it is easy to obtain an effect of inhibiting the sealant layer 16 from being whitened during the cold molding. In the case where the blending amount of the lubricant is 0.5% by mass or less, the lubricant bleeds on the laminate surface (laminated surface) of the layers other than the surface of the packaging material 1 from the sealant layer, and it is thus easy to inhibit a reduction of the adhesion strength.

### (Preparation Method)

Hereinafter, the method of preparing the packaging material 1 will be described. However, the method of preparing the packaging material 1 is not limited to the methods described below.

Examples of the method of preparing the packaging material 1 include a method including the following steps (I) to (III).
(I) A step of forming the corrosion prevention treatment layer 14 on the metal foil layer 13.
(II) A step of bonding the base material layer 11, through the first adhesive layer 12, onto the surface opposite to the surface on which the corrosion prevention treatment layer 14 on the metal foil layer 13 is formed.
(III) A step of bonding the sealant layer 16, through the second adhesive layer 15, onto the side of the corrosion prevention treatment layer 14 on the metal foil layer 13.

### Step (I):

The corrosion prevention treatment layer 14 is formed, for example, by coating a corrosion prevention treatment agent, followed by drying, curing, and baking, on one surface of the metal foil layer 13. Examples of the corrosion prevention treatment agent include a corrosion prevention treatment agent for a coating type chromate treatment.

The method of coating the corrosion prevention treatment agent is not particularly limited, and examples thereof include gravure coating, gravure reverse coating, roll coating, reverse roll coating, die coating, bar coating, kiss coating, and comma coating.

In addition, an untreated metal foil may be used in the metal foil layer 13, and a metal foil which has been subjected to a wet type or dry type degreasing treatment may also be used.

### Step (II):

The base material layer 11 is laminated by bonding a polyamide film including at least one selected from the group consisting of a pigment and a filler, using an adhesive used to form the first adhesive layer 12, onto a surface opposite to the surface on which the corrosion prevention treatment layer 14 in the metal foil layer 13 is formed.

Examples of the method of bonding include techniques of dry lamination, non-solvent lamination, wet lamination, and the like.

In step (II), an aging treatment in the range from room temperature to 100°C may be carried out in order to promote the adhesiveness.

### Step (III):

The sealant layer 16 is bonded, through the second adhesive layer 15, on the side of the corrosion prevention treatment layer 14 in the laminate, in which the base material layer 11, the first adhesive layer 12, the metal foil layer 13, and the corrosion prevention treatment layer 14 are laminated in this order.

In the case of the dry laminate configuration, the sealant layer 16 is bonded on the side of the corrosion prevention treatment layer 14 in the laminate using the above-described adhesive, with a technique of dry lamination, non-solvent lamination, wet lamination, or the like.

In the case of the heat laminate configuration, for example, the following dry process and wet process may be included. In the case of the dry process, the adhesive resin is extrusion-laminated on the corrosion prevention treatment layer 14 of the laminate and a film that forms the sealant layer 16 obtained by an inflation method or a cast method is laminated. Thereafter, a heat treatment (aging treatment, heat lamination, or the like) may be carried out for the purpose of improving the adhesion between the corrosion prevention treatment layer 14 and the second adhesive layer 15. Further, a multilayer film, in which the second adhesive layer 15 and the sealant layer 16 are laminated by an inflation method or a cast method, may be fabricated, and by laminating the multilayer film on the laminate by heat lamination, the sealant layer 16 may be laminated via the second adhesive layer 15.

In the case of the wet process, a dispersion type of an adhesive resin solution of an adhesive resin such as an acid-modified polyolefin-based resin is coated on the corrosion prevention treatment layer 14 of the laminate, the solvent is volatilized at the melting point of the adhesive resin or higher, and the adhesive resin is melt-softened, and baked. Thereafter, the sealant layer 16 is laminated by a heat treatment such as heat lamination.

By the steps (I) to (III) as described above, the packaging material 1 is obtained.

Furthermore, the method of preparing the packaging material 1 is not limited to the methods in which the steps (I) to (III) are sequentially carried out. For example, step (I) may be carried out after carrying out step (II). Further, formation of the corrosion prevention treatment layer 14 and extrusion lamination of the sealant layer 16 may be carried out continuously in-line. In addition, a corrosion prevention treatment layer may be provided on both sides of the metal foil layer.

The packaging material in the first embodiment as described above contains a predetermined amount of at least one selected from the group consisting of a pigment and a filler in the base material layer, and thus, the surface of the base material layer has an excellent sliding property. As a result, excellent moldability is obtained and thus, even in the case of forming a deeper concave portion, generation of pinholes or cracks during the cold molding can be inhibited. In addition, since heat is dissipated with high efficiency from the base material layer by the pigment and the filler contained in the base material layer, a packaging material having an excellent heat dissipation property is obtained.

Furthermore, if a pigment or filler in a color different from the color of the metal foil layer 13 is selected, defects can be easily detected by identification using a difference in colors even when pinholes or cracks are generated.

However, the packaging material in the first embodiment is not limited to the packaging material 1. For example, a corrosion prevention treatment layer may also be formed on both sides of the metal foil layer. In the case where the corrosion prevention treatment layer is formed on the surface in contact with the base material layer in the metal foil layer, it becomes easier to inhibit the corrosion of the side of the base material layer in the metal foil layer by the electrolytic solution.

Hereinafter, one example of the packaging material for a power storage device in a second embodiment (reference embodiment useful for understanding the invention) is shown and described in detail.

The packaging material 101 for a power storage device in the second embodiment (hereinafter sometimes simply referred to as an "packaging material 101") is a laminate in which the first adhesive layer 112, the metal foil layer 113, the corrosion prevention treatment layer 114, the second adhesive layer 115, and the sealant layer 116 are sequentially laminated on the first surface of the base material layer 111, as shown in FIG. 2. The packaging material 101 is used such that the base material layer 111 becomes an outermost layer and the sealant layer 116 becomes an innermost layer when the packaging material 101 is used as a packaging material for a power storage device.

### (Base Material Layer 111)

The base material layer 111 serves to impart heat resistance in the sealing step during the preparation of a power storage device to inhibit the generation of pinholes that may occur during molding processing or distribution. In particular, in the case of packaging materials for lithium ion batteries in large scale uses, abrasion resistance, chemical resistance, insulating properties, or the like can also be imparted.

The base material layer 111 is preferably a resin film formed from a resin having insulating properties. Examples of the resin film include stretched or unstretched films such as a polyester film, a polyamide film, and a polypropylene film. The base material layer 111 may be a monolayer film of these resin films or a laminated film formed by using two or more kinds of these resin films.

Examples of the polyester resin that forms the polyester film include polyethylene terephthalate, and polyethylene naphthalate.

Examples of the polyamide resin that forms the polyamide film include nylon 6, nylon 11, nylon 12, nylon 66, nylon 610, and nylon 612.

As the base material layer 111, the polyamide film is preferable, among the materials as described above, from the viewpoint of excellent moldability.

The thickness of the base material layer 111 is preferably 6 to 40 µm, and more preferably 10 to 30 µm. In the case where the thickness of the base material layer 111 is a lower limit (6 µm) or more, pinhole resistance and insulating properties are improved. In the case where the thickness of the base material layer 111 is an upper limit (40 µm) or less, the moldability is improved.

### (First Adhesive Layer 112)

The first adhesive layer 112 is formed between the base material layer 111 and the metal foil layer 113. The first adhesive layer 112 has adhesive force required to adhere the base material layer 111 firmly to the metal foil layer 113, and further, the conformability to protect the metal foil layer 113 from being broken by the base material layer 111 during the cold molding, or the like is also required.

Examples of the adhesive component that forms the first adhesive layer 112 include two-liquid curable polyurethane-based adhesives, in which a polyol such as a polyester polyol, a polyether polyol, and an acrylic polyol is used as a primary agent and an aromatic or aliphatic isocyanate is used as a curing agent.

Examples of the polyester polyol include polyester polyols obtained by reacting at least one kind of dibasic acid with at least one kind of diol.

Examples of the dibasic acid include aliphatic dibasic acids such as succinic acid, glutaric acid, adipic acid, pimelic acid, suberic acid, azelaic acid, sebacic acid, and brassylic acid; and aromatic dibasic acids such as isophthalic acid, terephthalic acid, and naphthalene dicarboxylic acid.

Examples of the diol include aliphatic diols such as ethylene glycol, propylene glycol, butane diol, neopentyl glycol, methylpentane diol, hexane diol, heptane diol, octane diol, nonane diol, decane diol, and dodecane diol; alicyclic diols such as cyclohexane diol and hydrogenated xylylene glycol; and aromatic diols such as xylylene glycol.

Furthermore, polyester urethane polyols, in which hydroxyl groups at both ends of the polyester polyol have undergone a reaction with at least one kind of bifunctional or higher isocyanate compound for chain elongation, may also be used.

Examples of the bifunctional or higher isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, polyester urethane polyols, in which adduct forms, biuret forms, or isocyanurate forms of these isocyanate compounds are used for chain elongation, may also be used.

Examples of the polyether polyol include polyethylene glycol, polypropylene glycol, and the like, and polyether urethane polyol formed by allowing the isocyanate compound to undergo a reaction therewith for chain elongation.

Examples of the acrylic polyol include copolymers having a repeating unit derived from a (meth)acrylic acid as a main component.

Examples of the component which is copolymerized with a (meth)acrylic acid include hydroxyl group-containing acryl monomers such as 2-hydroxyethyl (meth)acrylate and 2-hydroxypropyl (meth)acrylate; alkyl (meth)acrylate-based monomers (examples of the alkyl group include a methyl group, an ethyl group, an n-propyl group, an i-propyl group, an n-butyl group, an i-butyl group, a t-butyl group, a 2-ethylhexyl group, and a cyclohexyl group); amide group-containing monomers such as (meth)acrylamide, N-alkyl (meth)acrylamide, N,N-dialkyl (meth)acrylamide (examples of the alkyl group include a methyl group, an ethyl group, an n-propyl group, an i-propyl group, an n-butyl group, an i-butyl group, a t-butyl group, a 2-ethylhexyl group, and a cyclohexyl group), N-alkoxy (meth)acrylamide, N,N-dialkoxy (meth)acrylamide (examples of the alkoxy group include a methoxy group, an ethoxy group, a butoxy group, and an isobutoxy group), N-methylol (meth)acrylamide, and N-phenyl (meth)acrylamide; glycidyl group-containing monomers such as glycidyl (meth)acrylate and allyl glycidyl ether; silane-containing monomers such as (meth)acryloxypropyl trimethoxysilane, (meth)acryloxypropyl triethoxysilane; and isocyanate group-containing monomers such as (meth)acryloxypropyl isocyanate.

The polyol can be used according to the required functions or performance, and may be used alone or in combination of two or more kinds thereof. By using the isocyanate-based compound in the primary agent as a curing agent, a polyurethane resin is formed. Examples of the isocyanate-based compound used as the curing agent include the same as the compounds exemplified as the chain elongation agent.

The molar ratio (NCO/OH) of the isocyanate groups in the curing agent to the hydroxyl groups in the primary agent is preferably 1 to 10, and more preferably 2 to 5.

Furthermore, in the case where the pigment as described later has a functional group which bonds to isocyanate groups, the hydroxyl groups in the primary agent and the functional group in the coloring component react competitively with the isocyanate groups in the curing agent, and therefore, it is preferable to use a larger amount of the isocyanate groups in the curing agent.

The first adhesive layer 112 contains at least one selected from the group consisting of a pigment and a filler in order to adjust the elastic modulus. The pigment may be an organic pigment or an inorganic pigment, or a mixture thereof. The filler may be an organic filler or an inorganic filler, or a mixture thereof.

It becomes possible to increase reliability such as the high temperature resistance or humidity resistance after the deep-drawing or stretching of the packaging material, and electrolytic solution resistance, by adjusting the elastic modulus of the first adhesive layer 112 by incorporating at least one selected from the group consisting of a pigment and a filler.

The base material layer 111 or the first adhesive layer 112 is required to have a function of inhibiting the breakage of the metal foil layer 113 during the stretching of the packaging material. The first adhesive layer 112 achieves excellent conformability and an elastic modulus close to the metal foil layer 113, in addition to the high adhesion between the base material layer 111 and the metal foil layer 113, and therefore, the reliability after the deep-drawing or stretching of the packaging material is increased.

The kind of the pigment is not particularly limited as long as it does not interfere with the adhesiveness of the first adhesive layer 112.

Examples of the organic pigment include an azo-based pigment, a phthalocyanine-based pigment, a quinacridone-based pigment, an anthraquinone-based pigment, a dioxazine-based pigment, an indigothioindigo-based pigment, a perinone/perylene-based pigment, and an isoindolenine-based pigment, and examples of the inorganic pigment include a carbon black-based pigment, a titanium oxide-based pigment, a cadmium-based pigment, a lead-based pigment, and a chromium oxide-based pigment, as well as fine powder of mica and fish scale foil.

As the pigment, a component having a functional group which bonds to the isocyanate groups in the curing agent is preferably used from the viewpoint of the adhesion to a urethane resin formed from the polyol and the curing agent in the first adhesive layer 112. Examples of the functional group include a hydroxyl group.

As specific examples of the organic pigment, for example, the following pigments can be used.

Yellow: isoindolinone, isoindoline, quinophthalone, anthraquinone (furabatoron), azomethine, xanthene, and the like.

Orange: diketopyrrolopyrrole, perylene, anthraquinone, perinone, quinacridone, and the like.

Red: anthraquinone, quinacridone, diketopyrrolopyrrole, perylene, indigoid, and the like.

Purple: oxazine (dioxazine), quinacridone, perylene, indigoid, anthraquinone, xanthene, benzimidazolone, violanthrone, and the like.

Blue: phthalocyanine, anthraquinone, indigoid, and the like.

Green: phthalocyanine, perylene, azomethine, and the like.

As specific examples of the inorganic pigment, for example, the following pigments can be used.

White: zinc white, white lead, lithopone, titanium dioxide, precipitated barium sulfate, barite powder, and the like.

Red: red lead, iron oxide red, and the like.

Yellow: chrome yellow, zinc yellow (zinc yellow I and zinc yellow II), and the like.

Blue: ultramarine blue, Prussian blue (potassium ferric ferrocyanide), and the like.

Black: carbon black and the like.

Examples of the filler include polyethylene, polypropylene, resin fillers such as a phenolic resin and an acrylic resin, silica, and graphite. Examples of the shape of the filler include a flake shape, a spherical shape, a hollow shape, a fiber shape, and an amorphous shape.

As the filler, an inorganic filler is preferable since a filler having a high elastic modulus improves the reliability.

The pigment and the filler included in the first adhesive layer 112 may be one kind or two or more kinds thereof.

The proportion of the total amount of the pigment and the filler in the first adhesive layer 112 (100% by mass) is 1% by mass or more, and preferably 5% by mass or more since a higher reliability is obtained. Further, the amount of the coloring component is 50% by mass or less, and preferably 20% by mass or less since excellent adhesiveness is obtained.

The thickness of the first adhesive layer 112 is preferably 1 to 10 µm, and more preferably 2 to 6 µm in order to obtain desired adhesion strength, conformability, processibility, or the like.

### (Metal Foil Layer 113)

As the metal foil layer 113, various metal foils such as an aluminum foil and a stainless steel foil can be used, and from the viewpoints of a moisture-proof property, processibility such as ductility, and cost, an aluminum foil is preferable.

As the aluminum foil, for example, known desired soft aluminum foils may be used, and in order to obtain pinhole resistance, and ductility during the molding, an iron-containing aluminum foil is preferable. The amount of iron in the aluminum foil (100% by mass) is preferably 0.1% by mass to 9.0% by mass, and more preferably 0.5% by mass to 2.0% by mass. In the case where the amount of iron is a lower limit (0.1% by mass) or more, the pinhole resistance and the ductility are improved. If the amount of iron is an upper limit (9.0% by mass) or less, the flexibility is improved.

In addition, as the aluminum foil, a soft aluminum foil which has been subjected to an annealing treatment is preferable in order to impart desired ductility in molding.

The thickness of the metal foil layer 113 is preferably 9 to 200 µm, and more preferably 15 to 150 µm, in order to obtain desired barrier properties, pinhole resistance, and processibility.

In particular, a preferred metal foil layer 113 is a soft aluminum foil having a thickness of 15 to 150 µm, which has been subjected to an annealing treatment. Specifically, Materials 8021 and 8079 in JIS standard are preferable.

The aluminum foil used in the metal foil layer 113 is preferably one which has been subjected to a degreasing treatment, in order to obtain desired electrolytic solution resistance. Further, an aluminum foil in which the surface has not been etched is preferable in order to simplify the preparation step.

The degreasing treatments are largely classified into a wet type degreasing treatment and a dry type degreasing treatment, and the dry type degreasing treatment is preferable in order to simplify the preparation step.

Examples of the dry type degreasing treatment include a method in which a degreasing treatment is carried out by extending the treatment time in a step of subjecting an aluminum foil to an annealing treatment. A sufficient electrolytic solution resistance can be obtained even by the degreasing treatment which is carried out at the same time as the annealing treatment which is carried out to soften the aluminum foil. Further, in addition to the degreasing treatment, a frame treatment, a corona treatment, and the like may be included. In addition, it is possible to adopt a degreasing treatment in which contaminants are oxidatively decomposed and removed by active oxygen which is generated by the irradiation with ultraviolet rays at a specific wavelength.

Examples of the wet type degreasing treatment include acid degreasing and alkali degreasing.

Examples of the acid used for the acid degreasing include inorganic acids such as sulfuric acid, nitric acid, hydrochloric acid, and hydrofluoric acid. These acids may be used alone or in combination of two or more kinds thereof. Examples of the alkali used for the alkali degreasing include sodium hydroxide having a high etching effect. Further, materials into which a weakly alkaline system or a surfactant is blended may be included.

The wet type degreasing treatment is carried out by a dipping method or a spraying method.

### (Corrosion Prevention Treatment Layer 114)

The corrosion prevention treatment layer 114 serves to adhere the metal foil layer 113 firmly to the second adhesive layer 115, and to protect the metal foil layer 113 from an electrolytic solution or hydrofluoric acid generated from the electrolytic solution.

The corrosion prevention treatment layer 114 is a layer which is formed on the metal foil layer 113, for example, by subjecting the metal foil layer 113 to a hydrothermal modification treatment, an anodic oxidation treatment, a chemical conversion treatment, or a combination of these treatments.

Examples of the layer formed by the hydrothermal modification treatment include a layer formed by a boehmite treatment in which an aluminum foil is dip-treated in boiling water to which triethanolamine has been added. Examples of the layer formed by the anodic oxidation treatment include a layer formed by an alumite treatment. Examples of the layer formed by the chemical conversion treatment include layers formed by a chromate treatment, a zirconium treatment, a titanium treatment, a vanadium treatment, a molybdenum treatment, a calcium phosphate treatment, a strontium hydroxide treatment, a cerium treatment, a ruthenium treatment, or a combination of these treatments. Further, the layer formed by the chemical conversion treatment is not limited to the layers formed by the wet type treatments, and may also be a layer formed by a treatment applying a method which includes mixing the treatment agent with a resin component and coating the mixture.

The layer formed by a coating type chromate treatment among the corrosion prevention treatments is preferable from the viewpoint of the maximization of the effect and the disposal of a waste liquid.

Moreover, the corrosion prevention treatment layer 114 may be a layer formed only by a pure coating technique, in addition to the above-described layer formed by the chemical conversion treatments. Specific examples of the layer include a layer formed by coating a treatment liquid including a sol of oxides of rare earth elements such as cerium oxide, having an average particle diameter of 100 nm or less as a material which has a corrosion prevention effect (inhibitor effect) on aluminum and is suitable in an environmental aspect, and drying. Thus, it is possible to impart a corrosion prevention effect to a metal foil by a general coating method.

### (Second Adhesive Layer 115)

The second adhesive layer 115 is a layer that adheres the corrosion prevention treatment layer 114 to the sealant layer 116. The packaging material 101 can be classified into one having a heat laminate configuration and one having a dry laminate configuration according to the kind of the second adhesive layer 115.

In the case of the dry laminate configuration, it is possible to use the same adhesive as the adhesives exemplified in the first adhesive layer 112 as a component that forms the second adhesive layer 115. In this case, in order to inhibit a swelling due to the electrolytic solution or hydrolysis by hydrofluoric acid, the adhesive used needs to be subjected to optimization of composition design, for example, of using a primary agent having a skeleton which is difficult to hydrolyze, or of enhancing the crosslinking density.

Examples of the technique for enhancing the crosslinking density include a method using a dimeric fatty acid, an ester or a hydrogenated product of a dimeric fatty acid, a reduced glycol of a dimeric fatty acid, or a reduced glycol of an ester or a hydrogenated product of a dimeric fatty acid. The dimeric fatty acid is an acid formed by dimerizing various unsaturated fatty acids, and examples of the structure thereof include non-cyclic, monocyclic, polycyclic, and aromatic cyclic structures. The polybasic acid, which is a raw material of the polyester polyol used as an adhesive that forms the second adhesive layer 115, is not particularly limited. Further, the fatty acid, which is a starting material of the dimeric fatty acid, is also not particularly limited. In addition, a dibasic acid used in common polyester polyols may be incorporated, using such a dimeric fatty acid as an essential component.

It is possible to use an isocyanate compound, which can also be used as a chain elongation agent for the polyester polyol, as a curing agent for the primary agent. In this case, the crosslinking density of the adhesive coating film is enhanced and correspondingly, the dissolution or swelling properties are improved and the concentration of urethane groups is increased. Therefore, it is expected to improve the adhesiveness to a base material.

In the case of the heat laminate configuration, as a component that forms the second adhesive layer 115, an acid-modified polyolefin-based resin formed by the graft-modification of a polyolefin-based resin with an acid is preferable. Examples of the polyolefin-based resin include low-density polyethylene, medium-density polyethylene, and high-density polyethylene; ethylene-α-olefin copolymers; homo, block, or random polypropylenes; and propylene-α-olefin copolymers. The polyolefin-based resins may be used alone or in combination of two or more kinds thereof. Examples of the graft-modification acid include a carboxylic acid, an epoxy compound, and an acid anhydride, and maleic anhydride is preferable.

As a component that constitutes the second adhesive layer 115, a maleic anhydride-modified polyolefin-based resin, in which a polyolefin-based resin is graft-modified with maleic anhydride, is preferable, and a maleic anhydride-modified polypropylene is particularly preferable, in order to facilitate maintaining the adhesive force between the sealant layer 116 and the metal foil layer 113 even when the electrolytic solution penetrates thereinto.

In the case where the second adhesive layer 115 is formed by extrusion molding, the adhesive resin is easily aligned in the MD direction (machine direction) with the stress generated during the extrusion molding. In this case, in order to reduce the anisotropy of the adhesive resin, an elastomer may be blended in the second adhesive layer 115.

Examples of the elastomer blended in the second adhesive layer 115 include olefin-based elastomers and styrene-based elastomers. The average particle diameter of the blended elastomer is preferably 200 nm or less in order to improve the compatibility between the elastomer and the adhesive resin and the effect of reducing the anisotropy of the second adhesive layer 115. Further, the average particle diameter is measured by photographing an enlarged cross-section of the elastomer composition by an electron microscope, and measuring the average particle diameter of the cross-linked rubber components dispersed by image analysis.

These elastomers may be used alone or in combination of two or more kinds thereof.

In the case where the elastomer is blended in the second adhesive layer 115, the blending amount of the elastomer in the second adhesive layer 115 (100% by mass) is preferably 1% by mass to 25% by mass, and more preferably 10% by mass to 20% by mass. In the case where the blending amount of the elastomer is a lower limit (1% by mass) or more, the compatibility with the adhesive resin is improved, and the effect of reducing the anisotropy of the second adhesive layer 115 is improved. In the case where the blending amount of the elastomer is an upper limit (25% by mass) or less, it is easy to inhibit the second adhesive layer 115 from being swollen by the electrolytic solution.

The second adhesive layer 115 may be formed by using a dispersion type of an adhesive resin solution, in which the adhesive resin is dispersed in an organic solvent.

The thickness of the second adhesive layer 115 is preferably 1 to 40 µm, and more preferably 5 to 20 µm.

### (Sealant Layer 116)

The sealant layer 116 is the inner layer of the packaging material 101, which is a layer thermally welded during the battery assembly. That is, the sealant layer 116 is a layer including a thermally weldable film.

Examples of the component of the film constituting the sealant layer 116 include a polyolefin-based resin, and an acid-modified polyolefin-based resin formed by the graft-modification of a polyolefin-based resin with maleic anhydride or the like. Among these, a polyolefin-based resin is preferable, and polypropylene is particularly preferable, in order to improve the water vapor barrier properties, and thus form a battery form without excessive collapse by heat sealing. Examples of the polypropylene include the polypropylene exemplified in the second adhesive layer 115. The sealant layer 116 may be formed from a film having a mixture of various resins as described above. The sealant layer 116 may be a monolayer film or a multilayer film.

In the case of using a film formed by extrusion molding, since the sealant layer 116 tends to be aligned in the extrusion direction of the film, an elastomer may be blended in the sealant layer 116 in order to reduce the anisotropy by the alignment. By this, it becomes easy to inhibit the sealant layer 116 from being whitened when the packaging material 101 is subjected to cold molding to form a concave portion.

As the elastomer blended in the sealant layer 116, the same materials as the materials exemplified as the elastomer blended in the second adhesive layer 115 can be used, and the preferable materials are also the same.

In the case where the sealant layer 116 is a laminated film, the elastomer may be blended in a certain layer or all the layers out of the layers. For example, in the case where the sealant layer 116 has a trilayer configuration of random polypropylene/block polypropylene/random polypropylene, the elastomer may be blended in only the layer of block polypropylene, only the layers of random polypropylene, or both of the layers of random polypropylene and the layer of block polypropylene.

Moreover, a lubricant may be blended in the sealant layer 116 for the purpose of imparting a sliding property. By this, when the packaging material 101 is subjected to cold molding to form a concave portion, it becomes easy to prevent the portion which is a side or angle of the concave portion having a high stretching rate in the packaging material 101 from being stretched more than necessary. As a result, it becomes easy to inhibit the metal foil layer 113 from being peeled from the second adhesive layer 115, or breakage or whitening due to cracks in the sealant layer 116 and the second adhesive layer 115.

In the case where the lubricant is blended in the sealant layer 116, the blending amount of the lubricant in the sealant layer 116 (100% by mass) is preferably 0.001% by mass to 0.5% by mass. In the case where the blending amount of the lubricant is 0.001% by mass or more, it is easy to obtain an effect of inhibiting the sealant layer 116 from being whitened during the cold molding. In the case where the blending amount of the lubricant is 0.5% by mass or less, the lubricant bleeds on the laminate surface with the layers other than the surface of the packaging material 101 from the sealant layer, and it is thus easy to inhibit reduction of the adhesion strength.

### (Preparation Method)

Hereinafter, the method of preparing the packaging material 101 will be described. However, the method of preparing the packaging material 101 is not limited to the methods described below.

Examples of the method of preparing the packaging material 101 include a method including the following steps (I) to (III).
(I) A step of forming the corrosion prevention treatment layer 114 on the metal foil layer 113.
(II) A step of bonding the base material layer 111, through the first adhesive layer 112, onto the surface opposite to the surface on which the corrosion prevention treatment layer 114 in the metal foil layer 113 is formed.
(III) A step of bonding the sealant layer 116, through the second adhesive layer 115, onto the side of the corrosion prevention treatment layer 114 of the metal foil layer 113.

### Step (I):

The corrosion prevention treatment layer 114 is formed, for example, by coating a corrosion prevention treatment agent, followed by drying, curing, and baking, on one surface of the metal foil layer 113. Examples of the corrosion prevention treatment agent include a corrosion prevention treatment agent for a coating type chromate treatment.

The method of coating the corrosion prevention treatment agent is not particularly limited, and examples thereof include gravure coating, gravure reverse coating, roll coating, reverse roll coating, die coating, bar coating, kiss coating, and comma coating.

In addition, an unreacted metal foil may be used in the metal foil layer 113, and a metal foil which has been subjected to a wet type or dry type degreasing treatment may also be used.

### Step (II):

The base material layer 111 is bonded on the surface opposite to the surface on which the corrosion prevention treatment layer 114 in the metal foil layer 113 is formed, using an adhesive used to form the first adhesive layer 112 including at least one selected from the group consisting of a pigment and a filler as an essential component.

Examples of the method of bonding include techniques of dry lamination, non-solvent lamination, wet lamination, and the like.

In step (II), an aging treatment in the range from room temperature to 100°C may be carried out in order to promote the adhesiveness.

### Step (III):

The sealant layer 116 is bonded, through the second adhesive layer 115, on the side of the corrosion prevention treatment layer 114 of the laminate, in which the base material layer 111, the first adhesive layer 112, the metal foil layer 113, and the corrosion prevention treatment layer 114 are laminated in this order.

In the case of the dry laminate configuration, the sealant layer 116 is bonded on the side of the corrosion prevention treatment layer 114 of the laminate using the above-described adhesive, with a technique of dry lamination, non-solvent lamination, wet lamination, or the like.

In the case of the heat laminate configuration, for example, the following dry process and wet process may be included. In the case of the dry process, the adhesive resin is extrusion-laminated on the corrosion prevention treatment layer 114 of the laminate and a film that forms the sealant layer 116 obtained by an inflation method or a cast method is laminated. Thereafter, a heat treatment (aging treatment, heat lamination, or the like) may be carried out for the purpose of improving the adhesion between the corrosion prevention treatment layer 114 and the second adhesive layer 115. Further, a multilayer film, in which the second adhesive layer 115 and the sealant layer 116 are laminated by an inflation method or a cast method, may be fabricated, and by laminating the multilayer film on the laminate by heat lamination, the sealant layer 116 may be laminated via the second adhesive layer 115.

In the case of the wet process, a dispersion type of an adhesive resin solution of an adhesive resin such as an acid-modified polyolefin-based resin is coated on the corrosion prevention treatment layer 114 of the laminate, the solvent is volatilized at a temperature no lower than the melting point of the adhesive resin, and the adhesive resin is melt-softened, and baked. Thereafter, the sealant layer 116 is laminated by a heat treatment such as heat lamination.

By the steps (I) to (III) as described above, the packaging material 101 is obtained.

Furthermore, the method of preparing the packaging material 101 is not limited to the methods in which the steps (I) to (III) are sequentially carried out. For example, step (I) may be carried out after carrying out step (II). Further, formation of the corrosion prevention treatment layer 114 and extrusion lamination of the sealant layer 116 may be carried out continuously in-line. In addition, a corrosion prevention treatment layer may be provided on both sides of the metal foil layer.

Since the packaging material of the second embodiment as described above contains a pigment or a filler in a specific proportion to adjust the elastic modulus of the first adhesive layer, it becomes possible to improve the reliability such as high temperature resistance or humidity resistance, and electrolytic solution resistance after deep-drawing or stretching.

Furthermore, if a pigment or filler colored in a color different from the base material layer 111 or the metal foil layer 113 is selected, coating defects can be easily detected with a difference in the colors even when the coating defects such as color omission and fish eyes of the adhesive during the coating are generated.

Furthermore, the packaging material in the second embodiment is not limited to the packaging material 101. For example, a corrosion prevention treatment layer may also be formed on both sides of the metal foil layer. In the case where the corrosion prevention treatment layer is formed on the side of the base material layer in the metal foil layer, it becomes easier to inhibit the corrosion of the side of the base material layer in the metal foil layer by the electrolytic solution.

Hereinafter, one example of the packaging material for a power storage device in a third embodiment (reference embodiment useful for understanding the invention) is shown and described in detail.

The packaging material 201 for a power storage device in the third embodiment (hereinafter sometimes simply referred to as an "packaging material 201") is a laminate in which the first adhesive layer 212, the metal foil layer 213, the corrosion prevention treatment layer 214, the second adhesive layer 215, and the sealant layer 216 are sequentially laminated on one surface of the base material layer 211, as shown in FIG. 3. The packaging material 201 is used such that the base material layer 211 becomes an outermost layer and the sealant layer 216 becomes an innermost layer.

### (Base Material Layer 211)

The base material layer 211 serves to impart heat resistance in the sealing step of the packaging material 201 during the preparation of a power storage device to inhibit the generation of pinholes that may occur during processing or distribution. Further, it imparts electrolytic solution resistance, thereby inhibiting the generation of poor appearance in the case where the electrolytic solution is adhered in the electrolytic solution injecting step during the preparation of the power storage device.

The base material layer 211 is a layer including a laminated film, in which a polyester film 211a and a polyamide film 211b are laminated from the outer side. The polyester film 211a and the polyamide film 211b are laminated by the adhesion through a third adhesive layer 211c.

The base material layer 211 has the polyester film 211a on the outermost layer. By this, a packaging material 201 having excellent electrolytic solution resistance and scratch resistance is obtained. From the viewpoint that the polyester film 211a is crystallized by aligning the molecules by stretching biaxially in X and Y axes after formation of a film to impart strength and heat resistance, a stretched polyester film is preferable, and a biaxially stretched polyester film is more preferable. However, the polyester film 211a may be an unstretched polyester film.

Examples of the polyester resin that forms the polyester film 211a include polyethylene terephthalate and polyethylene naphthalate.

From the viewpoint that the electrolytic solution resistance and the scratch resistance are improved, the thickness of the polyester film 211a is preferably 1 µm or more, and more preferably 3 µm or more. Further, from the viewpoint that the moldability is improved, the thickness of the polyester film 211a is preferably 20 µm or less, and more preferably 15 µm or less.

Furthermore, the base material layer 211 has the polyamide film 211b on the inner side of the polyester film 211a. By this, excellent moldability is obtained. The polyamide film 211b may be either an unstretched film or a stretched film. As the polyamide film 211b, a stretched polyamide film is preferable, and a biaxially stretched polyamide film is more preferable, from the viewpoint that the strength is improved by stretching.

Examples of the polyamide resin that forms the polyamide film include nylon 6, nylon 11, nylon 12, nylon 66, nylon 610, and nylon 612.

The thickness of the polyamide film 211b is preferably 6 µm or more, and more preferably 10 µm or more, from the viewpoint that excellent moldability, pinhole resistance, and insulating properties are obtained. Further, the thickness of the polyamide film 211b is preferably 40 µm or less, and more preferably 30 µm or less, from the viewpoint that excellent moldability is obtained.

In order to improve the adhesiveness between the polyester film 211a and the polyamide film 211b, the films are preferably laminated by a dry lamination method. In this case, as an adhesive component that forms the third adhesive layer 211c, an adhesive for dry lamination is preferable.

As the adhesive for dry lamination, a two-liquid curable polyurethane-based adhesive obtained by allowing a bifunctional or higher aromatic or aliphatic isocyanate as a curing agent to act on a primary agent such as a polyester polyol, a polyether polyol, and an acrylic polyol is preferable. After the polyurethane-based adhesive is coated and then aged, for example, at 40°C for 4 days or longer, to allow the reaction between the hydroxyl groups in the primary agent and the isocyanate groups in the curing agent to proceed, which allows firm adhesion. The molar ratio (NCO/OH) of the isocyanate groups contained in the curing agent to the hydroxyl groups contained in the primary agent is preferably 1 to 40, and more preferably 2 to 30. Particularly, in the case where a coloring component as described later, is added to the third adhesive layer 211c in the case of having a functional group, taking into consideration that the functional group inhibits the reaction between the hydroxyl groups in the primary agent and the isocyanate groups in the curing agent, it is preferable that the amount of the isocyanate groups be increased.

Moreover, in order to reduce the cost, the polyester film 211a and the polyamide film 211b are preferably laminated by a co-extrusion method. In this case, as an adhesive component that forms the third adhesive layer 211c, an adhesive resin that is a thermoplastic material is preferable. Examples of the adhesive resin include acid-modified polyolefin-based resins modified by subjecting an acid to graft-copolymerization with a polyolefin-based resin.

Examples of the polyolefin-based resin in the acid-modified polyolefin-based resin include polymers such as low-density polyethylene, medium-density polyethylene, and high-density polyethylene; ethylene-α-olefin copolymers; homo, block, or random polypropylenes; propylene-α-olefin copolymers; copolymers formed by subjecting the compound to copolymerization with polar molecules such as acrylic acid and methacrylic acid; and cross-linked polyolefins. The polyolefin-based resins may be used alone or in combination of two or more kinds thereof.

Examples of the acid used for modification include a carboxylic acid or an anhydride thereof, and an epoxy compound, and maleic anhydride is preferable.

A filler is contained in the third adhesive layer 211c. When the filler is contained in the third adhesive layer 211c, suitable hardness is imparted to the third adhesive layer 211c, and therefore, generation of defects such as partial stripping of the polyester film 211a and the polyamide film 211b or generation of pinholes can be inhibited under conditions of, for example, constant temperature and constant humidity after deep-drawing, and thus, high reliability is obtained.

In addition, the third adhesive layer 211c is colored. As a result, the packaging material 201 itself seems to be colored as seen from the outside, and therefore, even when a label or print appended to the outer surface 211d of the base material layer 211 is forged, genuine products can be identified from forged products from the difference in the colors of the packaging material itself.

Coloration of the third adhesive layer 211c can be carried out by incorporating a filler having colorability which can impart identifiability to the packaging material 201.

Examples of the filler which can be a coloring component include organic pigments such as an azo-based pigment, a phthalocyanine-based pigment, a quinacridone-based pigment, an anthraquinone-based pigment, a dioxazine-based pigment, an indigothioindigo-based pigment, a perinone/perylene-based pigment, and an isoindolenine-based pigment; inorganic pigments such as a carbon black-based pigment, a titanium oxide-based pigment, a cadmium-based pigment, a lead-based pigment, and a chromium oxide-based pigment; fine powder of mica, fish scale foil, and graphite.

As the coloring component, from the viewpoint of the adhesiveness with the urethane resin formed from the polyol and the curing agent in the third adhesive layer 211c, a coloring component having a functional group which bonds to the isocyanate groups in the curing agent is preferably used.

As specific examples of the organic pigment, the following pigments can be used, for example, according to a desired color.

Yellow: isoindolinone, isoindoline, quinophthalone, anthraquinone (furabatoron), azomethine, xanthene, and the like.

Orange: diketopyrrolopyrrole, perylene, anthraquinone, perinone, quinacridone, and the like.

Red: anthraquinone, quinacridone, diketopyrrolopyrrole, perylene, indigoid, and the like.

Purple: oxazine (dioxazine), quinacridone, perylene, indigoid, anthraquinone, xanthene, benzimidazolone, violanthrone, and the like.

Blue: phthalocyanine, anthraquinone, indigoid, and the like.

Green: phthalocyanine, perylene, azomethine, and the like.

As specific examples of the inorganic pigment, the following pigments can be used, for example, depending on the desired color.

White: zinc white, white lead, lithopone, titanium dioxide, precipitated barium sulfate, barite powder, and the like.

Red: red lead, iron oxide red, and the like.

Yellow: chrome yellow, zinc yellow (zinc yellow I and zinc yellow II), and the like.

Blue: ultramarine blue, Prussian blue (potassium ferric ferrocyanide), and the like.

Black: carbon black and the like.

The coloring components included in the third adhesive layer 211c may be one kind or two or more kinds thereof.

As the filler contained in the third adhesive layer 211c, a filler which becomes a coloring component may be used alone, or a combination of a filler which becomes a coloring component and a filler which does not become a coloring component may be used.

Examples of the filler which does not become a coloring component include polyethylene, polypropylene, resin fillers such as a phenolic resin and an acrylic resin, and silica.

Examples of the shape of the filler include a flake shape, a spherical shape, a hollow shape, a fiber shape, and an amorphous shape.

However, coloration of the third adhesive layer 211c may also be carried out by incorporating a component having colorability other than the filler.

The content of the coloring component in the third adhesive layer 211c (100% by mass) is preferably 0.01% by mass or more, and more preferably 0.5% by mass or more, since the forgery prevention ability is improved. In addition, the content of the coloring component is preferably 40% by mass or less, and more preferably 20% by mass or less, since excellent adhesiveness is obtained.

The content of the filler in the third adhesive layer 211c (100% by mass) (the total amount of a filler which becomes a coloring component and a filler which does not become a coloring component) is preferably 1% by mass or more, and more preferably 5% by mass or more, since the reliability is improved. Further, the amount of the filler is preferably 40% by mass or less, and more preferably 20% by mass or less, since the adhesion between the polyester film 211a and the polyamide film 211b is improved.

Furthermore, the third adhesive layer 211c is preferably colored in a color different from the color of the side of the base material layer 211 in the laminated portion excluding the base material layer 211 (hereinafter sometimes referred to as a "laminated portion A"). That is, the laminated portion A is preferably colored in a color different from the color seen from the side of the base material layer 211. For example, in the case where the first adhesive layer 212 is transparent and colored, there are aspects where the laminated portion A is colored in a color different from the color seen from the side of the base material layer 211, including the colors of the first adhesive layer 212 and the metal foil layer 213.

If the third adhesive layer 211 c is colored as described above, detection of the defects becomes easier during the cold molding of the packaging material 201 (the defect detectability is improved). That is, in the case where the pinholes are generated in the base material layer 211 during the cold molding when the third adhesive layer 211c is colored in a color different from the color of the side of the base material layer 211 in the laminated portion A, the color of the side of the base material layer 211 in the laminated portion A is exposed in only the defect portion. As a result, the difference in the colors between the defect portion in the base material layer 211 and the other portions can be identified by an optical technique or the like, and thus, the defects can be easily detected.

However, a color different from the color of the side of the base material layer 211 in the laminated portion A means a color, which is identifiable from the side of the base material layer 211 in the laminated portion A by an optical technique. Examples of the optical technique include a method using a spectrophotometer and a method in which an image photographed using a laser or a CCD is treated to be detected by a tint difference.

In addition, the expression "transparent" in the present invention means that a ratio of transmitted light to a visible light transmittance, that is, the entire flux of light in a visible light region (380 nm to 700 nm) is 10% or more.

Furthermore, irregularities are preferably formed on the outer surface 211d of the base material layer 211, that is, the outer surface 211d of the polyester film 211a. By this, as compared with a case where irregularities are not formed on the outer surface, when the packaging material 201 is deep-drawn by cold molding, the contact area between the mold surface and the outer surface 211d of the base material layer 211 substantially decreases, and thus excessive adhesion between the mold and the packaging material 201 is inhibited. Therefore, the sliding property of the packaging material 201 is sufficiently obtained in cold molding, a specific portion of the packaging material 201 is hardly locally stretched, and thus, generation of defects such as cracks and pinholes is inhibited and moldability is improved.

The irregularities formed on the outer surface 211d of the base material layer 211 are formed such that the static friction coefficient of the outer surface 211d is preferably 0.4 or less, and more preferably 0.3 or less, from the viewpoint that the moldability is improved.

Incidentally, the static friction coefficient in the present invention means a value measured by a gradient method (JIS P8147).

The method used to form irregularities (irregular portions) on the outer surface 211d of the base material layer 211 is not particularly limited, and examples thereof include a method using an emboss roll, a method of blending the polyester film 211a with a filler, and a sand blast method.

### (First Adhesive Layer 212)

The first adhesive layer 212 is formed between the base material layer 211 and the metal foil layer 213. The first adhesive layer 212 has adhesive force required to adhere the base material layer 211 firmly to the metal foil layer 213, and further, the conformability to protect the metal foil layer 213 from being broken by the base material layer 211 during the cold molding and the like are also required.

Examples of the first adhesive layer 212 include two-liquid curable polyurethane-based adhesives, in which a polyol such as a polyester polyol, a polyether polyol, and an acrylic polyol is used as a primary agent and an aromatic or aliphatic isocyanate is used as a curing agent. The molar ratio (NCO/OH) of the isocyanate groups in the curing agent to the hydroxyl groups in the primary agent is preferably 1 to 40, and more preferably 2 to 30.

In a similar manner to the third adhesive layer 211c, a filler is preferably contained in the first adhesive layer 212. Since suitable hardness is imparted to the first adhesive layer 212 by incorporating the filler in the first adhesive layer 212, it becomes easier to inhibit the generation of defects such as partial peeling occurring between the base material layer 211 and the metal foil layer 213, or generation of pinholes under conditions of, for example, constant temperature and constant humidity after deep-drawing, and thus, the reliability is improved.

The filler contained in the first adhesive layer 212 is not particularly limited, and examples thereof are the same as the materials exemplified in the third adhesive layer 211c, and the preferred aspects are also the same.

In the case where a filler is contained in the first adhesive layer 212, the content of the filler in the first adhesive layer 212 (100% by mass) is preferably 1% by mass or more, and more preferably 5% by mass or more since the reliability is improved. Further, the content of the filler is preferably 40% by mass or less, and more preferably 20% by mass or less since the adhesion between the base material layer 211 and the metal foil layer 213 is improved.

The thickness of the first adhesive layer 212 is preferably 1 to 10 µm, and more preferably 2 to 6 µm, to obtain desired adhesion strength, conformability, processibility, or the like.

### (Metal Foil Layer 213)

As the metal foil layer 213, various metal foils such as an aluminum foil and a stainless steel foil can be used, and in view of a moisture-proof property, processibility such as ductility, and cost, an aluminum foil is preferable.

As the aluminum foil, for example, known soft aluminum foils may be used, and in order to obtain desired pinhole resistance and ductility during the molding, an iron-containing aluminum foil is preferable. The amount of iron in the aluminum foil (100% by mass) is preferably 0.1% by mass to 9.0% by mass, and more preferably 0.5% by mass to 2.0% by mass. In the case where the amount of iron is a lower limit (0.1% by mass) or more, the pinhole resistance and the ductility are improved. If the amount of iron is an upper limit (9.0% by mass) or less, the flexibility is improved.

In addition, as the aluminum foil, a soft aluminum foil which has been subjected to an annealing treatment is more preferable in order to impart desired ductility in molding.

The thickness of the metal foil layer 213 is preferably 9 to 200 µm, and more preferably 15 to 150 µm, in order to obtain desired barrier properties, pinhole resistance, and processibility.

In particular, a preferred metal foil layer 213 is a soft aluminum foil having a thickness of 15 to 150 µm, which has been subjected to an annealing treatment. Specifically, Materials 8021 and 8079 in JIS standard are preferable.

The aluminum foil used in the metal foil layer 213 is preferably one which has been subjected to a degreasing treatment, in order to obtain desired electrolytic solution resistance. Further, an aluminum foil in which the surface has not been etched is preferable in order to simplify the preparation step.

The degreasing treatments are largely classified into a wet type degreasing treatment and a dry type degreasing treatment, and the dry type degreasing treatment is preferable in order to simplify the preparation step.

Examples of the dry type degreasing treatment include a method in which a degreasing treatment is carried out by extending the treatment time in a step of subjecting an aluminum foil to an annealing treatment. A sufficient electrolytic solution resistance can be obtained even by the degreasing treatment which is carried out at the same time when the annealing treatment which is carried out to soften the aluminum foil. Further, in addition to the degreasing treatment, a frame treatment, a corona treatment, and the like may be included. In addition, it is possible to adopt a degreasing treatment in which contaminants are oxidatively decomposed and removed by active oxygen which is generated by the irradiation with ultraviolet rays at a specific wavelength.

Examples of the wet type degreasing treatment include acid degreasing and alkali degreasing.

Examples of the acid used for the acid degreasing include inorganic acids such as sulfuric acid, nitric acid, hydrochloric acid, and hydrofluoric acid. These acids may be used alone or in combination of two or more kinds thereof. Examples of the alkali used for the alkali degreasing include sodium hydroxide having a high etching effect. Further, materials into which a weakly alkaline system or a surfactant is blended may be included.

The wet type degreasing treatment is carried out by a dipping method or a spraying method.

### (Corrosion Prevention Treatment Layer 214)

The corrosion prevention treatment layer 214 serves to adhere the metal foil layer 213 firmly to the second adhesive layer 215, and to protect the metal foil layer 213 from an electrolytic solution or hydrofluoric acid generated from the electrolytic solution.

The corrosion prevention treatment layer 214 is a layer which is formed on the metal foil layer 213, for example, by subjecting the metal foil layer 213 to a hydrothermal modification treatment, an anodic oxidation treatment, a chemical conversion treatment, or a combination of these treatments.

Examples of the layer formed by the hydrothermal modification treatment include a layer formed by a boehmite treatment in which a metal foil layer 213 is dipped in boiling water to which triethanolamine has been added. Examples of the layer formed by the anodic oxidation treatment include a layer formed by an alumite treatment. Examples of the layer formed by the chemical conversion treatment include a layer formed by a chromate treatment, a zirconium treatment, a titanium treatment, a vanadium treatment, a molybdenum treatment, a calcium phosphate treatment, a strontium hydroxide treatment, a cerium treatment, a ruthenium treatment, or a treatment with a combination thereof. Further, the layers are not limited to the layers formed by the above-described wet type chemical conversion treatments, and further include a layer formed by a coating type chromate treatment using a coating type treatment agent formed by mixing the treatment agent used in the above-described chemical conversion treatment with a resin component.

Among these, the layer formed by a coating type chromate treatment is preferable from the viewpoint that the effect is maximized and the disposal of the waste liquid becomes advantageous.

Moreover, the corrosion prevention treatment layer 214 may also be a layer formed only by a pure coating technique, in addition to the layer formed by the above-described chemical conversion treatment. Specific examples of the layer include a layer due to coating a treatment liquid including a sol of oxides of rare earth elements such as cerium oxide, having an average particle diameter of 100 nm or less, as a material which has a corrosion prevention effect (inhibitor effect) on aluminum and is suitable in an environmental aspect, and drying.

### (Second Adhesive Layer 215)

The second adhesive layer 215 is a layer that adheres the corrosion prevention treatment layer 214 to the sealant layer 216. The packaging material 201 is largely classified into one having a heat laminate configuration and one having a dry laminate configuration according to the kind of the second adhesive layer 215.

In the case of the dry laminate configuration, it is possible to use the same adhesive as the adhesives exemplified in the first adhesive layer 212 as a component that forms the second adhesive layer 215. In this case, in order to inhibit the swelling due to the electrolytic solution or hydrolysis by hydrofluoric acid, the adhesive used needs to be subjected to composition design, for example, of using a primary agent having a skeleton which is difficult to hydrolyze, or of enhancing the crosslinking density.

Examples of the technique for enhancing the crosslinking density include a method using a dimeric fatty acid, an ester or a hydrogenated product of a dimeric fatty acid, a reduced glycol of a dimeric fatty acid, or a reduced glycol of an ester or a hydrogenated product of a dimeric fatty acid. The dimeric fatty acid is an acid formed by dimerizing various unsaturated fatty acids, and examples of the structure thereof include non-cyclic, monocyclic, polycyclic, and aromatic cyclic structures. The polybasic acid, which is a raw material of the polyester polyol used as an adhesive that forms the second adhesive layer 215, is not particularly limited. Further, the fatty acid, which is a starting material of the dimeric fatty acid, is not particularly limited. In addition, a dibasic acid used in common polyester polyols may be incorporated, using such a dimeric fatty acid as an essential component.

It is possible to use an isocyanate compound, which can also be used as a chain elongation agent for the polyester polyol, as a curing agent for the primary agent. In this case, the crosslinking density of the adhesive coating film is enhanced and correspondingly, the dissolution or swelling properties are improved and the concentration of urethane groups is increased. Therefore, it is expected to improve the adhesion to a base material.

In the case of the configuration of a heat laminate, as a component that forms the second adhesive layer 215, an acid-modified polyolefin-based resin formed by the graft-modification of a polyolefin-based resin with an acid is preferable. Examples of the polyolefin-based resin include low-density polyethylene, medium-density polyethylene, and high-density polyethylene; ethylene-α-olefin copolymers; homo, block, or random polypropylenes; and propylene-α-olefin copolymers. The polyolefin-based resins may be used alone or in combination of two or more kinds thereof. Examples of the graft-modification acid include a carboxylic acid, an epoxy compound, and an acid anhydride, and maleic anhydride is preferable.

As a component that constitutes the second adhesive layer 215, a maleic anhydride-modified polyolefin-based resin, in which a polyolefin-based resin is graft-modified with maleic anhydride, is preferable, and a maleic anhydride-modified polypropylene is particularly preferable, in order to facilitate maintaining the adhesive force between the sealant layer 216 and the metal foil layer 213 even when the electrolytic solution penetrates thereinto.

In the case where the second adhesive layer 215 is formed by extrusion molding, the adhesive resin is easily aligned in the MD direction (machine direction) with the stress generated during the extrusion molding. In this case, in order to reduce the anisotropy, an elastomer may be blended in the second adhesive layer 215.

Examples of the elastomer blended in the second adhesive layer 215 include olefin-based elastomers and styrene-based elastomers. The average particle diameter of the blended elastomer is preferably 200 nm or less in order to improve the compatibility between the elastomer and the adhesive resin and the effect of reducing the anisotropy of the second adhesive layer 215. Further, the average particle diameter is measured by photographing an enlarged cross-section of the elastomer composition by an electron microscope, and measuring the average particle diameter of the cross-linked rubber components dispersed by image analysis.

These elastomers may be used alone or in combination of two or more kinds thereof.

In the case where the elastomer is blended in the second adhesive layer 215, the blending amount of the elastomer in the second adhesive layer 215 (100% by mass) is preferably 1% by mass to 25% by mass, and more preferably 10% by mass to 20% by mass. In the case where the blending amount of the elastomer is a lower limit (1% by mass) or more, the compatibility with the adhesive resin is improved, and the effect of reducing the anisotropy of the second adhesive layer 215 is improved. In the case where the blending amount of the elastomer is an upper limit (25% by mass) or less, it is easy to inhibit the second adhesive layer 215 from being swollen by the electrolytic solution.

The second adhesive layer 215 may be formed by using a dispersion type of an adhesive resin solution, in which the adhesive resin is dispersed in an organic solvent.

The thickness of the second adhesive layer 215 is preferably 1 to 40 µm, and more preferably 5 to 20 µm.

### (Sealant Layer 216)

The sealant layer 216 is the inner layer of the packaging material 201, which is a layer thermally welded during the battery assembly. That is, the sealant layer 216 is a layer including a thermally weldable film.

Examples of the component of the film constituting the sealant layer 216 include a polyolefin-based resin, and an acid-modified polyolefin-based resin formed by the graft-modification of a polyolefin-based resin with maleic anhydride or the like. Among these, a polyolefin-based resin is preferable, and polypropylene is particularly preferable, in order to improve the water vapor barrier properties, and thus form a battery form without excessive collapse by heat sealing. Examples of the polypropylene include the polypropylene exemplified in the second adhesive layer 215. The sealant layer 216 may be formed from a film having a mixture of various resins as described above. The sealant layer 216 may be a monolayer film or a multilayer film.

In the case of using a film formed by extrusion molding, since the sealant layer 216 tends to be aligned in the extrusion direction of the film, an elastomer may be blended in the sealant layer 216 in order to reduce the anisotropy by the alignment. By this, it becomes easy to inhibit the sealant layer 216 from being whitened when the packaging material 201 is subjected to cold molding to form a concave portion.

As the elastomer blended in the sealant layer 216, the same materials as the materials exemplified as the elastomer blended in the second adhesive layer 215 can be used, and the preferable materials are also the same.

In the case where the sealant layer 216 is a laminated film, the elastomer may be blended in a certain layer or all the layers out of the layers. For example, in the case where the sealant layer 216 has a trilayer configuration of random polypropylene/block polypropylene/random polypropylene, the elastomer may be blended in only the layer of block polypropylene, only the layers of random polypropylene, or both of the layers of random polypropylene and the layer of block polypropylene.

Moreover, a lubricant may be blended in the sealant layer 216 for the purpose of imparting a sliding property. By this, when the packaging material 201 is subjected to cold molding to form a concave portion, it becomes easy to prevent the portion which is a side or angle of the concave portion having a high stretching rate in the packaging material 201 from being stretched more than necessary. As a result, it becomes easy to inhibit the metal foil layer 213 from being delaminated from the second adhesive layer 215, or breakage or whitening due to cracks in the sealant layer 216 and the second adhesive layer 215.

In the case where the lubricant is blended in the sealant layer 216, the blending amount of the lubricant in the sealant layer 216 (100% by mass) is preferably 0.001% by mass to 0.5% by mass. In the case where the blending amount of the lubricant is 0.001% by mass or more, it is easy to obtain an effect of inhibiting the sealant layer 216 from being whitened during the cold molding. In the case where the blending amount of the lubricant is 0.5% by mass or less, the lubricant bleeds on the laminate surface with the layers other than the surface of the packaging material 201 from the sealant layer, and it is thus easy to inhibit reduction of the adhesion strength.

### (Preparation Method)

Hereinafter, the method of preparing the packaging material 201 will be described. However, the method of preparing the packaging material 201 is not limited to the methods described below.

Examples of the method of preparing the packaging material 201 include a method including the following steps (I) to (III).
(I) A step of forming the corrosion prevention treatment layer 214 on the metal foil layer 213.
(II) A step of bonding the base material layer 211, through the first adhesive layer 212, onto the surface opposite to the surface on which the corrosion prevention treatment layer 214 in the metal foil layer 213 is formed.
(III) A step of bonding the sealant layer 216, through the second adhesive layer 215, onto the side of the corrosion prevention treatment layer 214 of the metal foil layer 213.

### Step (I):

The corrosion prevention treatment layer 214 is formed, for example, by coating a corrosion prevention treatment agent, followed by drying, curing, and baking, on one surface of the metal foil layer 213. Examples of the corrosion prevention treatment agent include a corrosion prevention treatment agent for a coating type chromate treatment.

The method of coating the corrosion prevention treatment agent is not particularly limited, and examples thereof include gravure coating, gravure reverse coating, roll coating, reverse roll coating, die coating, bar coating, kiss coating, and comma coating.

In addition, an unreacted metal foil may be used in the metal foil layer 213, and a metal foil which has been subjected to a wet type or dry type degreasing treatment may also be used.

### Step (II):

The base material layer 211 is bonded on the surface opposite to the surface on which the corrosion prevention treatment layer 214 in the metal foil layer 213 is formed, using an adhesive used to form the first adhesive layer 212.

Examples of the method of bonding include techniques of dry lamination, non-solvent lamination, wet lamination, and the like.

In step (II), an aging treatment in the range from room temperature to 100°C may be carried out in order to promote the adhesiveness.

### Step (III):

The sealant layer 216 is bonded, through the second adhesive layer 215, on the side of the corrosion prevention treatment layer 214 of the laminate, in which the base material layer 211, the first adhesive layer 212, the metal foil layer 213, and the corrosion prevention treatment layer 214 are laminated in this order.

In the case of the dry laminate configuration, the sealant layer 216 is bonded on the side of the corrosion prevention treatment layer 214 of the laminate using the above-described adhesive, with a technique of dry lamination, non-solvent lamination, wet lamination, or the like.

In the case of the heat laminate configuration, for example, the following dry process and wet process may be included. In the case of the dry process, the adhesive resin is extrusion-laminated on the corrosion prevention treatment layer 214 of the laminate and a film that forms the sealant layer 216 obtained by an inflation method or a cast method is laminated. Thereafter, a heat treatment (aging treatment, heat lamination, or the like) may be carried out for the purpose of improving the adhesion between the corrosion prevention treatment layer 214 and the second adhesive layer 215. Further, a multilayer film, in which the second adhesive layer 215 and the sealant layer 216 are laminated by an inflation method or a cast method, may be fabricated, and by laminating the multilayer film on the laminate by heat lamination, the sealant layer 216 may be laminated via the second adhesive layer 215.

In the case of the wet process, a dispersion type of an adhesive resin solution of an adhesive resin such as an acid-modified polyolefin-based resin is coated on the corrosion prevention treatment layer 214 of the laminate, the solvent is volatilized at a temperature no lower than the melting point of the adhesive resin, and the adhesive resin is melt-softened, and baked. Thereafter, the sealant layer 216 is laminated by a heat treatment such as heat lamination.

By the steps (I) to (III) as described above, the packaging material 201 is obtained.

Furthermore, the method of preparing the packaging material 201 is not limited to the methods in which the steps (I) to (III) are sequentially carried out. For example, step (I) may be carried out after carrying out step (II). Further, formation of the corrosion prevention treatment layer 214 and extrusion lamination of the sealant layer 216 may be carried out continuously in-line. In addition, a corrosion prevention treatment layer may be provided on both sides of the metal foil layer.

Since the packaging material in the third embodiment as described above base material layer includes a laminated film having a polyester film on the outer side of the polyamide film, excellent electrolytic solution resistance and scratch resistance are obtained. Further, since the third adhesive layer of the base material layer 211 is colored, the packaging material itself is colored as seen from the outer side, and thus, the forgery prevention ability is high. Further, since the third adhesive layer contains a filler, defects such as partial stripping occurring between the layers adhered through the third adhesive layer and pinholes under conditions of, for example, constant temperature and constant humidity after deep-drawing are hardly generated, and the reliability is high. Also, when the filler is contained in the first adhesive layer, the reliability is further improved.

Furthermore, for the packaging material, when the base material layer has a polyamide film having excellent moldability and irregularities are formed on the outer surface of the polyester film on the outer side, excessive adhesion between the mold and the packaging material during the cold molding can be inhibited, and thus, particularly excellent moldability is also obtained.

Furthermore, the packaging material in the third embodiment is not limited to the packaging material 201. For example, a corrosion prevention treatment layer may also be formed on both sides of the metal foil layer. In the case where the corrosion prevention treatment layer is formed on the side of the base material layer in the metal foil layer (the surface where the metal foil layer is in contact with the base material layer), it becomes easier to inhibit the corrosion of the side of the base material layer in the metal foil layer by the electrolytic solution.

Hereinafter, one example of the packaging material for a power storage device in a fourth embodiment (embodiment of the present invention) will be described in detail.

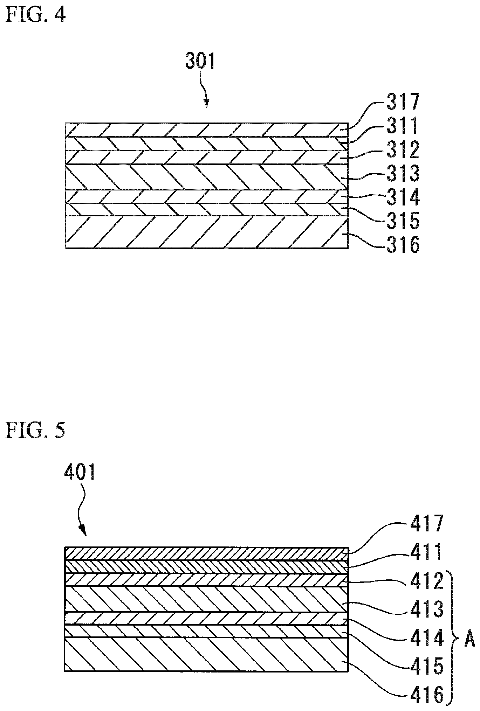

The packaging material 301 for a power storage device in the fourth embodiment of the present invention (hereinafter sometimes simply referred to as an "packaging material 301") is a laminate, in which a first adhesive layer 312, a metal foil layer 313, a corrosion prevention treatment layer 314, a second adhesive layer 315, and a sealant layer 316 are sequentially laminated on the first surface of the base material layer 311, and a base material protective layer 317 is laminated on the other surface of the base material layer 311, as shown in FIG. 4. The packaging material 301 is used such that the base material protective layer 317 becomes an outermost layer and the sealant layer 316 becomes an innermost layer.

### (Base Material Protective Layer 317)

The base material protective layer 317 is a layer laminated on the outer surface of the base material layer 311, which is a layer containing a urethane resin (hereinafter sometimes referred to as a "urethane resin (A)") formed from at least one selected from the group consisting of a polyester polyol and an acrylic polyol, each of which contains a group having a hydroxyl group in the side chain thereof (hereinafter sometimes collectively referred to as a "polyol (a)") and an aliphatic isocyanate curing agent. Deterioration of the base material layer 311 by the electrolytic solution is inhibited by the base material protective layer 317.

The polyester polyol containing a group having a hydroxyl group in the side chain (hereinafter sometimes also referred to as a "polyester polyol (a1)") is a polyester polyol containing a hydroxyl group in the side chain, in addition to a hydroxyl group at one end of a repeating unit.

Examples of the polyester polyol (a1) include polyester polyols obtained by reacting at least one kind of dibasic acid with at least one kind of compound having 3 or more hydroxyl groups. The hydroxyl group at the unreacted site in the hydroxyl group of a compound having 3 or more hydroxyl groups becomes the hydroxyl group in the side chain of the polyester polyol (a1).

Examples of the dibasic acid include aliphatic dibasic acids such as succinic acid, glutaric acid, adipic acid, pimelic acid, suberic acid, azelaic acid, sebacic acid, and brassylic acid; and aromatic dibasic acids such as isophthalic acid, terephthalic acid, and naphthalene dicarboxylic acid.

Examples of the compound having 3 or more hydroxyl groups include hexane triol, trimethylolpropane, and pentaerythritol.

Furthermore, as the polyester polyol (a1), a compound formed by the reaction of a diol, if desired, in addition to the dibasic acid and the compound having 3 or more hydroxyl groups, may be used.

Examples of the diol include aliphatic diols such as ethylene glycol, propylene glycol, butane diol, neopentyl glycol, methylpentane diol, hexane diol, heptane diol, octane diol, nonane diol, decane diol, and dodecane diol; alicyclic diols such as cyclohexane diol and hydrogenated xylylene glycol; and aromatic diols such as xylylene glycol.

Furthermore, polyester urethane polyols, in which hydroxyl groups at both ends of the polyester polyol have undergone a reaction with at least one kind of bifunctional or higher isocyanate compound for chain elongation, may also be used.

Examples of the bifunctional or higher isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, polyester urethane polyols, in which adduct forms, biuret forms, or isocyanurate forms of these isocyanate compounds are used for chain elongation, may also be used.

The acrylic polyol containing a group having a hydroxyl group in the side chain (hereinafter sometimes referred to as an "acrylic polyol (a2)") is an acrylic polyol containing a hydroxyl group in the side chain, in addition to a hydroxyl group at one end of the repeating unit.

Examples of the acrylic polyol (a2) include, as a main component, a copolymer having a repeating unit derived from a (meth)acrylic acid, obtained by the copolymerization of at least a hydroxyl group-containing acryl monomer and a (meth)acrylic acid.

Examples of the hydroxyl group-containing acryl monomer include 2-hydroxyethyl (meth)acrylate and 2-hydroxypropyl (meth)acrylate.

Examples of the component which is copolymerized with a hydroxyl group-containing acryl monomer and a (meth)acrylic acid include alkyl (meth)acrylate-based monomers (examples of the alkyl group include a methyl group, an ethyl group, an n-propyl group, an i-propyl group, an n-butyl group, an i-butyl group, a t-butyl group, a 2-ethylhexyl group, and a cyclohexyl group); amide group-containing monomers such as (meth)acrylamide, N-alkyl (meth)acrylamide, N,N-dialkyl (meth)acrylamide (examples of the alkyl group include a methyl group, an ethyl group, an n-propyl group, an i-propyl group, an n-butyl group, an i-butyl group, a t-butyl group, a 2-ethylhexyl group, and a cyclohexyl group), N-alkoxy(meth)acrylamide, N,N-dialkoxy (meth)acrylamide (examples of the alkoxy group include a methoxy group, an ethoxy group, a butoxy group, and an isobutoxy group), N-methylol (meth)acrylamide, and N-phenyl (meth)acrylamide; glycidyl group-containing monomers such as glycidyl (meth)acrylate and allylglycidyl ether; silane-containing monomers such as (meth)acryloxypropyl trimethoxysilane, (meth)acryloxypropyl triethoxysilane; and isocyanate group-containing monomers such as (meth)acryloxypropyl isocyanate.

As the polyol, the acrylic polyol (a2) is preferable from the view point of excellent electrolytic solution resistance.

The polyol (a) can be used according to the required functions or performance, and may be used alone or in combination of two or more kinds thereof. By using the polyol (a) and the aliphatic isocyanate curing agent, a base material protective layer 317 formed from the urethane resin (A) is obtained.

The aliphatic isocyanate curing agent is a bifunctional or higher isocyanate compound having no aromatic ring. The aliphatic isocyanate curing agent is suitable for the outermost layer since it does not have an aromatic ring, and as a result, a benzene ring does not becomes a quinoid due to ultraviolet rays and yellowing is inhibited. Examples of the aliphatic isocyanate curing agent include methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, adduct forms, biuret forms, or isocyanurate forms of the isocyanate compounds may also be used.

As the aliphatic isocyanate curing agent, 1,6-hexamethylene diisocyanate and isophorone diisocyanate are preferable from the viewpoint of improved electrolytic solution resistance. In addition to the improvement of self-repairing performance of a curing agent, with regard to the reactivity of the aliphatic isocyanate curing agent with a hydroxyl group of the polyol, the reactivity of 1,6-hexamethylene diisocyanate with a hydroxyl group of the polyol is higher than the reactivity of isophorone diisocyanate with a hydroxyl group of the polyol, and therefore, taking mass production into consideration, 1,6-hexamethylene diisocyanate is particularly preferable.

The molar ratio (NCO/OH) of the isocyanate groups contained in the aliphatic isocyanate curing agent to the hydroxyl groups contained in the polyol (a) in the urethane resin (A) is preferably from 0.5 to 50, and more preferably 1 to 20. In the case where the molar ratio (NCO/OH) is a lower limit (0.5) or more, the scratch resistance and the electrolytic solution resistance are improved. In the case where the molar ratio (NCO/OH) is an upper limit (50) or less, the adhesiveness with the base material layer 311 can be easily ensured.

Furthermore, the glass transition temperature Tg of the urethane resin (A) is 0°C or higher, and preferably 5°C or higher from the viewpoint that a scratch resistance due to the self-repairing property is easily improved. Further, the glass transition temperature Tg of the urethane resin (A) is 60°C or lower, preferably 40°C or lower, and more preferably 20°C or lower from the viewpoint that the urethane resin is easily inhibited from becoming brittle as the base material protective layer 317 becomes harder.

In addition, the glass transition temperature Tg of the urethane resin (A) means the peak temperature (heating rate of 5°C/minute) of the loss tangent (tan θ) at 1 Hz in a dynamic viscoelasticity measurement (DMS).

The thickness of the base material protective layer 317 is 1 to 10 µm, and more preferably 1 to 5 µm. In the case where the thickness of the base material protective layer 317 is a lower limit (1 µm) or more, it is easy to obtain excellent electrolytic solution resistance and scratch resistance.

In the case where the thickness of the base material protective layer 317 is an upper limit (10 µm) or less, the base material easily becomes thinner and it is thus easy to obtain stretching performance.

A filler is contained in the base material protective layer 317. If the filler is contained, damage may not be noticeable even when damage is generated on the surface of the base material protective layer 317.

Examples of the filler include resin fillers of a polyethylene resin, a polypropylene resin, a phenol resin, an acryl resin, and the like, silica, and graphite. Examples of the shape of the filler include a flake shape, a spherical shape, a hollow shape, a fiber shape, and an amorphous shape. Among these, from the viewpoint that the scratch resistance of the base material protective layer 317 is improved, the resin filler is preferable, and the amorphous resin filler is more preferable.

The content of the filler in the base material protective layer 317 (100% by mass) is preferably 1% by mass or more, and more preferably 3% by mass or more, from the viewpoint that the surface gloss is easily lowered. Further, the content of the filler is preferably 50% by mass or less, and more preferably 30% by mass or less, from the viewpoint that it is easy to prevent the detachment of the filler.

Furthermore, the particle diameter of the filler is preferably 0.8 µm or more, and more preferably 1.0 µm or more, from the viewpoint that the gloss can be further lowered. Further, the particle diameter of the filler means a value measured by a laser diffraction method.

Furthermore, additives such as a flame retardant, a lubricant, an antioxidant, a photostabilizer, a tackifier, a leveling agent, and an antifoaming agent in addition to the filler, may be blended in the base material protective layer 317.

Examples of the lubricant include fatty acid amides such as oleic acid amide, erucic acid amide, stearic acid amide, behenic acid amide, ethylenebisoleic acid amide, and ethylenebiserucic acid amide.

These additives may be used alone or in combination of two or more kinds thereof.

The outer surface of the base material protective layer 317 is preferably matting-treated. By such a treatment, the sliding property of the surface of the base material protective layer 317 is improved, and thus, it is easy to inhibit the packaging material 301 from being excessively adhered to a mold in cold molding, and thus, to improve moldability. Further, a matting effect is also obtained.

### (Base Material Layer 311)

The base material layer 311 serves to impart heat resistance in the sealing step during the preparation of a power storage device to inhibit the generation of pinholes that may occur during molding processing or distribution. In particular, in the case of packaging materials for lithium ion batteries in large scale uses, abrasion resistance, chemical resistance, insulating properties, or the like can also be imparted.

The base material layer 311 is preferably a resin film formed from a resin having insulating properties. Examples of the resin film include stretched or unstretched films such as a polyester film, a polyamide film, and a polypropylene film. The base material layer 311 may be a monolayer film of these resin films or a laminated film formed by using two or more kinds of these resin films.

Examples of the polyester resin that forms the polyester film include polyethylene terephthalate, and polyethylene naphthalate.

Examples of the polyamide resin that forms the polyamide film include nylon 6, nylon 11, nylon 12, nylon 66, nylon 610, and nylon 612.

As the base material layer 311, the polyamide film is preferable, among those described above, since it has excellent moldability.

The thickness of the base material layer 311 is preferably 6 to 40 µm, and more preferably 10 to 30 µm. In the case where the thickness of the base material layer 311 is a lower limit (6 µm) or more, the pinhole resistance and the insulating properties are improved. In the case where the thickness of the base material layer 311 is an upper limit (40 µm) or less, the moldability is improved.

### (First Adhesive Layer 312)

The first adhesive layer 312 is formed between the base material layer 311 and the metal foil layer 313. The first adhesive layer 312 has adhesive force required to adhere the base material layer 311 firmly to the metal foil layer 313, and further, the conformability to protect the metal foil layer 313 from being broken by the base material layer 311 during the cold molding and the like are also required.

Examples of the adhesive component that forms the first adhesive layer 312 include two-liquid curable polyurethane-based adhesives, in which a polyol such as a polyester polyol, a polyether polyol, and an acrylic polyol is used as a primary agent and an aromatic or aliphatic isocyanate is used as a curing agent.

Examples of the polyester polyol include polyester polyols obtained by the reaction of at least one kind of dibasic acid with at least one kind of diol. The dibasic acid and the diol are not particularly limited, and examples thereof include the compounds exemplified in the base material protective layer 317. Further, polyester urethane polyols formed by the reaction of at least one kind of isocyanate compound with hydroxyl groups at both ends of a polyester polyol for chain elongation may also be used.

Examples of the polyether polyol include polyethylene glycol, polypropylene glycol, and polyether urethane polyols which have elongated chains, by allowing an isocyanate compound to undergo a reaction therewith.

Examples of the acrylic polyol include copolymers which have a repeating unit derived from a (meth)acrylic acid as a main component.

Examples of the component which is copolymerized with a (meth)acrylic acid include the same as those exemplified as the copolymerization component in the base material protective layer 317, excluding the hydroxyl group-containing acryl monomers.

The polyol used used to form the first adhesive layer 312 can be used according to the required functions or performance, and may be used alone or in combination of two or more kinds thereof.

By using the isocyanate-based compound in the primary agent as a curing agent, a polyurethane resin is formed. Examples of the isocyanate-based compound used as the curing agent include the same as the compounds exemplified as the chain elongation agent.

The molar ratio (NCO/OH) of the isocyanate groups in the curing agent to the hydroxyl groups in the primary agent in the first adhesive layer 312 is preferably 1 to 10, and more preferably 2 to 5.

Furthermore, in the case where the pigment as described later has a functional group which bonds to isocyanate groups, the hydroxyl groups in the primary agent and the functional group in the coloring component react competitively with the isocyanate groups in the curing agent, and therefore, it is preferable to use a larger amount of the isocyanate groups in the curing agent.

The first adhesive layer 312 contains at least a pigment and may contain and a filler in order to adjust the elastic modulus. The pigment may be an organic pigment or an inorganic pigment, or a mixture thereof. The filler may be an organic filler or an inorganic filler, or a mixture thereof.

It becomes possible to increase reliability such as the high temperature resistance or humidity resistance after the deep-drawing or stretching of the packaging material, and electrolytic solution resistance, by adjusting the elastic modulus of the first adhesive layer 312 by incorporating at least one selected from the group consisting of a pigment and a filler.

The base material layer 311 or the first adhesive layer 312 is required to have a function of inhibiting the breakage of the metal foil layer 313 during the stretching of the packaging material. The first adhesive layer 312 in the present invention achieves excellent conformability and an elastic modulus close to the metal foil layer 313, in addition to the high adhesion between the base material layer 311 and the metal foil layer 313, and therefore, the reliability after the deep-drawing or stretching of the packaging material is increased.

The kind of the pigment is not particularly limited as long as it does not interfere with the adhesiveness of the first adhesive layer 312.

Examples of the organic pigment include an azo-based pigment, a phthalocyanine-based pigment, a quinacridone-based pigment, an anthraquinone-based pigment, a dioxazine-based pigment, an indigothioindigo-based pigment, a perinone/perylene-based pigment, and an isoindolenine-based pigment, and examples of the inorganic pigment include a carbon black-based pigment, a titanium oxide-based pigment, a cadmium-based pigment, a lead-based pigment, and a chromium oxide-based pigment, as well as fine powder of mica and fish scale foil.

As the pigment, a coloring component having a functional group which bonds to the isocyanate groups in the curing agent is preferably used from the viewpoint of the adhesion to a urethane resin formed from the polyol and the curing agent in the first adhesive layer 312. Examples of the functional group include a hydroxyl group.

As specific examples of the organic pigment, for example, the following pigments can be used.

Yellow: isoindolinone, isoindoline, quinophthalone, anthraquinone (furabatoron), azomethine, xanthene, and the like.

Orange: diketopyrrolopyrrole, perylene, anthraquinone, perinone, quinacridone, and the like.

Red: anthraquinone, quinacridone, diketopyrrolopyrrole, perylene, indigoid, and the like.

Purple: oxazine (dioxazine), quinacridone, perylene, indigoid, anthraquinone, xanthene, benzimidazolone, violanthrone, and the like.

Blue: phthalocyanine, anthraquinone, indigoid, and the like.

Green: phthalocyanine, perylene, azomethine, and the like.

As specific examples of the inorganic pigment, for example, the following pigments can be used.

White: zinc white, white lead, lithopone, titanium dioxide, precipitated barium sulfate, barite powder, and the like.

Red: red lead, iron oxide red, and the like.

Yellow: chrome yellow, zinc yellow (zinc yellow I and zinc yellow II), and the like.

Blue: ultramarine blue, Prussian blue (potassium ferric ferrocyanide), and the like.

Black: carbon black and the like.

Examples of the filler include polyethylene, polypropylene, resin fillers such as a phenolic resin and an acrylic resin, silica, and graphite. Examples of the shape of the filler include a flake shape, a spherical shape, a hollow shape, a fiber shape, and an amorphous shape.

As the filler, an inorganic filler is preferable since a filler having a high elastic modulus improves the reliability.

The pigment and the filler included in the first adhesive layer 312 may be one kind or two or more kinds thereof.

The proportion of the total amount of the pigment and the filler in the first adhesive layer 312 (100% by mass) is 1% by mass or more, and preferably 5% by mass or more since a higher reliability is obtained. Further, the amount of the coloring component is 50% by mass or less, and preferably 20% by mass or less since excellent adhesiveness is obtained.

The thickness of the first adhesive layer 312 is preferably 1 to 10 µm, and more preferably 2 to 6 µm in order to obtain desired adhesion strength, conformability, processibility, or the like.

### (Metal Foil Layer 313)

As the metal foil layer 313, various metal foils such as an aluminum foil and a stainless steel foil can be used, and in view of a moisture-proof property, processibility such as ductility, and cost, an aluminum foil is preferable.

As the aluminum foil, for example, known soft aluminum foils may be used, and in order to obtain desired pinhole resistance and ductility during the molding, an iron-containing aluminum foil is preferable. The amount of iron in the aluminum foil (100% by mass) is preferably 0.1% by mass to 9.0% by mass, and more preferably 0.5% by mass to 2.0% by mass. In the case where the amount of iron is a lower limit (0.1% by mass) or more, the pinhole resistance and the ductility are improved. If the amount of iron is an upper limit (9.0% by mass) or less, the flexibility is improved.

In addition, as the aluminum foil, a soft aluminum foil which has been subjected to an annealing treatment is more preferable in order to impart desired ductility in molding.

The thickness of the metal foil layer 313 is preferably 9 to 200 µm, and more preferably 15 to 150 µm, in order to obtain desired barrier properties, pinhole resistance, and processibility.

In particular, a preferred metal foil layer 313 is a soft aluminum foil having a thickness of 15 to 150 µm, which has been subjected to an annealing treatment. Specifically, Materials 8021 and 8079 in JIS standard are preferable.

The aluminum foil used in the metal foil layer 313 is preferably one which has been subjected to a degreasing treatment, in order to obtain desired electrolytic solution resistance. Further, an aluminum foil in which the surface has not been etched is preferable in order to simplify the preparation step.

The degreasing treatments are largely classified into a wet type degreasing treatment and a dry type degreasing treatment, and the dry type degreasing treatment is preferable in order to simplify the preparation step.

Examples of the dry type degreasing treatment include a method in which a degreasing treatment is carried out by extending the treatment time in a step of subjecting an aluminum foil to an annealing treatment. A sufficient electrolytic solution resistance can be obtained even by the degreasing treatment which is carried out at the same time when the annealing treatment which is carried out to soften the aluminum foil. Further, in addition to the degreasing treatment, a frame treatment, a corona treatment, and the like may be included. In addition, it is possible to adopt a degreasing treatment in which contaminants are oxidatively decomposed and removed by active oxygen which is generated by the irradiation with ultraviolet rays at a specific wavelength.

Examples of the wet type degreasing treatment include acid degreasing and alkali degreasing.

Examples of the acid used for the acid degreasing include inorganic acids such as sulfuric acid, nitric acid, hydrochloric acid, and hydrofluoric acid. These acids may be used alone or in combination of two or more kinds thereof. Examples of the alkali used for the alkali degreasing include sodium hydroxide having a high etching effect. Further, materials into which a weakly alkaline system or a surfactant is blended may be included.

The wet type degreasing treatment is carried out by a dipping method or a spraying method.

### (Corrosion Prevention Treatment Layer 314)

The corrosion prevention treatment layer 314 serves to adhere the metal foil layer 313 firmly to the second adhesive layer 315, and to protect the metal foil layer 313 from an electrolytic solution or hydrofluoric acid generated from the electrolytic solution.

The corrosion prevention treatment layer 314 is a layer which is formed on the metal foil layer 313, for example, by subjecting the metal foil layer 313 to a hydrothermal modification treatment, an anodic oxidation treatment, a chemical conversion treatment, or a combination of these treatments.

Examples of the layer formed by the hydrothermal modification treatment include a layer formed by a boehmite treatment in which an aluminum foil is dip-treated in boiling water to which triethanolamine has been added. Examples of the layer formed by the anodic oxidation treatment include a layer formed by an alumite treatment. Examples of the layer formed by the chemical conversion treatment include layers formed by a chromate treatment, a zirconium treatment, a titanium treatment, a vanadium treatment, a molybdenum treatment, a calcium phosphate treatment, a strontium hydroxide treatment, a cerium treatment, a ruthenium treatment, or a combination of these treatments. Further, the layer formed by the chemical conversion treatment is not limited to the layers formed by the wet type treatments, and may also be a layer formed by a treatment applying a method which includes mixing the treatment agent with a resin component and coating the mixture.

The layer formed by a coating type chromate treatment among the corrosion prevention treatments is preferable from the viewpoint of the maximization of the effect and the disposal of a waste liquid.

Moreover, the corrosion prevention treatment layer 314 may also be a layer formed only by a pure coating technique, in addition to the layer formed by the above-described chemical conversion treatment. Specific examples of the layer include a layer formed by coating a treatment liquid including a sol of oxides of rare earth elements such as cerium oxide, having an average particle diameter of 100 nm or less, as a material which has a corrosion prevention effect (inhibitor effect) on aluminum and is suitable in an environmental aspect, and drying. Thus, it is possible to impart a corrosion prevention effect to a metal foil by a general coating method.

### (Second Adhesive Layer 315)

The second adhesive layer 315 is a layer that adheres the corrosion prevention treatment layer 314 to the sealant layer 316. The packaging material 301 is largely classified into one having a heat laminate configuration and one having a dry laminate configuration according to the kind of the second adhesive layer 315.

In the case of the dry laminate configuration, it is possible to use the same adhesive as the adhesives exemplified in the first adhesive layer 312 as a component that forms the second adhesive layer 315. In this case, in order to inhibit the swelling due to the electrolytic solution or hydrolysis by hydrofluoric acid, the adhesive used needs to be subjected to composition design, for example, of using a primary agent having a skeleton which is difficult to hydrolyze, or of enhancing the crosslinking density.

Examples of the technique for enhancing the crosslinking density include a method using a dimeric fatty acid, an ester or a hydrogenated product of a dimeric fatty acid, a reduced glycol of a dimeric fatty acid, or a reduced glycol of an ester or a hydrogenated product of a dimeric fatty acid. The dimeric fatty acid is an acid formed by dimerizing various unsaturated fatty acids, and examples of the structure thereof include non-cyclic, monocyclic, polycyclic, and aromatic cyclic structures. The polybasic acid, which is a raw material of the polyester polyol used as an adhesive that forms the second adhesive layer 315, is not particularly limited. Further, the fatty acid, which is a starting material of the dimeric fatty acid, is not particularly limited. In addition, a dibasic acid used in common polyester polyols may be incorporated, using such a dimeric fatty acid as an essential component.

It is possible to use an isocyanate compound, which can also be used as a chain elongation agent for the polyester polyol, as a curing agent for the primary agent. In this case, the crosslinking density of the adhesive coating film is enhanced and correspondingly, the dissolution or swelling properties are improved and the concentration of urethane groups is increased. Therefore, it is expected to improve the adhesion to a base material.

In the case of the heat laminate configuration, as a component that forms the second adhesive layer 315, an acid-modified polyolefin-based resin formed by the graft-modification of a polyolefin-based resin with an acid is preferable. Examples of the polyolefin-based resin include low-density polyethylene, medium-density polyethylene, and high-density polyethylene; ethylene-α-olefin copolymers; homo, block, or random polypropylenes; and propylene-α-olefin copolymers. The polyolefin-based resins may be used alone or in combination of two or more kinds thereof. Examples of the graft-modification acid include a carboxylic acid, an epoxy compound, and an acid anhydride, and maleic anhydride is preferable.

As a component that constitutes the second adhesive layer 315, a maleic anhydride-modified polyolefin-based resin, in which a polyolefin-based resin is graft-modified with maleic anhydride, is preferable, and a maleic anhydride-modified polypropylene is particularly preferable, in order to facilitate maintaining the adhesive force between the sealant layer 316 and the metal foil layer 313 even when the electrolytic solution penetrates thereinto.

In the case where the second adhesive layer 315 is formed by extrusion molding, the adhesive resin is easily aligned in the MD direction (machine direction) with the stress generated during the extrusion molding. In this case, in order to reduce the anisotropy, an elastomer may be blended in the second adhesive layer 315.

Examples of the elastomer blended in the second adhesive layer 315 include olefin-based elastomers and styrene-based elastomers. The average particle diameter of the blended elastomer is preferably 200 nm or less in order to improve the compatibility between the elastomer and the adhesive resin and the effect of reducing the anisotropy of the second adhesive layer 315. Further, the average particle diameter is measured by photographing an enlarged cross-section of the elastomer composition by an electron microscope, and measuring the average particle diameter of the cross-linked rubber components dispersed by image analysis.

These elastomers may be used alone or in combination of two or more kinds thereof.

In the case where the elastomer is blended in the second adhesive layer 315, the blending amount of the elastomer in the second adhesive layer 315 (100% by mass) is preferably 1% by mass to 25% by mass, and more preferably 10% by mass to 20% by mass. In the case where the blending amount of the elastomer is a lower limit (1% by mass) or more, the compatibility between the elastomer and the adhesive resin is improved, and the effect of reducing the anisotropy of the second adhesive layer 315 is improved. In the case where the blending amount of the elastomer is an upper limit (25% by mass) or less, it is easy to inhibit the second adhesive layer 315 from being swollen by the electrolytic solution.

The second adhesive layer 315 may be formed by using a dispersion type of an adhesive resin solution, in which the adhesive resin is dispersed in an organic solvent.

The thickness of the second adhesive layer 315 is preferably 1 to 40 µm, and more preferably 5 to 20 µm.

### (Sealant Layer 316)

The sealant layer 316 is the inner layer of the packaging material 301, which is a layer thermally welded during the assembly to a battery. That is, the sealant layer 316 is a layer including a thermally weldable film.

Examples of the component of the film constituting the sealant layer 316 include a polyolefin-based resin, and an acid-modified polyolefin-based resin formed by the graft-modification of a polyolefin-based resin with maleic anhydride or the like. Among these, a polyolefin-based resin is preferable, and polypropylene is particularly preferable, in order to improve the water vapor barrier properties, and thus, easily form a battery form without excessive collapse by heat sealing. Examples of the polypropylene include the polypropylene exemplified in the second adhesive layer 315. The sealant layer 316 may be formed from a film having a mixture of various resins as described above. The sealant layer 316 may be a monolayer film or a multilayer film.

In the case of using a film formed by extrusion molding, since the sealant layer 316 tends to be aligned in the extrusion direction of the film, an elastomer may be blended in the sealant layer 316 in order to reduce the anisotropy by the alignment. By this, it becomes easy to inhibit the sealant layer 316 from being whitened when the packaging material 301 is subjected to cold molding to form a concave portion.

As the elastomer blended in the sealant layer 316, the same materials as the materials exemplified as the elastomer blended in the second adhesive layer 315 can be used, and the preferable materials are also the same.

In the case where the sealant layer 316 is a laminated film, the elastomer may be blended in a certain layer or all the layers out of the layers. For example, in the case where the sealant layer 316 has a trilayer configuration of random polypropylene/block polypropylene/random polypropylene, the elastomer may be blended in only the layer of block polypropylene, only the layers of random polypropylene, or both of the layers of random polypropylene and the layer of block polypropylene.

Moreover, a lubricant may be blended in the sealant layer 316 for the purpose of imparting a sliding property. By this, when the packaging material 301 is subjected to cold molding to form a concave portion, it becomes easy to prevent the portion which is a side or angle of the concave portion having a high stretching rate in the packaging material 301 from being stretched more than necessary. As a result, it becomes easy to inhibit the metal foil layer 313 from being removed from the second adhesive layer 315, or breakage or whitening due to cracks in the sealant layer 316 and the second adhesive layer 315.

In the case where the lubricant is blended in the sealant layer 316, the blending amount of the lubricant in the sealant layer 316 (100% by mass) is preferably 0.001% by mass to 0.5% by mass. In the case where the blending amount of the lubricant is 0.001% by mass or more, it is easy to obtain an effect of inhibiting the sealant layer 316 from being whitened during the cold molding. In the case where the blending amount of the lubricant is 0.5% by mass or less, the lubricant bleeds on the laminate surface with the layers other than the surface of the packaging material 301, and it is thus easy to inhibit a reduction of the adhesion strength.

### (Preparation Method)

Hereinafter, the method of preparing the packaging material 301 will be described. However, the method of preparing the packaging material 301 is not limited to the methods described below.

Examples of the method of preparing the packaging material 301 include a method including the following steps (I) to (IV).
(I) A step of forming the corrosion prevention treatment layer 314 on the metal foil layer 313.
(II) A step of bonding the base material layer 311, through the first adhesive layer 312, onto the surface opposite to the surface on which the corrosion prevention treatment layer 314 in the metal foil layer 313 is formed.
(III) A step of bonding the sealant layer 316, through the second adhesive layer 315, onto the side of the corrosion prevention treatment layer 314 in the metal foil layer 313.
(IV) A step of laminating the base material protective layer 317 on the base material layer 311.

### Step (I):

The corrosion prevention treatment layer 314 is formed, for example, by coating a corrosion prevention treatment agent, followed by drying, curing, and baking, on one surface of the metal foil layer 313. Examples of the corrosion prevention treatment agent include a corrosion prevention treatment agent for a coating type chromate treatment.

The method of coating the corrosion prevention treatment agent is not particularly limited, and examples thereof include gravure coating, gravure reverse coating, roll coating, reverse roll coating, die coating, bar coating, kiss coating, and comma coating.

In addition, an unreacted metal foil may be used in the metal foil layer 313, and a metal foil which has been subjected to a degreasing treatment by a wet type or dry type degreasing treatment may also be used.

### Step (II):

The base material layer 311 is bonded on the surface opposite to the surface on which the corrosion prevention treatment layer 314 in the metal foil layer 313 is formed, using an adhesive using an adhesive composition including at least one selected from the group consisting of a pigment and a filler used to form the first adhesive layer 312.

Examples of the method of bonding include techniques of dry lamination, non-solvent lamination, wet lamination, and the like.

In step (II), an aging treatment in the range from room temperature to 100°C may be carried out in order to promote the adhesiveness.

### Step (III):

The sealant layer 316 is bonded, through the second adhesive layer 315, on the side of the corrosion prevention treatment layer 314 in the laminate, in which the base material layer 311, the first adhesive layer 312, the metal foil layer 313, and the corrosion prevention treatment layer 314 are laminated in this order.

In the case of the dry laminate configuration, the sealant layer 316 is bonded on the side of the corrosion prevention treatment layer 314 in the laminate using the above-described adhesive, with a technique of dry lamination, non-solvent lamination, wet lamination, or the like.

In the case of the heat laminate configuration, for example, the following dry process and wet process may be included. In the case of the dry process, the adhesive resin is extrusion-laminated on the corrosion prevention treatment layer 314 of the laminate and a film that forms the sealant layer 316 obtained by an inflation method or a cast method is laminated. Thereafter, a heat treatment (aging treatment, heat lamination, or the like) may be carried out for the purpose of improving the adhesion between the corrosion prevention treatment layer 314 and the second adhesive layer 315. Further, a multilayer film, in which the second adhesive layer 315 and the sealant layer 316 are laminated by an inflation method or a cast method, may be fabricated, and by laminating the multilayer film on the laminate by heat lamination, the sealant layer 316 may be laminated via the second adhesive layer 315.

In the case of the wet process, a dispersion type of an adhesive resin solution of an adhesive resin such as an acid-modified polyolefin-based resin is coated on the corrosion prevention treatment layer 314 of the laminate, the solvent is volatilized at a temperature no lower than the melting point of the adhesive resin, and the adhesive resin is melt-softened, and baked. Thereafter, the sealant layer 316 is laminated by a heat treatment such as heat lamination.

### Step (IV):

The base material protective layer 317 is laminated on the outer surface of the base material layer 311. Examples of the method of laminating the base material protective layer 317 include a method including preparing a dispersion type of a coating liquid of a urethane resin that forms the base material protective layer 317, coating the coating liquid by various coating methods such as a dipping method and a spraying method, volatilizing the solvent by heating, and baking. Further, the base material protective layer 317 can also be formed by extrusion molding for melting and extruding the urethane resin. In addition, the outer surface of the base material protective layer 317 may be subjected to processing such as a matting treatment.

By the steps (I) to (IV) as described above, the packaging material 301 is obtained.

Furthermore, the method of preparing the packaging material 301 is not limited to the methods in which the steps (I) to (IV) are sequentially carried out. For example, step (I) may be carried out after carrying out step (II). Further, step (II) may be carried out after carrying out step (IV). Further, formation of the corrosion prevention treatment layer 314 and extrusion lamination of the sealant layer 316 laminated on the second adhesive layer 315 may be carried out continuously in-line. In addition, a corrosion prevention treatment layer may be provided on both sides of the metal foil layer.

The packaging material in the fourth embodiment of the present invention as described above has a base material protective layer laminated on the outer surface of the base material layer, and thus has excellent electrolytic solution resistance. Therefore, even when an electrolytic solution is adhered onto the surface of the base material layer in the packaging material, deterioration of the base material layer and of the side of the base material layer in the metal foil layer can be inhibited. The base material protective layer in the packaging material of the present invention is different from a matte varnish layer in the above-described packaging material in the related art, and is formed from a urethane resin formed of a specific polyol and a curing agent. Thus, it is thought to obtain excellent electrolytic solution resistance. The reason why the effect is obtained by the urethane resin having such a specific configuration is not necessarily clear, but is thought to be as follows. It is thought that by using the polyester polyol (a1) or the acrylic polyol (a2), each having hydroxyl groups at least at a site other than the end, instead of polyether polyols having hydroxy groups arranged only at the end of the main chain as a polyol, the number of crosslinking points increases and the electrolytic solution resistance is improved. Particularly, it is thought since the acrylic polyol (a2) has groups having hydroxyl groups arranged randomly as a side chain with respect to the main chain, the number of crosslinking points increases and the electrolytic solution resistance is improved.

Furthermore, since the packaging material of the fourth embodiment of the present invention as described above contains a pigment or a filler to adjust the elastic modulus of the first adhesive layer, it becomes possible to improve the reliability such as high temperature resistance or humidity resistance, and electrolytic solution resistance after deep-drawing or stretching.

Furthermore, if a pigment or filler different from the base material layer 311 or the metal foil layer 313 is selected, coating defects can be easily detected with a difference in the colors even when the coating defects such as color omission and fish eyes of the adhesive during the coating are generated.

In addition, for the packaging material of the present invention, excellent scratch resistance is obtained by adjusting the glass transition temperature Tg of the urethane resin (A) that forms a base material protective layer to 0°C to 60°C.

However, the packaging material in the fourth embodiment of the present invention is not limited to the packaging material 301. For example, a corrosion prevention treatment layer may also be formed on both sides of the metal foil layer. In the case where the corrosion prevention treatment layer is formed on the side of the base material layer in the metal foil layer (the surface where the metal foil layer is in contact with the base material layer), it becomes easier to inhibit the corrosion of the side of the base material layer in the metal foil layer by the electrolytic solution.

Hereinafter, one example of the packaging material for a power storage device in a fifth embodiment (embodiment of the present invention) is shown and described in detail.

The packaging material 401 for a power storage device in the fifth embodiment of the present invention (hereinafter sometimes simply referred to as an "packaging material 401") is a laminate in which the first adhesive layer 412, the metal foil layer 413, the corrosion prevention treatment layer 414, the second adhesive layer 415, and the sealant layer 416 are sequentially laminated on one surface of the base material layer 411, and the base material protective layer 417 is laminated on the other surface of the base material layer 411, as shown in FIG. 5. The packaging material 401 is used such that the base material protective layer 417 becomes an outermost layer and the sealant layer 416 becomes an innermost layer when used as a packaging material for a power storage device. The packaging material 401 is a packaging material, in which the base material protective layer 417 is laminated on the outer side (side of the second surface) of the base material layer 411.

### (Base Material Protective Layer 417)

The base material protective layer 417 is a layer laminated on the outer surface (second surface) of the base material layer 411, and is formed from at least one selected from the group consisting of a polyester polyol and an acrylic polyol, each of which contains a group having a hydroxyl group in the side chain thereof, (hereinafter sometimes collectively referred to as a "polyol") and an aliphatic isocyanate curing agent. Deterioration of the base material layer 411 by the electrolytic solution is inhibited by the base material protective layer 417.

The polyester polyol containing a group having a hydroxyl group in the side chain (hereinafter sometimes referred to as a "polyester polyol (a1)") is a polyester polyol containing a hydroxyl group in the side chain, in addition to a hydroxyl group at the end of the repeating unit.

Examples of the polyester polyol (a1) include polyester polyols obtained by reacting at least one kind of dibasic acid with at least one kind of compound having 3 or more hydroxyl groups. The group at the unreacted site in the hydroxyl group of a compound having 3 or more hydroxyl groups becomes the hydroxyl group in the side chain of the polyester polyol (a1).

Examples of the dibasic acid include aliphatic dibasic acids such as succinic acid, glutaric acid, adipic acid, pimelic acid, suberic acid, azelaic acid, sebacic acid, and brassylic acid; and aromatic dibasic acids such as isophthalic acid, terephthalic acid, and naphthalene dicarboxylic acid.

Examples of the compound having 3 or more hydroxyl groups include hexane triol, trimethylolpropane, and pentaerythritol.

Furthermore, as the polyester polyol (a1), a compound formed by the reaction of a diol, if desired, in addition to the dibasic acid and the compound having 3 or more hydroxyl groups, may be used.

Examples of the diol include aliphatic diols such as ethylene glycol, propylene glycol, butane diol, neopentyl glycol, methylpentane diol, hexane diol, heptane diol, octane diol, nonane diol, decane diol, and dodecane diol; alicyclic diols such as cyclohexane diol and hydrogenated xylylene glycol; and aromatic diols such as xylylene glycol.

Furthermore, polyester urethane polyols, in which hydroxyl groups at both ends of the polyester polyol have undergone a reaction with at least one kind of bifunctional or higher isocyanate compound for chain elongation, may also be used.

Examples of the bifunctional or higher isocyanate compound include 2,4- or 2,6-tolylene diisocyanate, xylylene diisocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, polyester urethane polyols, in which adduct forms, biuret forms, or isocyanurate forms of these isocyanate compounds are used for chain elongation, may also be used.

The acrylic polyol containing a group having a hydroxyl group in the side chain (hereinafter sometimes referred to as an "acrylic polyol (a2)") is an acrylic polyol containing a hydroxyl group in the side chain, in addition to a hydroxyl group at one end of the repeating unit.

Examples of the acrylic polyol (a2) include, as a main component, a copolymer having a repeating unit derived from a (meth)acrylic acid, obtained by the copolymerization of at least a hydroxyl group-containing acryl monomer and a (meth)acrylic acid.

Examples of the hydroxyl group-containing acryl monomer include 2-hydroxyethyl (meth)acrylate and 2-hydroxypropyl (meth)acrylate.

Examples of the component which is copolymerized with a hydroxyl group-containing acryl monomer and a (meth)acrylic acid include alkyl (meth)acrylate-based monomers (examples of the alkyl group include a methyl group, an ethyl group, an n-propyl group, an i-propyl group, an n-butyl group, an i-butyl group, a t-butyl group, a 2-ethylhexyl group, and a cyclohexyl group); amide group-containing monomers such as (meth)acrylamide, N-alkyl (meth)acrylamide, N,N-dialkyl (meth)acrylamide (examples of the alkyl group include a methyl group, an ethyl group, an n-propyl group, an i-propyl group, an n-butyl group, an i-butyl group, a t-butyl group, a 2-ethylhexyl group, and a cyclohexyl group), N-alkoxy(meth)acrylamide, N,N-dialkoxy (meth)acrylamide (examples of the alkoxy group include a methoxy group, an ethoxy group, a butoxy group, and an isobutoxy group), N-methylol (meth)acrylamide, and N-phenyl (meth)acrylamide; glycidyl group-containing monomers such as glycidyl (meth)acrylate and allylglycidyl ether; silane-containing monomers such as (meth)acryloxypropyl trimethoxysilane, (meth)acryloxypropyl triethoxysilane; and isocyanate group-containing monomers such as (meth)acryloxypropyl isocyanate.

As the polyol, the acrylic polyol (a2) is preferable from the view point of superior electrolytic solution resistance.

The polyol can be used according to the required functions or performance, and may be used alone or in combination of two or more kinds thereof. By using these polyols and aliphatic isocyanate curing agents, a base material protective layer 417 formed from the polyurethane resin is obtained.

The aliphatic isocyanate curing agent is a bifunctional or higher isocyanate compound having no aromatic ring. The aliphatic isocyanate curing agent is suitable for the outermost layer since it does not have an aromatic ring, and as a result, a benzene ring does not becomes a quinoid due to ultraviolet rays and yellowing is inhibited. Examples of the aliphatic isocyanate curing agent include methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, and isopropylidene dicyclohexyl-4,4'-diisocyanate. Further, adduct forms, biuret forms, or isocyanurate forms of these isocyanate compounds may also be used.

As the aliphatic isocyanate curing agent, 1,6-hexamethylene diisocyanate and isophorone diisocyanate are preferable from the viewpoint that the electrolytic solution resistance is improved. Since the reactivity of 1,6-hexamethylene diisocyanate with a hydroxyl group is higher than the reactivity of isophorone diisocyanate with a hydroxyl group, 1,6-hexamethylene diisocyanate is particularly preferable, taking mass production into consideration.

The molar ratio (NCO/OH) of the isocyanate groups contained in the aliphatic isocyanate curing agent to the hydroxyl groups contained in the polyol is preferably from 0.5 to 50, and more preferably from 1 to 20. In the case where the molar ratio (NCO/OH) is a lower limit (0.5) or more, the scratch resistance and the electrolytic solution resistance are improved. In the case where the molar ratio (NCO/OH) is an upper limit (50) or less, the adhesiveness to the base material can be easily ensured.

In the case where coloring component has a functional group which bonds to the isocyanate groups, the hydroxyl groups in the primary agent and the functional group in the coloring component react competitively with the isocyanate groups in the curing agent, and therefore, it is preferable to use a larger amount of the isocyanate groups in the curing agent.

The thickness of the base material protective layer 417 is 1 to 10 µm, and more preferably 1 to 5 µm. In the case where the thickness of the base material protective layer 417 is a lower limit (1 µm) or more, it is easy to obtain excellent electrolytic solution resistance. In the case where the thickness of the base material protective layer 417 is an upper limit (10 µm) or less, it is easy to obtain a thinner base material, and thus to obtain stretching performance.

Moreover, the base material protective layer 417 is colored in a color different from the color of the side of the base material layer 411 of the laminated portion (hereinafter sometimes referred to as a "laminated portion A") excluding the base material protective layer 417 in the packaging material 401. That is, the laminated portion A is colored in a color different from the color seen from the side of the base material layer 411. For example, in the case where the base material layer 411 and the first adhesive layer 412 are transparent and non-colored, the color of the side of the base material layer 411 in the laminated portion A is the color of the metal foil layer 413, and the base material protective layer 417 is colored in a color different from the color of the metal foil layer 413. Further, in the case where the base material layer 411 and the first adhesive layer 412 are colored transparent, the laminated portion A is colored in a color different from the color seen from the side of the base material layer 411, including the colors of the base material layer 411 and the first adhesive layer 412.

However, a color different from the color of the side of the base material layer 411 in the laminated portion A means a color, which is identifiable from the side of the base material layer 411 in the laminated portion A by an optical technique. Examples of the optical technique include a method using a spectrophotometer and a method in which an image photographed using a laser or a CCD is treated to be detected by a tint difference.

In addition, the expression "transparent" in the present invention means that a ratio of transmitted light to a visible light transmittance, that is, the entire flux of light in a visible light region (380 nm to 700 nm) is 10% or more.

As described above, when the base material protective layer 417 is colored, it becomes easier to detect the defects during the formation of the base material protective layer 417 in the preparation of the packaging material 401 (the defect detectability is improved). That is, when the base material protective layer 417 is colored in a color different from the color of the side of the base material layer 411 in the laminated portion A, the color of the side of the base material layer 411 in the laminated portion A is exposed only in the defect portions of the base material protective layer 417 in the case where defects such as color omission and fish eyes are generated during the formation of the base material protective layer 417. By this, the difference in colors between the defect portions in the base material protective layer 417 and the other portions can be identified by an optical technique or the like, and therefore, the defects can be easily detected. Accordingly, those having defects such as color omission and fish eyes can be prevented from being incorporated into products during the formation of the base material protective layer 417, and therefore, the quality of the obtained packaging material 401 is improved.

The kind of the coloring component that colors the base material protective layer 417 not particularly limited as long as it does not interfere with the function of the electrolytic solution resistance of the base material protective layer 417, in the case where the base material protective layer 417 is colored in a color different from the color of the side of the base material layer 411 in the laminated portion A. Examples of the coloring component include organic pigments such as an azo-based pigment, a phthalocyanine-based pigment, a quinacridone-based pigment, an anthraquinone-based pigment, a dioxazine-based pigment, an indigothioindigo-based pigment, a perinone/perylene-based pigment, and an isoindolenine-based pigment, and inorganic pigment such as a carbon black-based pigment, a titanium oxide-based pigment, a cadmium-based pigment, a lead-based pigment, and a chromium oxide-based pigment, as well as fine powder of mica and fish scale foil.

As the coloring component, a coloring component having a functional group which bonds to the isocyanate groups in the curing agent is preferably used, from the viewpoint of the adhesion with a urethane resin formed from the polyol and the curing agent in the base material protective layer 417.

As specific examples of the organic pigment, the following pigments can be used, for example, according to a desired color.

Yellow: isoindolinone, isoindoline, quinophthalone, anthraquinone (furabatoron), azomethine, xanthene, and the like.

Orange: diketopyrrolopyrrole, perylene, anthraquinone, perinone, quinacridone, and the like.

Red: anthraquinone, quinacridone, diketopyrrolopyrrole, perylene, indigoid, and the like.

Purple: oxazine (dioxazine), quinacridone, perylene, indigoid, anthraquinone, xanthene, benzimidazolone, violanthrone, and the like.

Blue: phthalocyanine, anthraquinone, indigoid, and the like.

Green: phthalocyanine, perylene, azomethine, and the like.

As specific examples of the inorganic pigment, the following pigments can be used, for example, according to a desired color.

White: zinc white, white lead, lithopone, titanium dioxide, precipitated barium sulfate, barite powder, and the like.

Red: red lead, iron oxide red, and the like.

Yellow: chrome yellow, zinc yellow (zinc yellow I and zinc yellow II), and the like.

Blue: ultramarine blue, Prussian blue (potassium ferric ferrocyanide), and the like.

Black: carbon black and the like.

The coloring component included in the base material protective layer 417 may be one kind or two or more kinds thereof. The color of the base material protective layer 417 may be appropriately selected according to the color of the side of the base material layer 411 in the laminated portion A.

The content of the coloring component in the base material protective layer 417 (100% by mass) is preferably 0.01% by mass or more, and more preferably 0.5% by mass or more for easiness of defect detection (excellent defect detectability). In addition, the content of the coloring component is 80% by mass or less, and preferably 50% by mass or less, from the viewpoint that excellent electrolytic solution resistance is obtained.

The outer surface of the base material protective layer 417 is preferably matting-treated. By such a treatment, the sliding property of the surface of the base material protective layer 417 is improved, and thus, it is easy to inhibit the packaging material 401 from being excessively adhered to a mold in cold molding, and thus, to improve moldability. Further, a matting effect is also obtained.

The base material protective layer 417 may be blended with additives such as a flame retardant, a lubricant, an anti-blocking agent, an antioxidant, a photostabilizer, and a tackifier.

Examples of the lubricant include fatty acid amides such as oleic acid amide, erucic acid amide, stearic acid amide, behenic acid amide, ethylenebisoleic acid amide, and ethylenebiserucic acid amide. As the anti-blocking agents, various filler-based anti-blocking agents such as silica are preferable.

These additives may be used alone or in combination of two or more kinds thereof.

### (Base Material Layer 411)

The base material layer 411 serves to impart heat resistance in the sealing step during the preparation of a power storage device to inhibit the generation of pinholes that may occur during molding processing or distribution. In particular, in the case of packaging materials for lithium ion batteries in large scale uses, abrasion resistance, chemical resistance, insulating properties, or the like can also be imparted.

The base material layer 411 is preferably a resin film formed from a resin having insulating properties. Examples of the resin film include stretched or unstretched films such as a polyester film, a polyamide film, and a polypropylene film. The base material layer 411 may be a monolayer film of these resin films or a laminated film formed by using two or more kinds of these resin films.

As the base material layer 411, among the materials as described above, the polyamide film is preferable from the viewpoint that the moldability is excellent. Examples of the polyamide resin that forms the polyamide film include nylon 6, nylon 11, nylon 12, nylon 66, nylon 610, and nylon 612.

In addition, it is preferable to subject the base material layer 411 to a corona treatment by increasing the adhesion to the base material protective layer 417 to improve the electrolytic solution resistance.

The thickness of the base material layer 411 is preferably 6 to 40 µm, and more preferably 10 to 30 µm. In the case where the thickness of the base material layer 411 is a lower limit (6 µm) or more, the pinhole resistance and the insulating properties are improved. In the case where the thickness of the base material layer 411 is an upper limit (40 µm) or less, the moldability is improved.

### (First Adhesive Layer 412)

The first adhesive layer 412 is formed between the base material layer 411 and the metal foil layer 413. The first adhesive layer 412 has adhesive force required to adhere the base material layer 411 firmly to the metal foil layer 413, and further, the conformability to protect the metal foil layer 413 from being broken by the base material layer 411 during the cold molding and the like are also required.

Examples of the first adhesive layer 412 include two-liquid curable polyurethane-based adhesives, in which a polyol such as a polyester polyol, a polyether polyol, and an acrylic polyol is used as a primary agent and an aromatic or aliphatic isocyanate is used as a curing agent. The molar ratio (NCO/OH) of the isocyanate groups in the curing agent to the hydroxyl groups in the primary agent is preferably 1 to 10, and more preferably 2 to 5.

The thickness of the first adhesive layer 412 is preferably 1 to 10 µm, and more preferably 2 to 6 µm, in order to obtain desired adhesion strength, conformability, processibility, or the like.

### (Metal Foil Layer 413)

As the metal foil layer 413, various metal foils such as an aluminum foil and a stainless steel foil can be used, and from the viewpoints of a moisture-proof property, processibility such as ductility, and cost, an aluminum foil is preferable.

As the aluminum foil, for example, known soft aluminum foils may be used, and in order to obtain desired pinhole resistance, and ductility during the molding, an iron-containing aluminum foil is preferable. The amount of iron in the aluminum foil (100% by mass) is preferably 0.1% by mass to 9.0% by mass, and more preferably 0.5% by mass to 2.0% by mass. In the case where the amount of iron is a lower limit (0.1% by mass) or more, the pinhole resistance and the ductility are improved. If the amount of iron is an upper limit (9.0% by mass) or less, the flexibility is improved.

In addition, as the aluminum foil, a soft aluminum foil which has been subjected to an annealing treatment is more preferable in order to impart desired ductility in molding.

The thickness of the metal foil layer 413 is preferably 9 to 200 µm, and more preferably 15 to 150 µm, in order to obtain desired barrier properties, pinhole resistance, and processibility.

In particular, a preferred metal foil layer 413 is a soft aluminum foil having a thickness of 15 to 150 µm, which has been subjected to an annealing treatment. Specifically, Materials 8021 and 8079 in JIS standard are preferable.

The aluminum foil used in the metal foil layer 413 is preferably one which has been subjected to a degreasing treatment, in order to obtain desired electrolytic solution resistance. Further, an aluminum foil in which the surface has not been etched is preferable in order to simplify the preparation step.

The degreasing treatments are largely classified into a wet type degreasing treatment and a dry type degreasing treatment, and the dry type degreasing treatment is preferable in order to simplify the preparation step.

Examples of the dry type degreasing treatment include a method in which a degreasing treatment is carried out by extending the treatment time in a step of subjecting an aluminum foil to an annealing treatment. A sufficient electrolytic solution resistance can be obtained even by the degreasing treatment which is carried out at the same time when the annealing treatment which is carried out to soften the aluminum foil. Further, in addition to the degreasing treatment, a frame treatment, a corona treatment, and the like may be included. In addition, it is possible to adopt a degreasing treatment in which contaminants are oxidatively decomposed and removed by active oxygen which is generated by the irradiation with ultraviolet rays at a specific wavelength.

Examples of the wet type degreasing treatment include acid degreasing and alkali degreasing.

Examples of the acid used for the acid degreasing include inorganic acids such as sulfuric acid, nitric acid, hydrochloric acid, and hydrofluoric acid. These acids may be used alone or in combination of two or more kinds thereof. Examples of the alkali used for the alkali degreasing include sodium hydroxide having a high etching effect. Further, materials into which a weakly alkaline system or a surfactant is blended may be included.

The wet type degreasing treatment is carried out by a dipping method or a spraying method.

### (Corrosion Prevention Treatment Layer 414)

The corrosion prevention treatment layer 414 serves to adhere the metal foil layer 413 firmly to the second adhesive layer 415, and to protect the metal foil layer 413 from an electrolytic solution or hydrofluoric acid generated from the electrolytic solution.

The corrosion prevention treatment layer 414 is formed, for example, by a hydrothermal modification treatment, an anodic oxidation treatment, a chemical conversion treatment, or a combination of these treatments.

Examples of the hydrothermal modification treatment include a boehmite treatment in which an aluminum foil is dip-treated in boiling water to which triethanolamine has been added. Examples of the anodic oxidation treatment include an alumite treatment. Examples of the chemical conversion treatment include a chromate treatment, a zirconium treatment, a titanium treatment, a vanadium treatment, a molybdenum treatment, a calcium phosphate treatment, a strontium hydroxide treatment, a cerium treatment, a ruthenium treatment, or various chemical conversion treatments formed with a mixed layer thereof. Further, these chemical conversion treatments are not limited to the wet type of treatments, and a coating type treatment in which these treatment agents are mixed with a resin component and can also be applied.

As described above, among these corrosion prevention treatments, a coating type chromate treatment is preferable from the viewpoint of achieving maximization of the curing and treatment of the waste liquid.

Moreover, the corrosion prevention treatment layer 414 may also be formed only by a pure coating technique, in addition to the above-described chemical conversion treatments. Examples of such a method include a method using a sol of oxides of rare earth elements such as cerium oxide, having an average particle diameter of 100 nm or less, as a material which has a corrosion prevention effect (inhibitor effect) on aluminum and is suitable in an environmental aspect. By using the method, it is possible to impart a metal foil corrosion prevention effect on an aluminum foil or the like even by a general coating method.

### (Second Adhesive Layer 415)

The second adhesive layer 415 is a layer that adheres the corrosion prevention treatment layer 414 to the sealant layer 416. The packaging material 401 is largely classified into one having a heat laminate configuration and one having a dry laminate configuration according to the kind of the second adhesive layer 415.

In the case of the dry laminate configuration, it is possible to use the same adhesive as the adhesives exemplified in the first adhesive layer 412 as a component that forms the second adhesive layer 415. In this case, in order to inhibit the swelling due to the electrolytic solution or hydrolysis by hydrofluoric acid, the adhesive used needs to be subjected to composition design, for example, of using a primary agent having a skeleton which is difficult to hydrolyze, or of enhancing the crosslinking density.

Examples of the technique for enhancing the crosslinking density include a method using a dimeric fatty acid, an ester or a hydrogenated product of a dimeric fatty acid, a reduced glycol of a dimeric fatty acid, or a reduced glycol of an ester or a hydrogenated product of a dimeric fatty acid. The dimeric fatty acid is an acid formed by dimerizing various unsaturated fatty acids, and examples of the structure thereof include non-cyclic, monocyclic, polycyclic, and aromatic cyclic structures. The polybasic acid, which is a raw material of the polyester polyol used as an adhesive that forms the second adhesive layer 415, is not particularly limited. Further, the fatty acid, which is a starting material of the dimeric fatty acid, is not particularly limited. In addition, a dibasic acid used in common polyester polyols may be incorporated, using such a dimeric fatty acid as an essential component.

It is possible to use an isocyanate compound, which can also be used as a chain elongation agent for the polyester polyol, as a curing agent for the primary agent. In this case, the crosslinking density of the adhesive coating film is enhanced and correspondingly, the dissolution or swelling properties are improved and the concentration of urethane groups is increased. Therefore, it is expected to improve the adhesion to a base material.

In the case of the heat laminate configuration, as a component that forms the second adhesive layer 415, an acid-modified polyolefin-based resin formed by the graft-modification of a polyolefin-based resin with an acid is preferable. Examples of the polyolefin-based resin include low-density polyethylene, medium-density polyethylene, and high-density polyethylene; ethylene-α-olefin copolymers; homo, block, or random polypropylenes; and propylene-α-olefin copolymers. The polyolefin-based resins may be used alone or in combination of two or more kinds thereof. Examples of the graft-modification acid include a carboxylic acid, an epoxy compound, and an acid anhydride, and maleic anhydride is preferable.

As a component that constitutes the second adhesive layer 415, a maleic anhydride-modified polyolefin-based resin, in which a polyolefin-based resin is graft-modified with maleic anhydride, is preferable, and a maleic anhydride-modified polypropylene is particularly preferable, in order to maintain the adhesive force between the sealant layer 416 and the metal foil layer 413 even when the electrolytic solution penetrates thereinto.

In the case where the second adhesive layer 415 is formed by extrusion molding, the adhesive resin is easily aligned in the MD direction (machine direction) with the stress generated during the extrusion molding. In this case, in order to reduce the anisotropy of the second adhesive layer 415, an elastomer may be blended in the second adhesive layer 415.

Examples of the elastomer blended in the second adhesive layer 415 include olefin-based elastomers and styrene-based elastomers. The average particle diameter of the blended elastomer is preferably 200 nm or less in order to improve the compatibility between the elastomer and the adhesive resin and the effect of reducing the anisotropy of the second adhesive layer 415. Further, the average particle diameter is measured by photographing an enlarged cross-section of the elastomer composition by an electron microscope, and measuring the average particle diameter of the cross-linked rubber components dispersed by image analysis.

These elastomers may be used alone or in combination of two or more kinds thereof.

In the case where the elastomer is blended in the second adhesive layer 415, the blending amount of the elastomer in the second adhesive layer 415 (100% by mass) is preferably 1% by mass to 25% by mass, and more preferably 10% by mass to 20% by mass. In the case where the blending amount of the elastomer is a lower limit (1% by mass) or more, the compatibility between the elastomer and the adhesive resin is improved, and the effect of reducing the anisotropy of the second adhesive layer 415 is improved. In the case where the blending amount of the elastomer is an upper limit (25% by mass) or less, it is easy to inhibit the second adhesive layer 415 from being swollen by the electrolytic solution.

The second adhesive layer 415 may be formed by using a dispersion type of an adhesive resin solution, in which the adhesive resin is dispersed in an organic solvent.

The thickness of the second adhesive layer 415 is preferably 1 to 40 µm, and more preferably 5 to 20 µm.

### (Sealant Layer 416)

The sealant layer 416 is the inner layer of the packaging material 401, which is a layer thermally welded during the assembly to a battery. That is, the sealant layer 416 is a layer including a thermally weldable film.

Examples of the component of the film constituting the sealant layer 416 include a polyolefin-based resin, and an acid-modified polyolefin-based resin formed by the graft-modification of a polyolefin-based resin with maleic anhydride or the like. Among these, a polyolefin-based resin is preferable, and polypropylene is particularly preferable, in order to improve the water vapor barrier properties, and thus, easily form a battery form without excessive collapse by heat sealing. Examples of the polypropylene include the polypropylene exemplified in the second adhesive layer 415. The sealant layer 416 may be formed from a film having a mixture of various resins as described above. The sealant layer 416 may be a monolayer film or a multilayer film.

In the case of using a film formed by extrusion molding, since the sealant layer 416 tends to be aligned in the extrusion direction of the film, an elastomer may be blended in the sealant layer 416 in order to reduce the anisotropy by the alignment. By this, it becomes easy to inhibit the sealant layer 416 from being whitened when the packaging material 401 is subjected to cold molding to form a concave portion.

As the elastomer blended in the sealant layer 416, the same materials as the materials exemplified as the elastomer blended in the second adhesive layer 415 can be used, and the preferable materials are also the same.

In the case where the sealant layer 416 is a laminated film, the elastomer may be blended in a certain layer or all the layers out of the layers. For example, in the case where the sealant layer 416 has a trilayer configuration of random polypropylene/block polypropylene/random polypropylene, the elastomer may be blended in only the layer of block polypropylene, only the layers of random polypropylene, or both of the layers of random polypropylene and the layer of block polypropylene.

Moreover, a lubricant may be blended in the sealant layer 416 for the purpose of imparting a sliding property. By this, when the packaging material 401 is subjected to cold molding to form a concave portion, it becomes easy to prevent the portion which is a side or angle of the concave portion having a high stretching rate in the packaging material 401 from being stretched more than necessary. As a result, it becomes easy to inhibit the metal foil layer 413 from peeling from the second adhesive layer 415, or breakage or whitening due to cracks in the sealant layer 416 and the second adhesive layer 415.

In the case where the lubricant is blended in the sealant layer 416, the blending amount of the lubricant in the sealant layer 416 (100% by mass) is preferably 0.001% by mass to 0.5% by mass. In the case where the blending amount of the lubricant is 0.001% by mass or more, it is easy to obtain an effect of inhibiting the sealant layer 416 from being whitened during the cold molding. In the case where the blending amount of the lubricant is 0.5% by mass or less, the lubricant bleeds on the laminate surface with the layers other than the surface of the packaging material 401, and it is thus easy to inhibit reduction of the adhesion strength.

### (Preparation Method)

Hereinafter, the method of preparing the packaging material 401 will be described. However, the method of preparing the packaging material 401 is not limited to the methods described below.

Examples of the method of preparing the packaging material 401 include a method including the following steps (I) to (IV).
(I) A step of forming the corrosion prevention treatment layer 414 on the metal foil layer 413.
(II) A step of bonding the base material layer 411, through the first adhesive layer 412, onto the surface opposite to the surface on which the corrosion prevention treatment layer 414 on the metal foil layer 413 is formed.
(III) A step of bonding the sealant layer 416, through the second adhesive layer 415, onto the side of the corrosion prevention treatment layer 414 on the metal foil layer 413.
(IV) A step of laminating the base material protective layer 417 on the base material layer 411.

### Step (I):

The corrosion prevention treatment layer 414 is formed, for example, by coating a corrosion prevention treatment agent, followed by drying, curing, and baking, on one surface of the metal foil layer 413. Examples of the corrosion prevention treatment agent include a corrosion prevention treatment agent for a coating type chromate treatment.

The method of coating of the corrosion prevention treatment agent is not particularly limited, and examples thereof include gravure coating, gravure reverse coating, roll coating, reverse roll coating, die coating, bar coating, kiss coating, and comma coating.

In addition, an unreacted metal foil may be used in the metal foil layer 413, and a metal foil which has been subjected to a degreasing treatment by a wet type or dry type degreasing treatment may also be used.

### Step (II):

The base material layer 411 is bonded on the surface opposite to the surface on which the corrosion prevention treatment layer 414 on the metal foil layer 413 is formed, using an adhesive used to form the first adhesive layer 412.

Examples of the method of bonding include techniques of dry lamination, non-solvent lamination, wet lamination, and the like.

In step (II), an aging treatment in the range from room temperature to 100°C may be carried out in order to promote the adhesiveness.

### Step (III):

The sealant layer 416 is bonded, through the second adhesive layer 415, on the side of the corrosion prevention treatment layer 414 of the laminate, in which the base material layer 411, the first adhesive layer 412, the metal foil layer 413, and the corrosion prevention treatment layer 414 are laminated in this order.

In the case of the dry laminate configuration, the sealant layer 416 is bonded on the side of the corrosion prevention treatment layer 414 of the laminate using the above-described adhesive, with a technique of dry lamination, non-solvent lamination, wet lamination, or the like.

In the case of the heat laminate configuration, for example, the following dry process and wet process may be included. In the case of the dry process, the adhesive resin is extrusion-laminated on the corrosion prevention treatment layer 414 of the laminate and a film that forms the sealant layer 416 obtained by an inflation method or a cast method is laminated. Thereafter, a heat treatment (aging treatment, heat lamination, or the like) may be carried out for the purpose of improving the adhesion between the corrosion prevention treatment layer 414 and the second adhesive layer 415. Further, a multilayer film, in which the second adhesive layer 415 and the sealant layer 416 are laminated by an inflation method or a cast method, may be fabricated, and by laminating the multilayer film on the laminate by heat lamination, the sealant layer 416 may be laminated via the second adhesive layer 415.

In the case of the wet process, a dispersion type of an adhesive resin solution of an adhesive resin such as an acid-modified polyolefin-based resin is coated on the corrosion prevention treatment layer 414 of the laminate, the solvent is volatilized at a temperature no lower than the melting point of the adhesive resin, and the adhesive resin is melt-softened, and baked. Thereafter, the sealant layer 416 is laminated by a heat treatment such as heat lamination.

### Step (IV):

The base material protective layer 417 is laminated on the outer surface of the base material layer 411. Examples of the method of laminating the base material protective layer 417 include a method including preparing a dispersion type of a coating liquid of a urethane resin that forms the base material protective layer 417, and a coloring component, coating it by various coating methods such as a dipping method and a spraying method, volatilizing the solvent by heating, and baking. Further, the base material protective layer 417 can also be formed, for example, by extrusion molding for melting and extruding a resin composition including the urethane resin and a coloring component. In addition, it is possible to detect defects such as coating omission and fish eyes by identifying the difference in colors by an optical technique such as an image treatment with imaging during the formation of the base material protective layer 417, but it is preferable to detect the defects visually in a simple manner.

Further, the outer surface of the base material protective layer 417 may be subjected to processing such as a matting treatment.

By the steps (I) to (IV) as described above, the packaging material 401 is obtained.

Furthermore, the method of preparing the packaging material 401 is not limited to the methods in which the steps (I) to (IV) are sequentially carried out. For example, step (I) may be carried out after carrying out step (II). Further, step (II) may be carried out after carrying out step (IV). Further, formation of the corrosion prevention treatment layer 414 and extrusion lamination of the sealant layer 416 may be carried out continuously in-line. In addition, a corrosion prevention treatment layer may be provided on both sides of the metal foil layer.

The packaging material in the fifth embodiment of the present invention as described above has a base material protective layer laminated on the outer surface of the base material layer, and thus has excellent electrolytic solution resistance. Therefore, even when an electrolytic solution is adhered onto the surface of the base material layer in the packaging material, deterioration of the base material layer and of the side of the base material layer on the metal foil layer can be inhibited. The base material protective layer in the packaging material of the present invention is different from a matte varnish layer in the above-described packaging material in the related art, and is formed from a urethane resin formed of a specific polyol and a curing agent. Thus, it is thought to obtain excellent electrolytic solution resistance. The reason why the effect is obtained by the urethane resin having such a specific configuration is not necessarily clear, but is thought to be as follows. It is thought that by using the polyester polyol (a1) or the acrylic polyol (a2), each having hydroxyl groups at least at a site other than the end, instead of polyether polyols having hydroxy groups arranged only at the end of the main chain as a polyol, the number of crosslinking points increases and the electrolytic solution resistance is improved. Particularly, it is thought since the acrylic polyol (a2) has groups having hydroxyl groups arranged randomly as a side chain with respect to the main chain, the number of crosslinking points increases and the electrolytic solution resistance is improved.

Furthermore, for the packaging material in the fifth embodiment of the present invention, since the base material protective layer is colored in a color different from the color of the side of the base material layer in the laminated portion excluding the base material protective layer (since the base material protective layer is colored in a color different from the color of the laminated portion excluding the base material protective layer), defects such as color omission and fish eyes during the formation of the base material protective layer can be detected by identifying the difference in colors, and as a result, it becomes easier to detect the defects (the defect detectability is excellent). Therefore, incorporation of those having defects such as color omission and fish eyes into products during the formation of the base material protective layer hardly occurs, and thus, the quality is improved.

In addition, for the packaging material in the fifth embodiment of the present invention, the base material protective layer is formed on the outer side of the base material layer, but reduction of the processibility is inhibited and thus, deep-drawing molding can be carried out with a sufficient molding depth.

Furthermore, the packaging material in the fifth embodiment of the present invention is not limited to the packaging material 401. For example, a corrosion prevention treatment layer may also be formed on both sides of the metal foil layer. In the case where the corrosion prevention treatment layer is formed on the side of the base material layer on the metal foil layer (the surface where the metal foil layer is in contact with the base material layer), it becomes easier to inhibit the corrosion of the side of the base material layer on the metal foil layer by the electrolytic solution.

Examples of the power storage device formed from the packaging material in Embodiments 1 to 5 include power storage devices used in portable terminal devices such as PCs and cell phones, video cameras, satellites, submarines, electric vehicles, power-assisted bicycles, or the like. As the power storage device, it is preferable to employ lithium ion batteries in these uses.

The power storage device is prepared by sealing the contents of a power storage device, such as positive electrodes, separators, negative electrodes, electrolytic solutions, and a tab including a lid and a tab sealant with a packaging material such that a part of the tab is positioned outside of the power storage device. This power storage device may adopt known forms, except for having the packaging material of the present invention.

### [Examples]

Hereinafter, the first embodiment will be described in detail with reference to Examples.

### <Materials Used>

The materials used in the present Examples are shown below.

### [Base Material Layer 11]

Film A-1: Nylon 6 film having a thickness of 25 µm, and containing 15% by mass of carbon black as a pigment.

Film A-2: Nylon 6 film having a thickness of 25 µm, and containing 50% by mass of carbon black as a pigment.

Film A-3: Nylon 6 film having a thickness of 25 µm, and containing 15% by mass of silica as a filler.

Film A-4: Nylon 6 film having a thickness of 25 µm, and containing 50% by mass of silica as a filler.

Film A-5: Nylon 6 film having a thickness of 25 µm.

### [First Adhesive Layer 12]

Adhesive B-1: An adhesive, in which ACRYDIC (manufactured by DIC Corporation) is used as a polyol and CORONATE (Nippon Polyurethane Industry Co., Ltd.) (NCO/OH=2) is used as an isocyanate.

### [Metal Foil Layer 13]

Metal foil C-1: Soft aluminum foil, Material 8079 (thickness of 40 µm).

### [Corrosion Prevention Treatment Layer 14]

Treatment agent D-1: A treatment agent prepared by adding cerium oxide and 10 parts by mass of sodium polyphosphate with respect to 100 parts by weight of the cerium oxide to a solid concentration of 10% by mass to distilled water (a treatment agent including a cerium oxide sol).

### [Second Adhesive Layer 15]

Adhesive resin E-1: Maleic anhydride-modified polypropylene.

### [Sealant Layer 16]

Film F-1: Unstretched polypropylene film having a thickness of 40 µm.

### [Fabrication of Packaging material for Power Storage Device]

A treatment agent D-1 was coated onto one surface (the first surface) of a metal foil C-1 and dried to form a corrosion prevention treatment layer 14 on one surface (the first surface) of the metal foil layer 13. Then, the films A-1 to A-5 were bonded, using an adhesive β-1, on the surface (second surface) opposite to the corrosion prevention treatment layer 14 on the metal foil layer 13 by a dry lamination method to laminate the base material layer 11 through the first adhesive layer 12. Thereafter, aging was carried out at 60°C for 6 days. Next, the adhesive resin E-1 was extruded onto the side of the corrosion prevention treatment layer 14 of the obtained laminate with an extruder, and the film F-1 was bonded thereto and sandwich-laminated to bond the sealant layer 16 through the second adhesive layer 15. Thereafter, the obtained laminate was heated and compressed under the conditions of 160°C, 4 kg/cm², and 2 m/minute to fabricate a packaging material.

### [Evaluation of Sliding Property of Surface of Base Material Layer]

The dynamic friction coefficient of the surface of the base material layer in the packaging material obtained in each of Examples was measured in accordance with JIS K-7125. The evaluation of the sliding property was carried out based on the following criteria.
"Excellent": The dynamic friction coefficient was less than 0.3.
"Good": The dynamic friction coefficient was 0.3 or more and less than 0.4.
"Poor": The dynamic friction coefficient was 0.4 or more.

### [Evaluation of Moldability]

A specimen in a blank form of 150 mm × 190 mm was cut out of the packaging material obtained in each of Examples, the specimen was subjected to cold molding, and the moldability was evaluated. As a punch, a mold having a shape of 100 mm × 150 mm, a punch corner R of 1.5 mm, a punch shoulder R of 0.75 mm, and a die shoulder R of 0.75 mm was used. The evaluation of the moldability was carried out according to the following criteria.
"Excellent": Deep-drawing with a molding depth of 7 mm or more could be performed while breakage or cracks were not generated in the specimen.
"Good": Deep-drawing with a molding depth of 5 mm or more and less than 7 mm could be performed while breakage or cracks were not generated in the specimen.
"Poor": Deep-drawing with a molding depth of less than 5 mm could be performed while breakage and cracks were generated in the specimen.

### [Evaluation of Heat Dissipation Property]

The thermal conductivity (unit: W/m·K) of the packaging material obtained in each of Examples was measured using a laser flash method, and the evaluation of the heat dissipation property was carried out according to the following criteria.
"Excellent": The thermal conductivity was more than 5 W/m·K.
"Good": The thermal conductivity was from 1 W/m·K to 5 W/m·K.
"Poor": The thermal conductivity was less than 1 W/m·K.

### [Examples 1 to 4 and Comparative Example 1]

By the fabrication method, packaging materials having the configurations shown in Examples 1 to 4 and Comparative Example 1 were fabricated.

In Examples 1 to 4, in which the amount of the pigment and the filler in the base material layer was from 1% by mass to 80% by mass and the amount of the pigment was 50% by mass or less in the base material layer, the sliding property, the moldability, and the heat dissipation property were all excellent.

On the other hand, in Comparative Example 1, in which none of the pigment and the filler was contained in the base material layer, the sliding property, the moldability, and the heat dissipation property were all insufficient.

Hereinafter, the second embodiment will be described in detail with reference to Examples.

### <Materials Used>

The materials used in the present Examples are shown below.

### [Base Material Layer 111]

Film A-101: Nylon 6 film (colorless transparent) having a thickness of 25 µm.

### [First Adhesive Layer 112]

Adhesive B-101: An adhesive, in which ACRYDIC (manufactured by DIC Corporation) as a polyol, CORONATE (Nippon Polyurethane Industry Co., Ltd.) (NCO/OH=2) as an isocyanate, and Bayferrox (manufactured by LANXESS) as an inorganic pigment were mixed in the proportion shown in Table 1.

Adhesive B-102: An adhesive, in which ACRYDIC (manufactured by DIC Corporation) as a polyol, CORONATE (Nippon Polyurethane Industry Co., Ltd.) (NCO/OH=2) as an isocyanate, and ADMAFINE (manufactured by Admatechs Co., Ltd.) as a filler were mixed in the proportion shown in Table 1.

### [Metal Foil Layer 113]

Metal foil C-101: Soft aluminum foil, Material 8079 (thickness of 40 µm).

### [Corrosion Prevention Treatment Layer 114]

Treatment agent D-101: A treatment agent prepared by adding cerium oxide and 10 parts by mass of sodium polyphosphate with respect to 100 parts by weight of the cerium oxide to a solid concentration of 10% by mass to distilled water (a treatment agent including a cerium oxide sol).

### [Second Adhesive Layer 115]

Adhesive resin E-101: Maleic anhydride-modified polypropylene.

### [Sealant Layer 116]

Film F-101: Unstretched polypropylene film having a thickness of 40 µm.

### [Fabrication of Packaging material for Power Storage Device]

A treatment agent D-101 was coated onto one surface of a metal foil C-101 and dried to form a corrosion prevention treatment layer 114 on one surface of the metal foil layer 113. Then, the film A-101 was bonded, using the adhesives B-101 to B-102, on the surface opposite to the corrosion prevention treatment layer 114 on the metal foil layer 113 by a dry lamination method to laminate the base material layer 111 through the first adhesive layer 112. Thereafter, aging was carried out at 60°C for 6 days. Next, the adhesive resin E-101 was extruded onto the side of the corrosion prevention treatment layer 114 of the obtained laminate with an extruder, and the film F-101 was bonded thereto and sandwich-laminated to bond the sealant layer 116 through the second adhesive layer 115. Thereafter, the obtained laminate was heated and compressed under the conditions of 160°C, 4 kg/cm², and 2 m/minute to fabricate a packaging material.

### [Evaluation of Reliability]

The sample under each of the conditions was drawn by 5 mm using a deep-drawing mold and then left to stand for one week under an environment of a temperature of 85°C and a humidity of 90%. Then, delamination between the layers in the deep-drawn portion was observed. The evaluation was carried out according to the following criteria.
"Excellent": There was no stripping.
"Poor": There was stripping.

### [Examples 5 to 6 and Comparative Examples 2 to 3]

By the fabrication method, a packaging material having the configuration shown in Table 1 was fabricated. The evaluation results for the reliability are shown in Table 1.

**[Table 1]**

| | Base material layer 111 | First adhesive layer 112 | | | Metal foil layer 113 | Corrosion prevention treatment layer 114 | Second adhesive layer 115 | Sealant layer 116 | Reliability |
|---|---|---|---|---|---|---|---|---|---|
| | | Adhesive | Adhesive component [% by mass] | Pigment/filler [% by mass] | | | | | |
| Example 5 | A-101 | B-101 | 85 | 15 | C-101 | D-101 | E-101 | F-101 | Excellent |
| Example 6 | A-101 | B-102 | 85 | 15 | C-101 | D-101 | E-101 | F-101 | Excellent |
| Comparative Example 2 | A-101 | B-101 | 99.5 | 0.5 | C-101 | D-101 | E-101 | F-101 | Poor |
| Comparative Example 3 | A-101 | B-102 | 99.5 | 0.5 | C-101 | D-101 | E-101 | F-101 | Poor |

As seen from Table 1, in Examples 5 and 6, in which the pigment or the filler was contained in the proportion of 1% by mass to 50% by mass in the first adhesive layer, delamination between the layers was not seen even after being left to stand under a high temperature atmosphere and a high humidity, and thus, excellent reliability was obtained.

On the other hand, in Comparative Examples 2 and 3, in which the proportion of the pigment or the filler in the first adhesive layer was low, delamination between the layers could be seen after being left to stand, and thus, the reliability was not sufficient.

Hereinafter, the third embodiment will be described in detail with reference to Examples.

### <Materials Used>

The materials used in the present Examples are shown below.

### [Base Material Layer 211]

Film A-201: A laminated film formed by laminating a biaxially stretched polyethylene terephthalate (PET) film having a thickness of 12 µm and a biaxially stretched nylon (Ny) film having a thickness of 15 µm by a dry lamination method, in which irregularities are formed on the outer surface of the biaxially stretched PET film by sand blasting. The static friction coefficient of the outer surface was measured by a gradient method (JIS P8147) and was found to be 0.3. For the lamination of the film, an adhesiveness composition, in which 5% by mass of carbon black (a filler which becomes a coloring component) was contained in a polyurethane-based adhesive (product name "A525/A50", manufactured by Mitsui Chemicals Polyurethanes, Inc.), was used.

Film A-202: A laminated film formed by laminating a PET film having a thickness of 10 µm and a Ny film having a thickness of 20 µm by co-extrusion, in which irregularities are formed on the outer surface of the biaxially stretched PET film by sand blasting. The static friction coefficient of the outer surface was measured by a gradient method and was found to be 0.3. As an adhesive in the co-extrusion, a resin composition, in which 5% by mass of carbon black (a filler which becomes a coloring component) was contained in polypropylene graft-modified with maleic anhydride, was used.

Film A-203: The same film as the film A-201 except that the amount of carbon black is 50% by mass.

Film A-204: The same film as the film A-202 except that the amount of carbon black is 50% by mass.

### [First Adhesive Layer 212]

Adhesive B-201: An adhesive, in which silica filler is contained in an amount of 5% by mass of in a polyurethane-based adhesive (product name A525/A50, manufactured by Mitsui Chemicals Polyurethanes, Inc., colorless transparent).

Adhesive B-202: The same adhesive as the adhesive B-201 except that the amount of the silica filler is 20% by mass.

Adhesive B-203: The same adhesive as the adhesive B-201 except that the amount of the silica filler is 0.1% by mass.

Adhesive B-204: The same adhesive as the adhesive B-201 except that the amount of the silica filler is 50% by mass.

### [Metal Foil Layer 213]

Metal foil C-201: Soft aluminum foil, Material 8079 (manufactured by Toyo Aluminum K. K., thickness of 40 µm).

### [Corrosion Prevention Treatment Layer 214]

Treatment agent D-201: A treatment agent prepared by adding cerium oxide and 10 parts by mass of sodium polyphosphate with respect to 100 parts by weight of the cerium oxide to a solid concentration of 10% by mass to distilled water (a treatment agent including a cerium oxide sol).

### [Second Adhesive Layer 215]

Adhesive resin E-201: Polypropylene graft-modified with maleic anhydride

### [Sealant Layer 216]

Film F-201: Unstretched polypropylene film having a thickness of 40 µm.

### [Fabrication of Packaging material for Power Storage Device]

A coating agent D-201 was coated onto one surface of a metal foil C-201 and dried to form a corrosion prevention treatment layer 214 on one surface of the metal foil layer 213. Then, the films A-201 to A-204 were bonded, using the adhesives B-201 to B-204, on the surface opposite to the corrosion prevention treatment layer 214 on the metal foil layer 213 by a dry lamination method on the outer surface of the biaxially stretched PET film to laminate the base material layer 211 through the first adhesive layer 212. Thereafter, aging was carried out at 60°C for 6 days. Next, the adhesive resin E-201 was extruded onto the side of the corrosion prevention treatment layer 214 of the obtained laminate with an extruder, and the film F-201 was bonded thereto and sandwich-laminated to bond the sealant layer 216 through the second adhesive layer 215. Thereafter, the obtained laminate was heated and compressed under the conditions of 160°C, 4 kg/cm², and 2 m/minute.

### [Evaluation of Electrolytic Solution Resistance]

A few drops of an electrolytic solution (an electrolytic solution in which LiPF₆ (lithium hexafluorophosphate) was dissolved to a concentration adjusted to 1.5 M with respect to ethylene carbonate/dimethyl carbonate/diethyl carbonate = 1/1/1 (mass ratio)) were added dropwise to the surface of the base material protective layer of the packaging material obtained in each of Examples, and left to stand for 24 hours under an environment of 25°C and 65%RH. Then, the electrolytic solution was wiped away and the deterioration of the surface of the base material protective layer was visually checked. The evaluation was carried out according to the following criteria.
"Excellent": Deterioration of the surface of the base material protective layer was not seen.
"Poor": The surface of the base material protective layer was deteriorated.

### [Evaluation of Abrasion Resistance]

The outer surface (on the side of the base material layer) of the packaging material was rubbed reciprocally ten times under a load of 150 g/cm² with #0000 steel wool (manufactured by Nihon Steel Wool Co., Ltd.), and the degree of damage was evaluated according to the following criteria.
"Excellent": Abrasion was not generated.
"Good": Slight abrasion was generated.
"Poor": A lot of damage was generated.

### [Evaluation of Identifiability]

The packaging material obtained in each of Examples was visually identified from the side of the base material layer and the presence or absence of coloration was evaluated.
"Excellent": Coloration could be identified.
"Poor": Coloration could not be identified.

### [Evaluation of Reliability]

In each of Examples, a test involving leaving to stand at a high temperature (100°C, 30 days), and a test under a constant temperature and a constant humidity (60°C, 95%RH, 30 days) were carried out, and then the state of the packaging material was checked and evaluated according to the following criteria.
"Excellent": Stripping was not found on the side of the base material layer in the packaging material in any of the tests.
"Good": Stripping was not found on the side of the base material layer in the packaging material in any of the tests, and the adhesion strength was slightly reduced, but there was no problem in practical use.
"Poor": Stripping was found on the side of the base material layer of the packaging material in at least one of the tests.

### [Examples 7 to 14 and Comparative Examples 4 to 7]

By the fabrication method, a packaging material having the configuration shown in Table 2 was fabricated. The evaluation results for the electrolytic solution resistance, the abrasion resistance, the identifiability, and the reliability are shown in Table 2.

**[Table 2]**

| | Base material layer 211 | First adhesive layer 212 | Metal foil layer 213 | Corrosion prevention treatment layer 214 | Second adhesive layer 215 | Sealant layer 216 | Electrolytic solution resistance | Abrasion resistance | Identifiability | Reliability |
|---|---|---|---|---|---|---|---|---|---|---|
| Example 7 | A-201 | B-201 | C-201 | D-201 | E-201 | F-201 | Excellent | Excellent | Excellent | Excellent |
| Example 8 | A-201 | B-202 | C-201 | D-201 | E-201 | F-201 | Excellent | Excellent | Excellent | Excellent |
| Example 9 | A-202 | B-201 | C-201 | D-201 | E-201 | F-201 | Excellent | Excellent | Excellent | Excellent |
| Example 10 | A-202 | B-202 | C-201 | D-201 | E-201 | F-201 | Excellent | Excellent | Excellent | Excellent |
| Example 11 | A-201 | B-203 | C-201 | D-201 | E-201 | F-201 | Excellent | Excellent | Excellent | Good |
| Example 12 | A-201 | B-204 | C-201 | D-201 | E-201 | F-201 | Excellent | Excellent | Excellent | Good |
| Example 13 | A-202 | B-203 | C-201 | D-201 | E-201 | F-201 | Excellent | Excellent | Excellent | Good |
| Example 14 | A-202 | B-204 | C-201 | D-201 | E-201 | F-201 | Excellent | Excellent | Excellent | Good |
| Comparative Example 4 | A-203 | B-201 | C-201 | D-201 | E-201 | F-201 | Excellent | Excellent | Excellent | Poor |
| Comparative Example 5 | A-203 | B-202 | C-201 | D-201 | E-201 | F-201 | Excellent | Excellent | Excellent | Poor |
| Comparative Example 6 | A-204 | B-201 | C-201 | D-201 | E-201 | F-201 | Excellent | Excellent | Excellent | Poor |
| Comparative Example 7 | A-204 | B-202 | C-201 | D-201 | E-201 | F-201 | Excellent | Excellent | Excellent | Poor |

As seen from Table 2, the packaging materials in Examples 7 to 14, in which a polyester film, a third adhesive layer, and a polyamide film were laminated from the outer side, and 1% by mass to 40% by mass of a filler was contained in the third adhesive layer, thereby forming a colored base material layer, had excellent electrolytic solution resistance, scratch resistance, and reliability, as well as excellent identifiability. Particularly, the packaging materials in Examples 7 to 10, in which 1% by mass to 40% by mass of the filler was contained in the first adhesive layer, had superior reliability to the packaging materials in Examples 11 to 14.

On the other hand, for the packaging materials in Comparative Examples 4 to 7, in which more than 40% by mass of the filler was contained in the third adhesive layer, thereby forming a colored base material layer, stripping could be seen in the test involving leaving to stand at a high temperature, and the test under a constant temperature and a constant humidity, and thus, the reliability was deteriorated.

Hereinafter, the fourth embodiment (embodiment of the present invention) will be described in detail with reference to Examples, but the present invention is not limited to the following description.

### <Materials Used>

The materials used in the present Examples are shown below.

### [Base Material Layer 311]

Film A-301: Nylon 6 film (colorless transparent) having a thickness of 25 µm.

### [First Adhesive Layer 312]

Adhesive B-301: An adhesive, in which ACRYDIC (manufactured by DIC Corporation) as a polyol, CORONATE (Nippon Polyurethane Industry Co., Ltd.) (NCO/OH=2) as an isocyanate, and Bayferrox (manufactured by LANXESS) as an inorganic pigment were mixed in the proportion shown in Table 3.

Adhesive B-302: An adhesive, in which ACRYDIC (manufactured by DIC Corporation) as a polyol, CORONATE (Nippon Polyurethane Industry Co., Ltd.) (NCO/OH=2) as an isocyanate, and ADMAFINE (manufactured by Admatechs Co., Ltd.) as a filler were mixed in the proportion shown in Table 3.

### [Metal Foil Layer 313]

Metal foil C-301: Soft aluminum foil, Material 8079 (thickness of 40 µm).

### [Corrosion Prevention Treatment Layer 314]

Treatment agent D-301: A treatment agent prepared by adding cerium oxide and 10 parts by mass of sodium polyphosphate with respect to 100 parts by weight of the cerium oxide to a solid concentration of 10% by mass to distilled water (a treatment agent including a cerium oxide sol).

### [Second Adhesive Layer 315]

Adhesive resin E-301: Maleic anhydride-modified polypropylene.

### [Sealant Layer 316]

Film F-301: Unstretched polypropylene film having a thickness of 40 µm.

### [Base Material Protective Layer 317]

Coating liquid G-301: Coating liquid, in which ACRYDIC manufactured by DIC Corporation (acrylic polyol (a2)) and 1,6-hexamethylene diisocyanate as an aliphatic isocyanate curing agent are dissolved in toluene to a molar ratio (NCO/OH) of 2.

The ratio of the polyol to the curing agent in the coating liquid was adjusted such that the glass transition temperature Tg of the resin formed became a desired temperature. The glass transition temperature Tg of the resin was measured at a peak temperature (heating rate of 5°C/minute) of the loss tangent (tan θ) at 1 Hz by dynamic viscoelasticity measurement (DMS).

### [Fabrication of Packaging material for Power Storage Device]

A treatment agent D-301 was coated onto one surface of a metal foil C-301 and dried to form a corrosion prevention treatment layer 314 on one surface of the metal foil layer 313. Then, the film A-301 was bonded, using the adhesives B-301 to B-302, on the surface opposite to the corrosion prevention treatment layer 314 on the metal foil layer 313 by a dry lamination method to laminate the base material layer 311 through the first adhesive layer 312. Thereafter, aging was carried out at 60°C for 6 days. Next, the adhesive resin E-301 was extruded onto the side of the corrosion prevention treatment layer 314 of the obtained laminate with an extruder, and the film F-301 was bonded thereto and sandwich-laminated to bond the sealant layer 316 through the second adhesive layer 315. Thereafter, the obtained laminate was heated and compressed under the conditions of 160°C, 4 kg/cm², and 2 m/minute. Then, the coating liquid G-301 was coated on the outer surface of the base material layer 311 by a gravure coating method and then aged at 40°C for 3 days to form a base material protective layer 317, thereby fabricating a packaging material.

### [Evaluation of Electrolytic Solution Resistance]

A few drops of an electrolytic solution (an electrolytic solution in which LiPF₆ (lithium hexafluorophosphate) was dissolved to a concentration adjusted to 1.5 M with respect to ethylene carbonate/dimethyl carbonate/diethyl carbonate = 1/1/1 (mass ratio)) were added dropwise to the surface of the base material protective layer of the packaging material obtained in each of Examples, and left to stand for 24 hours under an environment of 25°C and 65%RH. Then, the electrolytic solution was wiped away and the deterioration of the surface of the base material protective layer was visually checked. The evaluation was carried out according to the following criteria.
"Excellent": Deterioration of the surface of the base material protective layer was not seen.
"Poor": The surface of the base material protective layer was deteriorated.

### [Evaluation of Scratch Resistance]

The surface of the base material protective layer of the packaging material obtained in each of Examples was rubbed reciprocally ten times under a load of 150 g/cm² with #0000 steel wool (manufactured by Nihon Steel Wool Co., Ltd.), and the scratch resistance was evaluated according to the following criteria.
"Excellent": The depth of the damage on the surface of the base material protective layer was less than 1 µm.
"Poor": The depth of the damage on the surface of the base material protective layer was 1 µm or more.

### [Evaluation of Reliability]

The sample under each of the conditions was drawn by 5 mm using a deep-drawing mold and then left to stand for one week under an environment of a temperature of 85°C and a humidity of 90%. Then, delamination between the layers in the deep-drawn portion was observed. The evaluation was carried out according to the following criteria.
"Excellent": There was no stripping.
"Poor": There was stripping.

### [Examples 15 to 16 and Comparative Examples 8 to 9]

By the fabrication method, a packaging material having the configuration shown in Table 3 was fabricated. The evaluation results for the electrolytic solution resistance, the scratch resistance, and the reliability are shown in Table 3.

**[Table 3]**

| | Base material protective layer 317 | | | Base material layer 311 | First adhesive layer 312 | | | Metal foil layer 313 | Corrosion prevention treatment layer 314 | Second adhesive layer 316 | Sealant layer 316 | Electrolytic solution resistance | Abrasion resistance | Reliability |
|---|---|---|---|---|---|---|---|---|---|---|---|---|---|---|
| | Coating liquid | NCO/OH | Tg [°C] | | Adhesive | Adhesive component [% by mass] | Pigment filler [% by mass] | | | | | | | |
| Example 15 | G-301 | 2 | 20 | A-301 | B-301 | 85 | 15 | C-301 | D-301 | E-301 | F-301 | Excellent | Good | Good |
| Example 16 | G-301 | 2 | 20 | A-301 | B-302 | 85 | 15 | C-301 | D-301 | E-301 | F-301 | Excellent | Good | Good |
| Comparative Example 8 | G-301 | 2 | 20 | A-301 | B-301 | 99.5 | 0.5 | C-301 | D-301 | E-301 | F-301 | Excellent | Good | Poor |
| Comparative Example 9 | G-301 | 2 | 20 | A-301 | B-302 | 99.5 | 0.5 | C-301 | D-301 | E-301 | F-301 | Excellent | Good | Poor |

As seen from Table 3, in Examples 15 and 16, in which the base material protective layer 317 was formed and the pigment or the filler was contained in the proportion of 1% by mass to 50% by mass in the first adhesive layer 312, excellent electrolytic solution resistance and scratch resistance were obtained, and delamination between the layers was not seen after being left to stand at a high temperature and a high humidity, and thus, the reliability was excellent.

On the other hand, in Comparative Examples 8 and 9, in which the proportion of the pigment or the filler contained in the first adhesive layer 312 was low, delamination between the layers after being left to stand at a high temperature and a high humidity could be seen, and thus, the reliability was not sufficient.

Hereinafter, the fifth embodiment (embodiment of the present invention) will be described in detail with reference to Examples, but the present invention is not limited to the following description.

### <Materials Used>

The materials used in the present Examples are shown below.

### [Base Material Layer 411]

Film A-401: Nylon 6 film (colorless transparent) having a thickness of 25 µm.

### [First Adhesive Layer 412]

Adhesive B-401: polyurethane-based adhesive (colorless transparent).

### [Metal Foil Layer 413]

Metal foil C-401: Soft aluminum foil, Material 8079 (thickness of 40 µm).

### [Corrosion Prevention Treatment Layer 414]

Treatment agent D-401: "Sodium polyphosphate-stabilized cerium oxide sol" adjusted to a solid concentration of 10% by mass, using distilled water as the solvent. The amount of phosphate was set to 10 parts by weight with respect to 100 parts by weight of the cerium oxide.

### [Second Adhesive Layer 415]

Adhesive resin E-401: Maleic anhydride-modified polypropylene.

### [Sealant Layer 416]

Film F-401: Unstretched polypropylene film having a thickness of 40 µm.

### [Base Material Protective Layer 417]

Resin component G-401: Acrylic polyol (acrylic polyol (a2)) and 1,6-hexamethylene diisocyanate as an aliphatic isocyanate curing agent.

Resin component G-402: Acrylic polyol (acrylic polyol (a2)) and tolylene diisocyanate as an aromatic isocyanate curing agent.

Resin component G-403: Polyether polyol and 1,6-hexamethylene diisocyanate as an aliphatic isocyanate curing agent.

Coloring component H-401: Carbon black.

### [Fabrication of Packaging material for Power Storage Device]

A treatment agent D-401 was coated onto one surface of a metal foil C-401 and dried to form a corrosion prevention treatment layer 414 on one surface of the metal foil layer 413. Then, the film A-401 was bonded, using the adhesives B-401, on the surface opposite to the corrosion prevention treatment layer 414 on the metal foil layer 413 by a dry lamination method to laminate the base material layer 411 through the first adhesive layer 412. Thereafter, aging was carried out at 60°C for 6 days. Next, the adhesive resin E-401 was extruded onto the side of the corrosion prevention treatment layer 414 of the obtained laminate with an extruder, and the film F-401 was bonded thereto and sandwich-laminated to bond the sealant layer 416 through the second adhesive layer 415. Thereafter, the obtained laminate was heated and compressed under the conditions of 160°C, 4 kg/cm², and 2 m/minute. Then, the coating liquid, in which the resin components G-401 to G-403 and the coloring component H-401 at various concentrations were dissolved in toluene, was coated on the outer surface of the base material layer 411 by a gravure coating method and then aged at 40°C for 3 days to form a base material protective layer 417, thereby fabricating a packaging material.

### [Evaluation of Electrolytic Solution Resistance]

A few drops of an electrolytic solution (an electrolytic solution in which LiPF₆ (lithium hexafluorophosphate) was dissolved to a concentration adjusted to 1.5 M with respect to ethylene carbonate/dimethyl carbonate/diethyl carbonate = 1/1/1 (mass ratio)) were added dropwise to the surface of the base material protective layer of the packaging material obtained in each of Examples, and left to stand for 24 hours under an environment of 25°C and 65%RH. Then, the electrolytic solution was wiped away and the deterioration of the surface of the base material protective layer was visually checked. The evaluation was carried out according to the following criteria.
"Excellent": Discoloration and deterioration of the surface of the base material protective layer were not seen.
"Good": Discoloration of the surface of the base material protective layer was seen, but deterioration was not seen.
"Poor": The surface of the base material protective layer was deteriorated.

### [Evaluation of Easiness of Defect Detection (Defect Detectability)]

In each of Examples, a non-coated portion having a specific diameter was formed in the base material protective layer of the packaging material, and defect detection was visually carried out from the side of the base material protective layer. The evaluation was carried out according to the following criteria.
"Excellent": Defects having a diameter of 200 µm or less could be detected.
"Good": Defects having a diameter of 200 to 300 µm could be detected.
"Poor": A case with defects having a diameter of more than 300 µm could be detected.

### [Examples 17 to 24 and Comparative Examples 10 to 19]

By the fabrication method, a packaging material having the configuration shown in Table 4 was fabricated. The evaluation results for the electrolytic solution resistance and the easiness of defect detection (defect detectability) are shown in Table 4.

**[Table 4]**

| | Configuration of packaging material | | | | | | | | Electrolytic solution resistance | Defect detectability |
|---|---|---|---|---|---|---|---|---|---|---|
| | Base material protective layer 417 | | Base material layer 411 | First adhesive layer 412 | Metal foil layer 413 | Corrosion prevention treatment layer 414 | Second adhesive layer 415 | Sealant layer 416 | | |
| | Resin component | Coloring component (solid content) [% by mass] | | | | | | | | |
| Example 17 | G-401 | 0.01 | A-401 | B-401 | C-401 | D-401 | E-401 | F-401 | Excellent | Good |
| Example 18 | G-401 | 0.5 | A-401 | B-401 | C-401 | D-401 | E-401 | F-401 | Excellent | Excellent |
| Example 19 | G-401 | 5 | A-401 | B-401 | C-401 | D-401 | E-401 | F-401 | Excellent | Excellent |
| Example 20 | G-401 | 10 | A-401 | B-401 | C-401 | D-401 | E-401 | F-401 | Excellent | Excellent |
| Example 21 | G-401 | 30 | A-401 | B-401 | C-401 | D-401 | E-401 | F-401 | Excellent | Excellent |
| Example 22 | G-401 | 40 | A-401 | B-401 | C-401 | D-401 | E-401 | F-401 | Excellent | Excellent |
| Example 23 | G-401 | 50 | A-401 | B-401 | C-401 | D-401 | E-401 | F-401 | Excellent | Excellent |
| Example 24 | G-401 | 80 | A-401 | B-401 | C-401 | D-401 | E-401 | F-401 | Good | Excellent |
| Comparative Example 10 | G-401 | 0 | A-401 | B-401 | C-401 | D-401 | E-401 | F-401 | Excellent | Poor |
| Comparative Example 11 | G-401 | 90 | A-401 | B-401 | C-401 | D-401 | E-401 | F-401 | Poor | Excellent |
| Comparative Example 12 | G-402 | 0.5 | A-401 | B-401 | C-401 | D-401 | E-401 | F-401 | Poor | Excellent |
| Comparative Example 13 | G-402 | 10 | A-401 | B-401 | C-401 | D-401 | E-401 | F-401 | Poor | Excellent |
| Comparative Example 14 | G-402 | 30 | A-401 | B-401 | C-401 | D-401 | E-401 | F-401 | Poor | Excellent |
| Comparative Example 15 | G-402 | 50 | A-401 | B-401 | C-401 | D-401 | E-401 | F-401 | Poor | Excellent |
| Comparative Example 16 | G-403 | 0.5 | A-401 | B-401 | C-401 | D-401 | E-401 | F-401 | Poor | Excellent |
| Comparative Example 17 | G-403 | 10 | A-401 | B-401 | C-401 | D-401 | E-401 | F-401 | Poor | Excellent |
| Comparative Example 18 | G-403 | 30 | A-401 | B-401 | C-401 | D-401 | E-401 | F-401 | Poor | Excellent |
| Comparative Example 19 | G-403 | 50 | A-401 | B-401 | C-401 | D-401 | E-401 | F-401 | Poor | Excellent |

As seen from Table 4, in Examples 17 to 24, in which a base material protective layer containing a combination of the acrylic polyol (a2) and the aliphatic isocyanate curing agent and the coloring component in the proportion of 0.01% by mass to 80% by mass was formed, both excellent electrolytic solution resistance and defect detectability (easiness of defect detection) were provided.

On the other hand, in Comparative Example 10, in which a coloring component was not added to the base material protective layer, defects having a diameter of 300 µm or less were not visually detected. Further, in Comparative Example 11, in which the content of the coloring component in the base material protective layer was more than 80% by mass, defects having a diameter of 300 µm or less could be detected, but the electrolytic solution resistance was insufficient. In addition, in Comparative Examples 12 to 15, in which an aromatic isocyanate curing agent was used instead of the aliphatic isocyanate curing agent, and Comparative Examples 16 to 19, in which a polyether polyol was used instead of the acrylic polyol (a2), defects having a diameter of 300 µm or less could be detected, but the electrolytic solution resistance was insufficient.

As described above, with a packaging material having a base material protective layer formed by adding 0.01% by mass to 80% by mass of carbon black as a coloring component to a urethane resin including the acrylic polyol (a2) and the aliphatic isocyanate curing agent, excellent electrolytic solution resistance was obtained and defects were easily detected during the preparation (excellent defect detectability was obtained).

### DESCRIPTION OF REFERENCE NUMERAL

1, 101, 201, 301, 401: PACKAGING MATERIAL FOR A POWER STORAGE DEVICE
11, 111, 211, 311, 411: BASE MATERIAL LAYER
12, 112, 212, 312, 412: FIRST ADHESIVE LAYER
13, 113, 213, 313, 413: METAL FOIL LAYER
14, 114, 214, 314, 414: CORROSION PREVENTION TREATMENT LAYER
15, 115, 215, 315, 415: SECOND ADHESIVE LAYER
16, 116, 216, 316, 416: SEALANT LAYER
211a: POLYESTER FILM
211b: POLYAMIDE FILM
211c: THIRD ADHESIVE LAYER
211d: OUTER SURFACE
317, 417: BASE MATERIAL PROTECTIVE LAYER

## Claims

1. A packaging material (301; 401) for a power storage device, comprising:
a base material layer (311; 411) that includes a resin film;
a base material protective layer (317; 417) that becomes an outermost layer;
a sealant layer (316; 416) that becomes an innermost layer;
a metal foil layer (313; 413) that is disposed between the base material layer (311; 411) and the sealant layer (316; 416);
a first adhesive layer (312; 412) that contains a pigment, and
a corrosion prevention treatment layer (314; 414) that is disposed between the metal foil layer (313; 413) and a second adhesive layer (315; 415), wherein
the second adhesive layer (315; 415) is disposed between the corrosion prevention treatment layer (314; 414) and the sealant layer (316; 416),
the base material layer (311; 411) adheres to the metal foil layer (313; 413) via the first adhesive layer (312; 412),
**characterized in that**,
the base material protective layer (317; 417) protects the base material layer (311; 411), has a thickness of 1 to 10 µm, and includes a urethane resin and a filler, and the urethane resin is formed by a polyol and an isocyanate curing agent, and the polyol is a polyester polyol or an acrylic polyol.

2. The packaging material (301; 401) for a power storage device according to Claim 1, wherein
the pigment is carbon black.

3. The packaging material (301; 401) for a power storage device according to any one of Claim 1 or Claim 2, wherein
the filler is made of silica.

4. The packaging material (301; 401) for a power storage device according to any one of Claims 1 to 3, wherein
the base material protective layer (317; 417) includes a lubricant.

5. The packaging material (301; 401) for a power storage device according to Claim 4, wherein
the lubricant includes fatty acid amide.

## Patentansprüche

1. Packmaterial (301; 401) für eine Stromspeichervorrichtung, umfassend:
eine Grundmaterialschicht (311; 411), die einen Harzfilm beinhaltet;
eine Grundmaterialschutzschicht (317; 417), die eine äußerste Schicht wird;
eine Siegelschicht (316; 416), die eine innerste Schicht wird;
eine Metallfolienschicht (313; 413), die zwischen der Grundmaterialschicht (311; 411) und der Siegelschicht (316; 416) angeordnet ist;
eine erste Haftschicht (312; 412), die ein Pigment enthält, und
eine Korrosionsverhinderungsbehandlungsschicht (314; 414), die zwischen der Metallfolienschicht (313; 413) und einer zweiten Haftschicht (315; 415) angeordnet ist, wobei
die zweite Haftschicht (315; 415) zwischen der Korrosionsverhinderungsbehandlungsschicht (314; 414) und der Siegelschicht (316; 416) angeordnet ist,
die Grundmaterialschicht (311; 411) an die Metallfolienschicht (313; 413) über die erste Haftschicht (312; 412) anhaftet,
**dadurch gekennzeichnet, dass**
die Grundmaterialschutzschicht (317; 417) die Grundmaterialschicht (311; 411) schützt, eine Dicke von 1 bis 10 µm aufweist, und ein Urethanharz und einen Füllstoff beinhaltet, und das Urethanharz durch ein Polyol und ein Isocyanathärtungsmittel gebildet ist, und das Polyol ein Polyesterpolyol oder ein Acrylpolyol ist.

2. Packmaterial (301; 401) für eine Stromspeichervorrichtung nach Anspruch 1, wobei
das Pigment Kohleschwarz ist.

3. Packmaterial (301; 401) für eine Stromspeichervorrichtung nach einem aus Anspruch 1 oder Anspruch 2, wobei
der Füllstoff aus Siliziumoxid gemacht ist.

4. Packmaterial (301; 401) für eine Stromspeichervorrichtung nach einem der Ansprüche 1 bis 3, wobei
die Grundmaterialschutzschicht (317; 417) einen Schmierstoff beinhaltet.

5. Packmaterial (301; 401) für eine Stromspeichervorrichtung nach Anspruch 4, wobei
der Schmierstoff Fettsäureamid beinhaltet.

## Revendications

1. Matériau d'emballage (301 ; 401) pour un dispositif de stockage d'énergie, comprenant :
une couche de matériau de base (311 ; 411) qui comprend un film de résine ;
une couche de protection de matériau de base (317 ; 417) qui devient une couche externe ;
une couche de matériau d'étanchéité (316 ; 416) qui devient une couche interne ;
une couche de feuille métallique (313 ; 413) qui est disposée entre la couche de matériau de base (311 ; 411) et la couche de matériau d'étanchéité (316 ; 416) ;
une première couche adhésive (312 ; 412) qui contient un pigment, et
une couche de traitement de prévention contre la corrosion (314 ; 414) qui est disposée entre la couche de feuille métallique (313 ; 413) et une seconde couche adhésive (315 ; 415), dans lequel
la seconde couche adhésive (315 ; 415) est disposée entre la couche de traitement de prévention contre la corrosion (314 ; 414) et la couche de matériau d'étanchéité (316 ; 416),
la couche de matériau de base (311 ; 411) adhère à la couche de feuille métallique (313 ; 413) par l'intermédiaire de la première couche adhésive (312 ; 412), **caractérisé en ce que**,
la couche de protection de matériau de base (317 ; 417) protège la couche de matériau de base (311 ; 411), présente une épaisseur de 1 à 10 µm, et comprend une résine d'uréthane et une charge, et la résine d'uréthane est formée par un polyol et un agent de durcissement à base d'isocyanate, et le polyol est un polyester polyol ou un polyol acrylique.

2. Matériau d'emballage (301 ; 401) pour un dispositif de stockage d'énergie selon la revendication 1, dans lequel
le pigment est un noir de carbone.

3. Matériau d'emballage (301 ; 401) pour un dispositif de stockage d'énergie selon l'une quelconque de la revendication 1 ou de la revendication 2, dans lequel
la charge est faite de silice.

4. Matériau d'emballage (301 ; 401) pour un dispositif de stockage d'énergie selon l'une quelconque des revendications 1 à 3, dans lequel
la couche de protection de matériau de base (317 ; 417) comprend un lubrifiant.

5. Matériau d'emballage (301 ; 401) pour un dispositif de stockage d'énergie selon la revendication 4, dans lequel
le lubrifiant comprend un amide d'acide gras.
